(19) **Europäisches Patentamt European Patent Office Office européen des brevets**

(11) **EP 2 654 284 B1**

(12) **EUROPEAN PATENT SPECIFICATION**

(45) Date of publication and mention
of the grant of the patent:
**30.05.2018 Bulletin 2018/22**

(51) Int Cl.:
*H04N 1/54* (2006.01)   *B41J 2/00* (2006.01)

(21) Application number: **13163744.9**

(22) Date of filing: **15.04.2013**

(54) **Print controlling apparatus, print controlling system, and print controlling method**

Drucksteuerungsvorrichtung, Drucksteuerungssystem und Drucksteuerungsverfahren

Appareil de contrôle d'imprimante, système de contrôle d'impression et procédé de contrôle d'impression

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2012 JP 2012095169**

(43) Date of publication of application:
**23.10.2013 Bulletin 2013/43**

(73) Proprietor: **Ricoh Company, Ltd.**
**Tokyo 143-8555 (JP)**

(72) Inventors:
• **Suzuki, Hiroaki**
**Tokyo 143-8555 (JP)**
• **Kitagawa, Hiroo**
**Tokyo 143-8555 (JP)**

(74) Representative: **Schwabe - Sandmair - Marx**
**Patentanwälte Rechtsanwalt**
**Partnerschaft mbB**
**Joseph-Wild-Straße 20**
**81829 München (DE)**

(56) References cited:
**EP-A2- 2 431 813**     **EP-A2- 2 431 814**
**WO-A1-2012/026394**   **US-A1- 2009 034 998**

**Description**

CROSS-REFERENCE TO RELATED APPLICATIONS

The present application claims priority to Japanese Patent Application No. 2012-095169 filed in Japan on April 18, 2012.

BACKGROUND OF THE INVENTION

1. Field of the Invention

The present invention relates to a print controlling apparatus, a print controlling system, and a print controlling method.

2. Description of the Related Art

Conventionally, there have been some image forming apparatuses containing a clear toner that is a colorless toner containing no color material, in addition to the toners in four colors of CMYK. The toner image formed with such a clear toner is fixed onto a recording medium such as a transfer sheet on which an image is formed using the CMYK toners, to achieve a visual effect or a haptic effect (what is called a surface effect) on the surface of the recording medium. Different surface effects are achieved depending on what kind of toner image is formed using the clear toner and how the image is fixed. There are some surface effects for simply giving gloss, and other surface effects to suppress gloss. Furthermore, desired is a surface effect that can be provided only partly, instead of being provided to the entire surface, and a surface effect to achieve a texture or a watermark using clear toner. Furthermore, there are other cases that a surface protection is desired. Moreover, there are some surface effects that can be achieved by applying a post-process using a special post-processing machine such as a glosser or a low-temperature fixer, instead of controlling fixing. Recently developed is a technology to provide gloss by attaching a clear toner only to a desirable portion of a part of a surface, as disclosed in Japanese Patent No. 3473588.

Furthermore, Japanese Patent Application Laid-open No. 2007-03404, for example, discloses that gloss is affected by the coarseness of the surface of an image formed on a re recording medium. In other words, gloss is affected by the surface unevenness formed by the CMYK toners. Therefore, the gloss does not necessarily increase correspondingly to the clear toner density.

In other words, in order to provide gloss to an image, the smoothness of the image surface needs to be controlled. To achieve this goal, image data of a clear toner plane needs to be created. The image data of a clear toner herein is image data to cause a toner image to be formed using a clear toner based on the density values of the CMYK specified for each pixel to which the clear toner is to be attached, and based on whether any post-processing machine is connected and what kind of post-processing machine is connected to the image forming apparatus. Content of the image data of a clear toner plane, the number of pieces of image data of a clear toner plane to be created, the printer machine control, the post-processing machine control, and the like need to be finely adjusted. Therefore, it has been difficult for a user to create such image data, and to provide print setting for control in consideration of these factors.

Furthermore, in the conventional technology, it has been difficult to achieve different types of gloss on a single page of a recording medium, although it has been possible to provide a single type of a surface effect, e.g., Premium Gloss, across the entire page of a recording medium.

In consideration of the above, there is a need to provide a print controlling apparatus, a print controlling system, and a print controlling method capable of providing a desired surface effect to a recording medium on which an image is to be formed using clear toner, while allowing a plurality of types of surface effects to be achieved on one page of a recording medium, without forcing a user to make any cumbersome operations.

EP 2431814 A2 and EP 2431813 A2 disclose an information processing apparatus and a print control apparatus, respectively, in which both coloured toners and a clear toner are used. The total amount of the toners to be applied to a specific target region of a recording medium is computed as the sum of the amount of each one of the toners to be applied. Furthermore, the smoothness of the created image may be controlled and different types of surface effects combine on a single page of the recording medium.

US 2009/0034998 A1 discloses an image forming system which is configured to differ between different gloss modes. A partial coverage transparent toner mode is used to form a transparent image such as a water mark.

SUMMARY OF THE INVENTION

It is an object of the present invention to at least partially solve the problems in the conventional technology.

A print controlling apparatus, in which image data is generated, includes: a generating unit that generates the image data based on gloss control plane data to identify a type of a surface effect to be provided to a recoding medium and an area to be provided with the surface effect in the recording medium; and an outputting unit that outputs the image data.

A print controlling system, in which image data is generated, includes: a generating unit that generates the image data based on gloss control plane data to identify a type of a surface effect to be provided to a recoding medium and an area to be provided with the surface effect in the recording medium; and an outputting unit that outputs the image data.

A print controlling method includes: generating image data based on gloss control plane data to identify a type of a surface effect to be provided to a recoding medium and an area to be provided with the surface effect in the recording medium; and outputting the image data.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a schematic illustrating a configuration of an image forming system according to a first embodiment of the present invention;
Fig. 2 is a schematic for explaining an example of image data of a color plane;
Fig. 3 is a schematic illustrating types of surface effects related to the presence of gloss;
Fig. 4 is a conceptual schematic for explaining an example of image data of a gloss control plane;
Fig. 5 is a schematic for explaining an example of image data of a clear plane;
Fig. 6 is a block diagram illustrating a general configuration of a host apparatus;
Fig. 7 is a schematic of an example of a screen displayed by an image processing application;
Fig. 8 is a schematic of an example of a screen displayed by the image processing application;
Fig. 9 is a schematic of an example of a density value selection table;
Fig. 10 is a general schematic conceptually illustrating a print data structure;
Fig. 11 is a flowchart illustrating a print data generating process performed by the host apparatus according to the first embodiment;
Fig. 12 is a flowchart illustrating a process of generating a gloss control plane;
Fig. 13 is a schematic of a corresponding relationship between a drawn object, coordinates, and a density value in the image data of a gloss control plane illustrated in Fig. 4;
Fig. 14 is a schematic illustrating of a functional configuration of a DFE;
Fig. 15 is a schematic illustrating a data structure of the surface effect selection table;
Fig. 16 is a schematic conceptually illustrating an MIC;
Fig. 17 is a flowchart illustrating a gloss controlling process performed in the image forming system;
Fig. 18 is a flowchart illustrating a process of converting the image data of a gloss control plane;
Fig. 19 is a schematic for comparing a surface effect type designated, the image data of a clear toner plane to be used by a printer, the image data of a clear toner plane to be used by a low-temperature fixer, and the surface effect actually achieved;
Fig. 20 is a schematic illustrating a configuration of an image forming system according to a second embodiment of the present invention;
Fig. 21 is a schematic illustrating a part of a data structure of a surface effect selection table corresponding to the configuration of the image forming system according to the second embodiment;
Fig. 22 is a schematic for comparing a surface effect type designated, the image data of a clear toner plane to be used by a printer, and the surface effect actually achieved in the second embodiment;
Fig. 23 is a schematic illustrating a configuration of an image forming system according to a third embodiment of the present invention;
Fig. 24 is a schematic illustrating a part of a data structure of a surface effect selection table corresponding to the configuration of the image forming system according to the third embodiment;
Fig. 25 is a schematic for comparing a surface effect type designated, the image data of a clear toner plane to be used by the printer, and the surface effect actually achieved in the third embodiment;
Fig. 26 is a schematic illustrating a configuration of an image forming system according to a fourth embodiment of the present invention;
Fig. 27 is a schematic illustrating a part of a data structure of a surface effect selection table corresponding to the configuration of the image forming system according to the fourth embodiment;

Fig. 28 is a schematic for comparing a surface effect type designated, the image data of a clear toner plane to be used by the printer, and the surface effect actually achieved in the fourth embodiment;

Fig. 29 is a schematic illustrating a configuration of an image forming system according to a fifth embodiment of the present invention;

Fig. 30 is a block diagram illustrating a functional configuration of the host apparatus according to the fifth embodiment;

Fig. 31 is a block diagram illustrating a functional configuration of the server apparatus according to the fifth embodiment;

Fig. 32 is a block diagram illustrating a functional configuration of the DFE according to the fifth embodiment;

Fig. 33 is a sequence chart illustrating the entire clear toner plane generating process according to the fifth embodiment.

Fig. 34 is a flowchart illustrating a process performed by the host apparatus according to the fifth embodiment;

Fig. 35 is a flowchart illustrating a process of generating the image data of a gloss control plane and the print data performed by the server apparatus according to the fifth embodiment;

Fig. 36 is a flowchart illustrating the process performed by the DFE according to the fifth embodiment;

Fig. 37 is a flowchart illustrating a process of generating a clear toner plane performed by a server apparatus according to the fifth embodiment;

Fig. 38 is a schematic of a configuration of a network in which two servers are provided in a cloud; and

Fig. 39 is a schematic of a hardware configuration of the host apparatus, the DFE, or the server apparatus.

## DETAILED DESCRIPTION OF THE PREFERRED EMBODIMENTS

Some embodiments of a print controlling apparatus, an image forming system, and a print controlling method according to the present invention will now be explained in detail with reference to the appended drawings.

First Embodiment

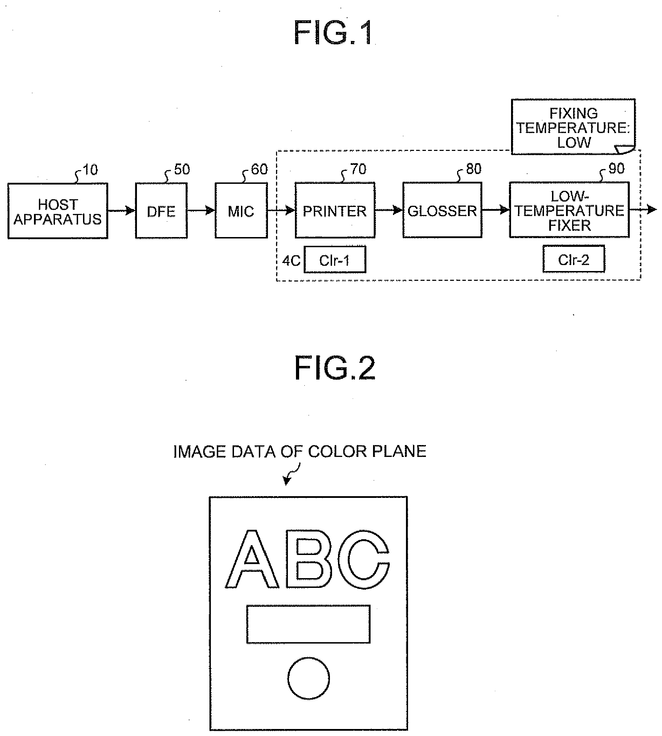

To begin with, a configuration of an image forming system according to a first embodiment of the present invention will be explained with reference to Fig. 1. In the first embodiment, this image forming system is configured as a connection of a printer controller (digital front end (DFE)) 50 (hereinafter, referred to as the "DFE 50"), an interface controller (mechanism interface (I/F) controller (MIC)) 60 (hereinafter, referred to as the "MIC 60"), a printer 70, and a glosser 80 and a low-temperature fixer 90 both of which are post-processing apparatuses. The DFE 50 communicates with the printer 70 via the MIC 60, and controls image formation performed by the printer 70. A host apparatus 10 such as a personal computer (PC) is connected to the DFE 50. The DFE 50 receives image data from the host apparatus 10, and uses the image data to generate another piece of image data to cause the printer 70 to form toner images with the toner in each of the CMYK colors and the clear toner. The DFE 50 then transmits the image data to the printer 70 via the MIC 60. At least toner in each of the CMYK colors and clear toner are mounted on the printer 70. An image forming unit including a photosensitive element, a charging unit, a developing unit, and a photosensitive element cleaner, and an exposing unit, and fixing unit corresponding to each of these toners are also mounted on the printer 70.

Clear toner herein means transparent (colorless) toner not containing any color material. Being transparent (colorless) means having a transmissivity equal to or higher than 70 percent, for example.

The printer 70 irradiates the photosensitive element with a light beam from the exposing unit based on the image data received from the DFE 50 via the MIC 60, so that a toner image is formed on the photosensitive element using corresponding toner. The toner image is then transferred onto a paper sheet that is a recording medium. The fixing unit then fixes the toner image under heat at a temperature within a predetermined range (standard temperature) and pressure. In this manner, an image is formed on the paper sheet. A paper sheet is merely an example of a recording medium, and a recording medium is not limited thereto. For example, synthetic paper, plastic sheet, or the like may also be used as a recording medium.

The glosser 80 is controlled to be turned ON and OFF by ON/OFF information that is designated by the DFE 50. When the glosser 80 is turned ON, the glosser 80 applies high pressure to the image formed by the printer 70 on a paper sheet at high temperature, and then cools the paper sheet with the image formed and removes the paper sheet from the glosser main unit. This process enables the toner attached to a pixel in a predetermined amount or more to be compressed, and to even out the total amount of toner in each of the pixels across the entire image formed on the paper sheet. The low-temperature fixer 90 is provided with an image forming unit including a photosensitive element, a charging unit, a developing unit, and a photosensitive element cleaner for clear toner, an exposing unit, and a fixing unit to fix the clear toner. The low-temperature fixer 90 receives image data of a clear toner plane which is to be described later. In order to use the low-temperature fixer 90, the DFE 50 generates the image data of a clear toner plane. When the DFE 50 generates the image data of a clear toner plane (clear toner plane data) that is to be used by the low-temperature fixer 90, the low-temperature fixer 90 forms a toner image with clear toner using the image data, and places the toner image over a paper sheet pressed by the glosser 80. The toner image is then heated and pressed by the fixing unit at a temperature lower than the standard temperature and under a pressure lower than the standard pressure to cause the toner image to be fixed to the paper sheet.

Image data (document data) received from the host apparatus 10 will now be explained. In the host apparatus 10, a pre-installed image processing application (e.g., an image processing unit 120, a plane data generating unit 122, or a print data generating unit 123 to be explained later) generates the image data, and transmits the image data to the DFE 50. Such an image processing application is capable of handling image data of a special color plane, by contrast to image data in which a value representing a density (hereinafter, referred to as a density value) is specified to each pixel of color planes, such as red, green, and blue (RGB) color planes, or cyan, magenta, yellow, and black (CMYK) color planes. A special color plane herein is data of an image to cause special toner or special ink, e.g., toner or ink in a color such as white, gold, or silver other than the basic colors such as CMYK or RGB, to be attached. Such data is intended for a printer mounted with such special toner or special ink. In order to improve the color reproducibility, a special color plane sometimes adds the R color to the CMYK basic colors, or the Y color to the RGB basic colors. Usually, clear toner is handled as one of the special colors.

In the first embodiment, in order to achieve a surface effect being a visual effect or a haptic effect provided to a paper sheet, or to form a transparent image to realize a watermark, a texture, or the like other than the surface effects on a paper sheet, clear toner, which is considered a special color, is used.

In other words, the image processing application on the host apparatus 10 generates any one of image data of a gloss control plane and image data of a clear plane or both based on a designation of a user, as image data of a special color plane, in addition to image data of color planes, for a piece of received image data.

The image data of a color plane is image data in which each pixel is specified with a density value of a color, e.g., R, G, or B color, or C, M, Y, or K color. In the image data of a color plane, one pixel is represented by eight bits, based on the color specified by a user. Fig. 2 is a schematic for explaining an example of image data of a color plane. In Fig. 2, each drawn object, e.g., "A", "B", or "C", is assigned with a density value corresponding to the color specified by a user on the image processing application.

The image data of a gloss control plane is image data to perform control to cause clear toner to be attached in the manner specified as a surface effect, e.g., a visual effect or a haptic effect, provided to a paper sheet. In the image data of a gloss control plane, the area to which such a surface effect is provided and the type of the surface effect are specified.

Each pixel in the gloss control plane is represented by an eight-bit density value which ranges from "0" to "255", in the same manner as a color plane for an RGB color, a CMYK color, or the like. (Alternatively, the density value may be represented by 16 bits or 32 bits, or 0 percent to 100 percent.) A surface effect type is associated to the density value. Because the same value is set to the pixels included in the area to be provided with the same surface effect, regardless of the density of the clear toner actually attached, the area can be easily identified from the image data, even without any data indicating such an area. In other words, a gloss control plane indicates the area provided with a surface effect, as well as the surface effect type provided to the area. (Alternatively, some data to indicate such an area may be provided separately).

The host apparatus 10 generates the image data of a gloss control plane (gloss control plane data) in a vector format by setting a surface effect type specified by a user on the image processing application to each drawn object, as a density value serving as a gloss control value.

Each of the pixels in the image data of a gloss control plane corresponds to each pixel in the image data of a color plane. In these pieces of image data, the density value set to each pixel serves as a pixel value. The image data of a color plane and the image data of a gloss control plane are both implemented in units of a page.

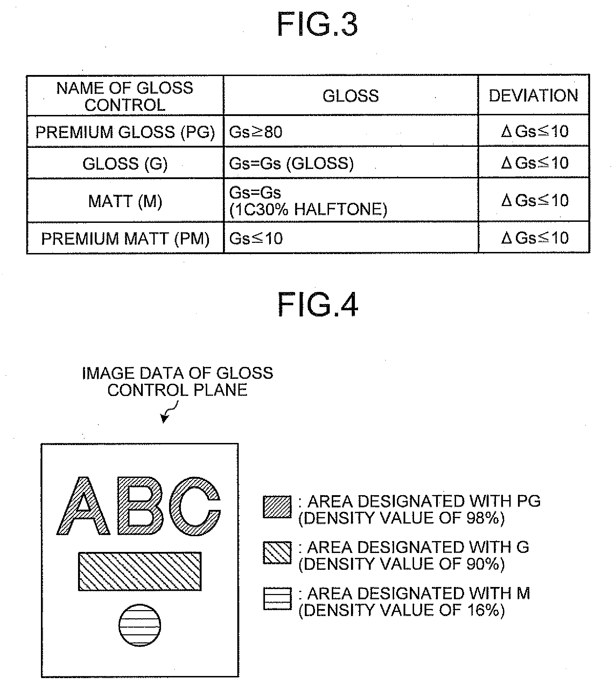

Types of surface effects can generally be classified into those related to gloss, those related to surface protections, watermarks in which information is embedded, and textures. The surface effects related to gloss are generally classified into four types, as illustrated in Fig. 3. Such types include premium gloss (PG), Gloss (G), Matt (M), and Premium Matt (PM), in the descending order of gloss (degree of glossiness). Hereinafter, the Premium Gloss is also referred to as "PG", the Gloss is also referred to as "G", the Matt is also referred to as "M", and the Premium Matt is also referred to as "PM".

The Premium Gloss or the Gloss achieves a highly glossy effect. By contrast, the Matt or the Premium Matt is intended to suppress gloss. In particular, the Premium Matt achieves a gloss level lower than that of a standard paper sheet. In Fig. 3, the Premium Gloss is indicated to achieve a gloss level Gs of 80 or higher. The Gloss is indicated to achieve a gloss level that is achieved by a primary color or a secondary color. The Matt is indicated to achieve a gloss level that is achieved by a primary color and with a 30-percent halftone. The Premium Matt is indicated to achieve a gloss level of 10 or lower. The deviation of the gloss level is indicated as ΔGs, and set to 10 or lower. Among such surface effect types, a surface effect achieving a high gloss level is associated with a high density value, and a surface effect suppressing gloss is associated with a low density value. Surface effects such as watermarks and textures are associated with density values between these two extremes. Used as a watermark are characters or background patterns, for example. A texture represents characters or patterns, and can achieve a haptic effect as well as a visual effect. For example, a stained-glass pattern can be achieved using clear toner. A surface protection is achieved by the Premium Gloss or the Gloss. The user specifies, via image processing application, in which area of an image represented by image data to be processed is provided with a surface effect, and which type of surface effects is to be provided to the area. The host apparatus 10 running the image processing application generates image data of a gloss control plane by setting a density value corresponding to the surface effect designated by a user to a drawn object included in the area designated by the user. The relationship between a density value and a surface effect type will be described later.

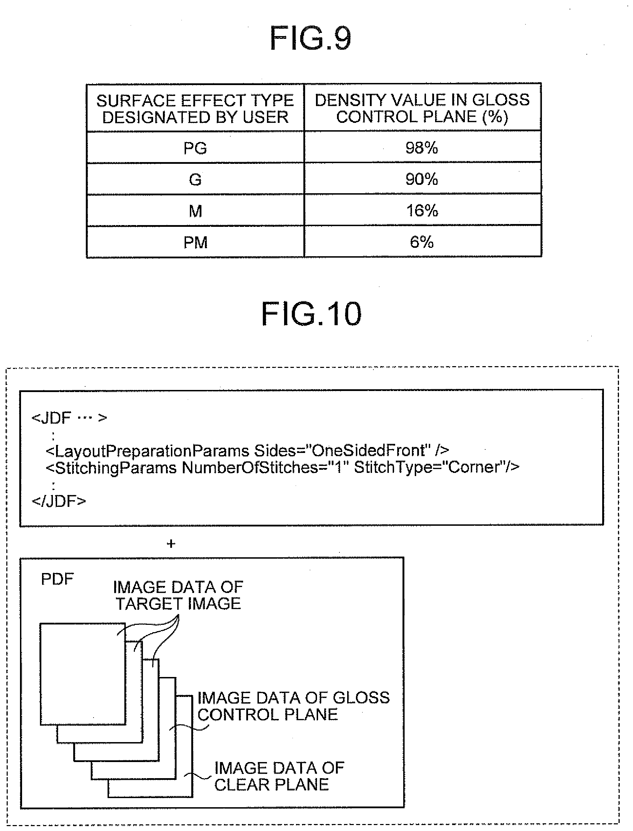

Fig. 4 is a schematic for explaining an example of image data of a gloss control plane. In the exemplary gloss control plane illustrated in Fig. 4, a user assigns the surface effect "PG (Premium Gloss)" to a drawn object "A, B, C", assigns the surface effect "G (Gloss)" to a drawn object "(rectangular shape)", and assigns the surface effect "M (Matt)" to a drawn object "(circular shape)". The density value set to each of these surface effects is a value defined in a density value selection table (see Fig. 9), which is to be described later, in which density values are associated with the surface effects.

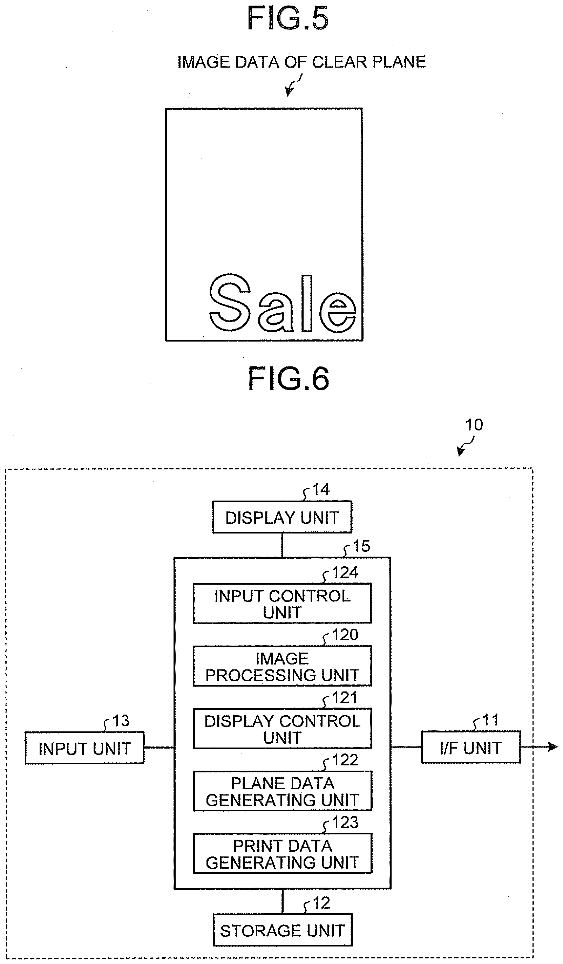

The image data of a clear plane is image data in which a transparent image other than surface effects, for example, a transparent image of a watermark or a texture, is specified. Fig. 5 is a schematic for explaining an example of the image data of a clear plane. In the example illustrated in Fig. 5, a watermark "Sale" is specified by a user.

In this manner, the image data of a gloss control plane or a clear plane being image data of a special color plane is generated by the image processing application in the host apparatus 10 on a plane other than the image data of color planes. The portable document format (PDF) is used for the image data of a color plane, the image data of a gloss control plane, and the image data of a clear plane. The PDF image data of each of these planes is integrated and generated as document data. The data format of the image data of these planes is not limited to the PDF, and any format may also be used.

The host apparatus 10 generating the image data of each of the planes will now be explained in detail. Fig. 6 is a block diagram illustrating an example of a general configuration of the host apparatus 10. As illustrated in Fig. 6, the host apparatus 10 includes an I/F unit 11, a storage unit 12, an input unit 13, a display unit 14, and a control unit 15. The I/F unit 11 is an interface device to communicate with the DFE 50. The storage unit 12 is a storage medium such as a hard disk drive (HDD) or a memory storing therein various types of data. The input unit 13 is an input device to allow a user to make various operation inputs, and may be a keyboard or a mouse, for example. The display unit 14 is a display device to display various screens, and may be a liquid crystal panel, for example.

The control unit 15 is a computer controlling the entire host apparatus 10, and includes a central processing unit (CPU), a read-only memory (ROM), and a random access memory (RAM). As illustrated in Fig. 6, the control unit 15 mainly includes, an input control unit 124, an image processing unit 120, a display control unit 121, a plane data generating unit 122, and a print data generating unit 123. Among these units, the input control unit 124 and display control unit 121 are realized by causing the CPU of the control unit 15 to read a computer program of an operating system stored in the ROM or the like, to load the computer program onto the RAM, and to execute the computer program. The image processing unit 120, the plane data generating unit 122, and the print data generating unit 123 are realized by causing the CPU of the control unit 15 to read the computer program of the image processing application stored in the ROM, to load the computer program onto the RAM, and to execute the computer program. The plane data generating unit 122 is provided as a plug-in function installed in the image processing application, for example. At least part of each of these units may be implemented as a separate circuit (hardware).

The input control unit 124 receives various inputs from the input unit 13, and controls the inputs. For example, a user can make operations on the input unit 13 to enter image designating information to designate an image, that is, image data of a color plane (hereinafter, also referred to as a "target image") to be provided with a surface effect, among various images (e.g., photographs, characters, shapes, and images in which these are integrated) stored in the storage unit 12. The image designating information may be entered in any way, without limitation to the input unit 13.

The display control unit 121 controls displaying of various types of information on the display unit 14. In the first embodiment, when the input control unit 124 receives image designating information, the display control unit 121 reads the image designated in the image designating information from the storage unit 12, and controls the display unit 14 to display the image on the screen.

The user can then designate designating information to designate an area to be provided with a surface effect and the type of the surface effect by making operations on the input unit 13 while looking at the target image displayed on the display unit 14. The designating information may be entered in any way, without limitation to the way described above.

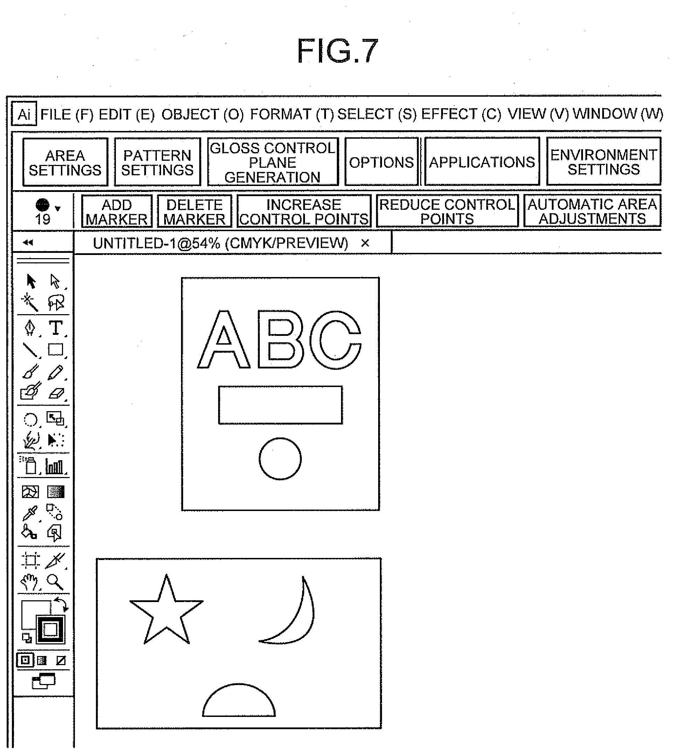

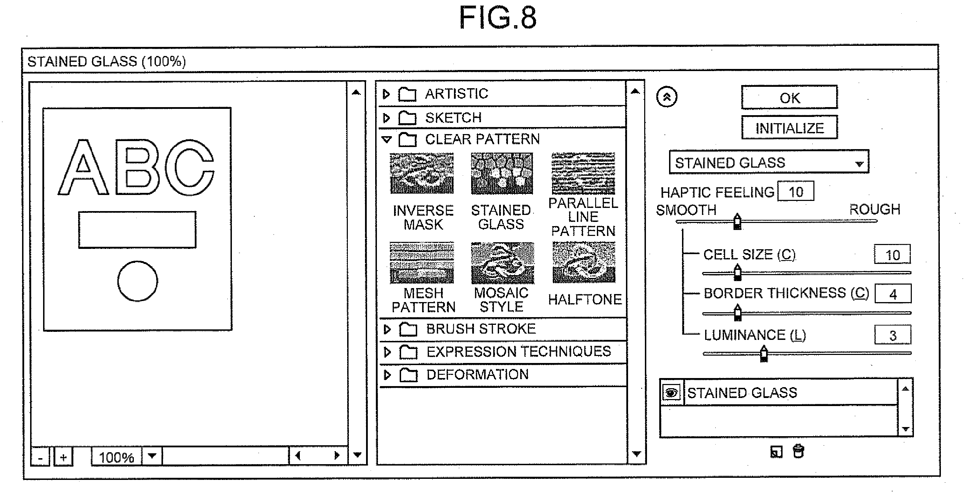

More specifically, the display control unit 121 causes the display unit 14 to display the screen illustrated in Fig. 7, for example. The example illustrated in Fig. 7 is an exemplary screen displayed when a plug-in is installed to Illustrator sold by Adobe Systems (R) Incorporated. The screen illustrated in Fig. 7 displays an image represented by target image data to be processed (image data of a color plane), and a user makes an operation input to designate an area to be provided with a surface effect, by pressing an "add marker" button via the input unit 13. In this manner, the area to be provided with a surface effect is designated. The user makes such an operation input to every area to be provided with a surface effect. The display control unit 121 in the host apparatus 10 then displays a screen, an example of which is illustrated in Fig. 8, for each of the areas thus designated on the display unit 14. In the screen illustrated in Fig. 8, an image of each of the areas designated to be provided with a surface effect is displayed in each of the areas, and a user can make an operation input to designate a surface effect type to be provided to the image via the input unit 13. In this manner, the surface effect type to be provided to the area is designated. As surface effect types, the Premium Gloss and the Gloss in Fig. 3 are indicated as an "inverse mask" in Fig. 8, and the effects other than the Premium Gloss and the Gloss in Fig. 3 are illustrated as a stained glass, a parallel line pattern, a mesh pattern, a mosaic style, a matt, and a halftone in Fig. 8, indicating that each of these surface effects are available for designation.

Referring back to Fig. 6, the image processing unit 120 applies various types of image processing to the target image based on the instructions provided by the user via the input unit 13.

The plane data generating unit 122 generates image data of a color plane, image data of a gloss control plane, and image data of a clear plane. In other words, if the input control unit 123 receives a designation of a color for a drawn object in the target image from a user, the plane data generating unit 122 generates image data of a color plane based on the color designation.

When the input control unit 123 receives a designation of a transparent image other than a surface effect, e.g., a watermark or a texture, and a designation of an area to be applied with the transparent image, the plane data generating unit 122 generates the transparent image and image data of a clear plane enabled to identify the area of a paper sheet to be provided with the transparent image, based on the user designation.

When the input control unit 123 receives designating information (an area to be provided with a surface effect and the surface effect type), the plane data generating unit 122 generates image data of a gloss control plane enabled to identify the area of a paper sheet to be provided with a surface effect and the type of the surface effect based on the designating information. In the image data of a gloss control plane generated by the plane data generating unit 122, the area to be provided with a surface effect, which is represented as a gloss control value, is designated for each drawn object included in the image data of the target image.

Stored in the storage unit 12 is a density value selection table storing therein a surface effect type designated by a user, and a density value of the gloss control plane corresponding to the surface effect type. Fig. 9 is a schematic of an example of the density value selection table. In the example illustrated in Fig. 9, the density value of the gloss control plane corresponding to the area designated with "PG" (Premium Gloss) by the user is represented as a pixel value corresponding to "98 percent". The density value of the gloss control plane corresponding to the area designated with "G" (Gloss) is represented as a pixel value corresponding to "90 percent". The density value of the gloss control plane corresponding to the area designated with "M" (Matt) is represented as a pixel value corresponding to "16 percent". The density value of the gloss control plane corresponding to the area designated with "PM" (Premium Matt) is represented as a pixel value corresponding to "6 percent".

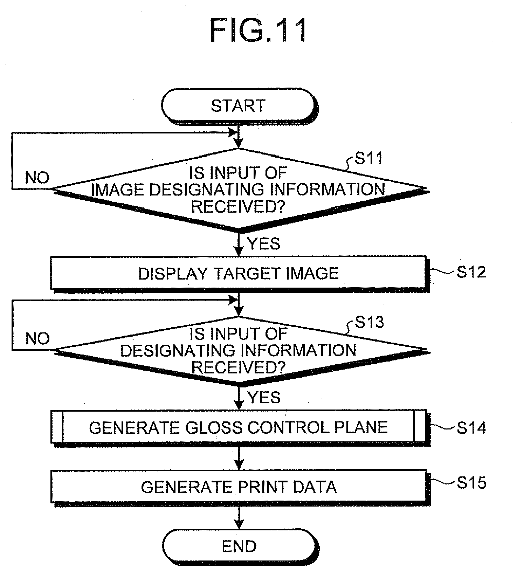

The density value selection table is the same data as a surface effect selection table (which is to be described later) stored in the DFE 50. The control unit of the host apparatus 10 acquires the surface effect selection table at predetermined operational timing, generates the density value selection table from the surface effect selection table thus acquired (copies the surface effect selection table), and stores the density value selection table in the storage unit. Although an example of the density value selection table is illustrated in a simplified manner in Fig. 6, the density value selection table actually is the same table as the surface effect selection table illustrated in Fig. 11. The surface effect selection table may be stored in a storage server on a network such as the Internet (cloud), and the control unit 15 may acquire the surface effect selection table from the server, and generate the density value selection table from the surface effect selection table thus acquired (copy the surface effect selection table). The surface effect selection table stored in the DFE 50 and the surface effect selection table stored in the storage unit of the host apparatus need to be the identical data.

Referring back to Fig. 6, the plane data generating unit 122 generates image data of a gloss control plane by setting the density value (gloss control value) of a drawn object designated with a given surface effect by the user to a value corresponding to the surface effect type, by referring to the density value selection table illustrated in Fig. 9. For example, it is assumed herein that, among the target images in the image data of a color plane illustrated in Fig. 2, the "PG" is designated to the area in which "ABC" is indicated, that the "G" is designated to the rectangular area, and "M" is designated to the circular area by the user. In such a case, the plane data generating unit 122 generates image data of the gloss control plane by setting the density value of the drawn object designated with the "PG" ("ABC") by the user to a pixel value corresponding to "98 percent", setting the density value of the drawn object designated with "G" ("rectangle") by the user to a pixel value corresponding to "90 percent", and setting the density value of the drawn object designated with "M" ("circle") by the user to a pixel value corresponding to "16 percent". The image data of the gloss control plane generated by the plane data generating unit 122 is data in a vector format represented as a collection of drawn objects each with coordinate points, parameters of a equation representing a line or a surface, and indicating filling, a special effect, or the like. Fig. 4 is a conceptual schematic illustrating the image data of a gloss control plane. The plane data generating unit 122 generates document data in which the image data of the gloss control plane, the image data (image data of a color plane) of the target image, and the image data of a clear plane are integrated, and passes the document data to the print data generating unit 123.

The print data generating unit 123 generates print data based on the document data. Print data includes image data of a target image (image data of a color plane), image data of a gloss control plane, and image data of a clear plane, as well as a job command specifying printer settings, aggregate setting, duplex printing, and the like to the printer. Fig. 10 is a general schematic conceptually illustrating an example of a print data structure. In the example illustrated in Fig. 10, the Job Definition Format (JDF) is used for a job command, but a job command is not limited thereto. The JDF illustrated in Fig. 10 is a command specifying "simplex printing with staple" as an aggregate setting. Furthermore, print data may be converted into a page description language (PDL) such as the PostScript, or may be kept in the PDF format if the PDF format is supported by the DFE 50.

A process of generating print data performed by the host apparatus 10 having such a configuration will now be explained. Fig. 11 is a flowchart illustrating the process of generating print data performed by the host apparatus 10 according to the first embodiment. In the exemplary process to be explained below, because any transparent image is not designated, the host apparatus 10 does not generate any image data of a clear plane.

To begin with, if the input control unit 123 receives an input of image designating information (Yes at Step S11), the display control unit 121 controls the display unit 14 to display the image designated in the image designating information thus received (Step S12). If the input control unit 123 receives an input of designating information for a surface effect (Yes at Step S13), the plane data generating unit 122 generates the image data of a gloss control plane based on the designating information thus received (Step S14).

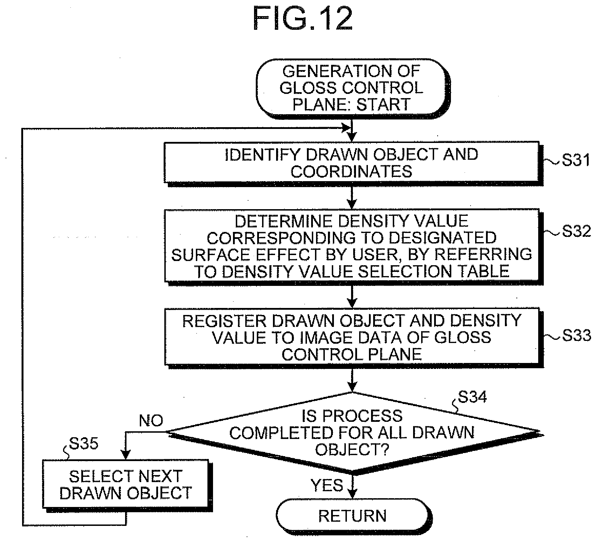

The process of generating a gloss control plane performed at Step S14 will now be explained. Fig. 12 is a flowchart illustrating the process of generating a gloss control plane. To begin with, the plane data generating unit 122 identifies a drawn object designated with the surface effect by the designating information, and the coordinates of the drawn object in the target image (Step S31). The drawn object and the coordinates of the drawn object are identified from a drawing command, which is provided by an operating system, used by the image processing unit 120 when the drawn object is created, and coordinate values specified in the drawing command, for example.

The plane data generating unit 122 then determines a density value being a gloss control value corresponding to the surface effect designated by the user in the designating information by referring to the density value selection table stored in the storage unit 12 (Step S32).

The plane data generating unit 122 then registers the drawn object and the density value determined correspondingly to the drawn object to the image data of a gloss control plane (that is initially null data) in an associated manner (Step S33).

The plane data generating unit 122 then determines if the process at Step S31 to Step S33 is completed for all of the drawn objects included in the target image (Step S34). If the process is not completed yet (No at Step S34), the plane data generating unit 122 selects the next drawn object from the objects having not been processed in the target image (Step S35), and repeats the process from Step S31 to Step S33.

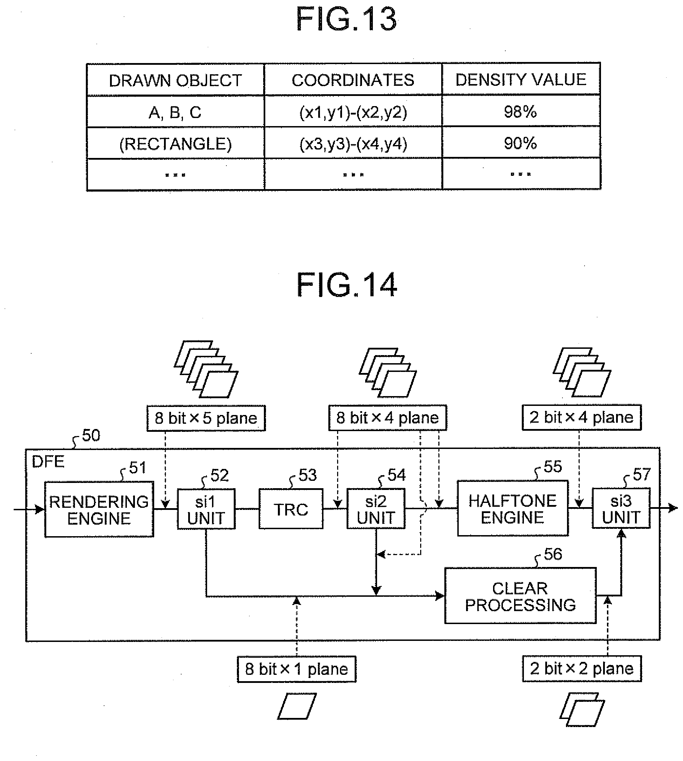

At Step S34, if the plane data generating unit 122 determines that the process at Step S31 to Step S33 is completed for all of the drawn objects included in the target image (Yes at Step S34), the plane data generating unit 122 ends the generation of a gloss control plane. In this manner, the image data of a gloss control plane illustrated in Fig. 8 is generated. Fig. 13 is a schematic of a corresponding relationship between a drawn object, coordinates, and a density value in the image data of the gloss control plane illustrated in Fig. 8.

Referring back to Fig. 11, once the image data of a gloss control plane is generated, the plane data generating unit 122 generates document data in which the image data of a gloss control plane and the image data of the target image are integrated, and passes the document data to the print data generating unit 123. The print data generating unit 123 then generates print data based on the document data (Step S15). Print data is generated by the process described above.

A functional configuration of the DFE 50 will now be explained. As illustrated in Fig. 14, the DFE 50 includes a rendering engine 51, a si1 unit 52, a tone reproduction curve (TRC) 53, a si2 unit 54, a halftone engine 55, a clear processing 56, a si3 unit 57, and a surface effect selection table (not illustrated). The rendering engine 51, the si1 unit 52, the TRC 53, the si2 unit 54, the halftone engine 55, the clear processing 56, and the si3 unit 57 are realized by causing a control unit of the DFE 50 to execute various computer programs stored in a main storage unit or an auxiliary storage unit. The si1 unit 52, the si2 unit 54, and the si3 unit 57 all are provided with functions to separate and integrate the image data. The surface effect selection table is stored in the auxiliary storage unit, for example.

The rendering engine 51 receives image data (for example, the print data illustrated in Fig. 10) transmitted by the host apparatus 10. The rendering engine 51 parses the image data thus received, converts the image data in a vector format into image data in a raster format, and converts the color space represented in the RGB format into the color space represented in the CMYK format. The rendering engine 51 then outputs eight-bit image data of each of the CMYK color planes, and an eight-bit gloss control plane. The si1 unit 52 outputs the eight-bit image data of each of the CMYK color planes to the TRC 53, and outputs the eight-bit gloss control plane to the clear processing 56. At this time, the DFE 50 converts the vector image data of the gloss control plane received from the host apparatus 10 into a raster format. In this process, the DFE 50 sets a surface effect type which is designated to a drawn object by a user via the image processing to each pixel as a density value, and outputs the image data of a gloss control plane.

The TRC 53 receives the eight-bit image data for each of the CMYK color planes via the si1 unit 52. The TRC 53 performs a gamma correction using a gamma curve of a one-dimensional lookup table (1D_LUT) that is generated by a calibration to the image data thus received. In addition to the gamma correction, as the image processing, the total amount of toner is restricted. Restricting the total amount of toner is a process to restrict the eight-bit image data of each of the CMYK color planes applied with the gamma correction. This process is performed because the amount of toner by which the printer 70 is capable of applying to one pixel on a recording medium is limited. If printing is performed in excess of the total amount toner thus restricted, the image quality deteriorates because of defective transfer or defective fixing. In the first embodiment, only a related gamma correction is explained.

The si2 unit 54 outputs the eight-bit image data for each of the CMYK color planes applied with the gamma correction by the TRC 53 to the clear processing 56, as data to generate an inverse mask (which is to be explained later). The halftone engine 55 receives the eight-bit image data for each of the CMYK color planes applied with the gamma correction via the si2 unit 54. The halftone engine 55 performs a halftoning process in which the image data thus received is converted into image data in a two-bit format, for example, in each of the CMYK colors to be output to the printer 70. The halftone engine 55 then outputs the two-bit image data of each of the CMYK colors, for example, applied with the halftoning process. The two bit is an example, and the data format is not limited to a two-bit format.

The clear processing 56 receives the eight-bit gloss control plane converted by the rendering engine 51 via the si1 unit 52, and receives the eight-bit image data of each of the CMYK color planes applied with the gamma correction by the TRC 53 via the si2 unit 54. The clear processing 56 uses the gloss control plane to determine the surface effect corresponding to the density value of each of the pixels in the gloss control plane (pixel value) by referring to the surface effect selection table which is to be described later. Based on the determination, the clear processing 56 determines if the glosser 80 is to be turned ON or OFF. The clear processing 56 also generates two-bit image data of the clear toner plane to cause the clear toner to be attached as required, by generating an inverse mask or a solid mask as required, using the eight-bit image data of each of the CMYK colors thus received. The clear processing 56 also generates the image data of a clear toner plane to be used by the printer 70, and the image data of a clear toner plane to be used by the low-temperature fixer 90 as required, based on the determination result of the surface effect, and outputs the image data of clear toner planes. The clear processing 56 also outputs ON/OFF information indicating ON or OFF of the glosser 80.

An inverse mask causes the total amount of attached toner, including the toners of the CMYK and the clear toner, to be even across the entire pixels in the area to be provided with the surface effect. Specifically, the clear processing 56 calculates the sum of the density values specified in the image data of the CMYK color planes for each of the pixels in the area to be provided with the surface effect, and subtracts the sum from a predetermined value. The resultant image data is used as the inverse mask. For example, an inverse mask 1 is expressed by Equation 1 below:

$$\text{Clr} = 100 - (C + M + Y + K), \text{ and when Clr} < 0, \text{ Clr} = 0 \qquad (1)$$

In Equation 1, Clr, C, M, Y, and K represent density ratios of clear toner, C toner, M toner, Y toner, and K toner, respectively, obtained from the density values of these colors specified in each of the pixels. In other words, in each of the pixels included in the area to be provided with the surface effect, the total amount of attached toner, which is the sum of the C, M, Y, and K toners attached and the amount of clear toner attached, is adjusted to 100 percent using Equation 1. If the total amount of attached C, M, Y, and K toners is equal to or higher than 100 percent, the density ratio of the clear toner is set to zero percent so that no clear toner is attached. This is because the area in which the total amount of attached C, M, Y, and K toners exceeds 100 percent is smoothed out through the fixing process. In this manner, by setting the total amount of toner attached to each of the pixels included in the area to be provided with the surface effect to equal to or more than 100 percent, the unevenness caused by differences in the total amount of attached toner is removed across the area. As a result, gloss through a specular reflection of light is obtained. The inverse mask may also be obtained in any way other than Equation 1, and a plurality of types of inverse masks are possible.

For example, an inverse mask may attach clear toner evenly to each of the pixels. In such a case, the inverse mask is also referred to as a solid mask, and is expressed by Equation 2 below:

$$\text{Clr} = 100 \qquad (2)$$

Alternatively, a density ratio other than 100 percent may be associated to some of the pixels to be provided with the surface effect. Furthermore, a plurality of patterns of solid masks are also possible.

Alternatively, the inverse mask may be obtained by multiplying paper surface exposure ratios of the respective colors, for example. In such a case, the inverse mask is expressed by Equation 3 below, for example:

$$Clr = 100 \times \{(100\text{-}C)/100\} \times \{(100\text{-}M)/100\} \times \{(100\text{-}Y)/100\} \times \{(100\text{-}K)/100\}$$

$$(3)$$

In Equation 3, (100-C)/100 represents the paper surface exposure ratio of the color C. (100-M)/100 represents the paper surface exposure ratio of the color M. (100-Y)/100 represents the paper surface exposure ratio of the color Y. (100-K)/100 represents paper surface exposure ratio of color K.

Furthermore, the inverse mask may be obtained through a method that assumes the dot of the color plane with the maximum area ratio determines the smoothness, for example. In such a case, the inverse mask is expressed by Equation 4 below, for example:

$$Clr = 100\text{-}max(C, M, Y, K)$$

$$(4)$$

In Equation 4, max(C, M, Y, K) indicates that the density value of the color having the highest density value among the CMYK colors is used as the representative value.

In summary, the inverse mask may be expressed by any one of Equation 1 to Equation 4.

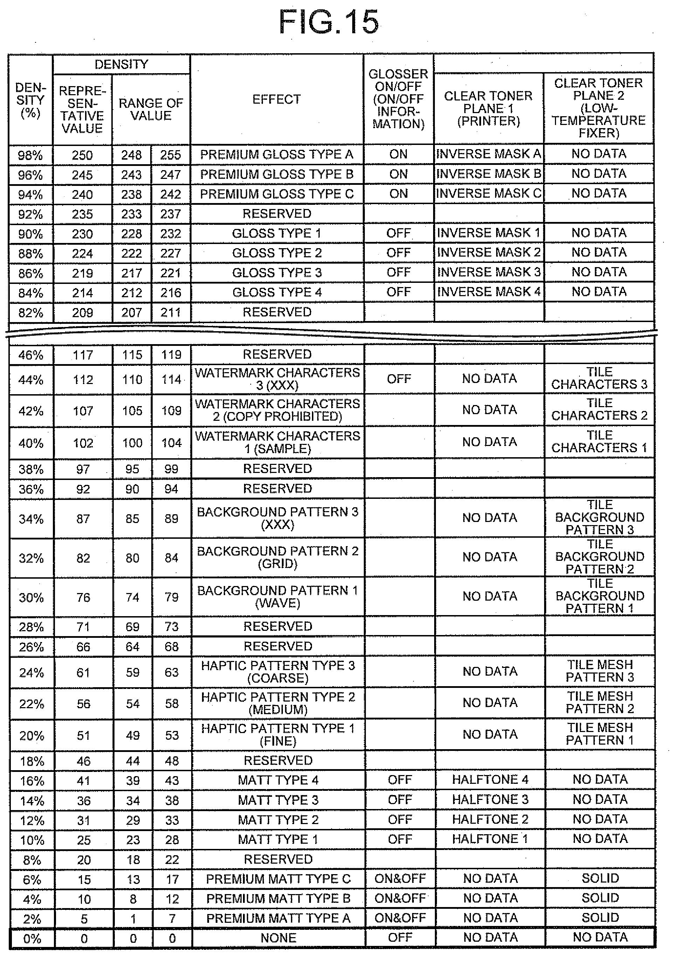

The surface effect selection table is a table indicating a corresponding relationship between a density value, which is a gloss control value to indicate a surface effect, and the surface effect type. The surface effect selection table also indicates a corresponding relationship between a density value and a surface effect type, and control information related to a post-processing machine, which is dependent on the configuration of the image forming system, image data of a clear toner plane to be used by the printer 70, and the image data of the clear toner plane to be used by the post-processing machine. The image forming system may be configured variously, but in the first embodiment, the printer 70 is configured to be connected to the glosser 80 and the low-temperature fixer 90 both of which are serving as a post-processing machine. Therefore, the control information related to the post-processing machine, which is dependent on the configuration of the image forming system, is ON/OFF information to turn ON or OFF the glosser 80. Furthermore, an example of the image data of a clear toner plane to be used by the post-processing machine includes the image data of a clear toner plane to be used by the low-temperature fixer 90. Fig. 15 is a schematic illustrating an example of a data structure of the surface effect selection table. The surface effect selection table may be configured to indicate a corresponding relationship among the control information related to the post-processing machine, the image data of a clear toner plane 1 to be used by the printer 70, the image data of a clear toner plane 2 to be used by the post-processing machine, a density value, and a surface effect type for each of the different configurations of the image forming system, but illustrated in Fig. 15 is an exemplary data structure suitable for the configuration of the image forming system according to the first embodiment. In the corresponding relationship between the surface effect type and the density value illustrated in Fig. 15, each of the surface effect types is associated with a range of density values. Each of the surface effect types is associated with every two percent of a density ratio calculated from a value representing the density value range (density ratio). Specifically, a surface effect to give gloss (premium gloss effect or gloss effect) is associated with a range of density values resulting in a density ratio equal to or higher than 84 percent ("212" to "255"), and a surface effect to suppress gloss (Matt and Premium Matt) is associated with a range of density values resulting in a density ratio equal to or lower than 16 percent ("1" to "43"). A surface effect such as a texture or a patterned watermark is associated with a range of density values resulting in a density ratio between 20 percent and 80 percent.

More specifically, as a surface effect, the Premium Gloss (PM) is associated with pixel values between "238" to "255", as an example. Within this range, three different types of Premium Gloss are associated with a range of pixel values from "238" to "242", a range of pixel values from "243" to "247", and a range of pixel values from "248" to "255", respectively. The Gloss (G) is associated with pixel values from "212" to "232". Within this range, four different types of Gloss are associated with a range of pixel values from "212" to "216", a range of pixel values from "217" to "221", a range of pixel values from "222" to "227", and a range of pixel values from "228" to "232", respectively. The Matt (M) is associated with pixel values from "23" to "43". Within this range, three different types of Matt are associated with a range of pixel values from "23" to "28", a range of pixel values from "29" to "33", a range of pixel values from "34" to "38", and a range of pixel values from "39" to "43", respectively. The Premium Matt (PM) is associated with the range of pixel values from "1" to "17". Within this range, three different types of Premium Matt are associated with a range of pixel values from "1" to "7", a range of pixel values from "8" to "112", and a range of pixel values from "13" to "17", respectively. With these different types of the same surface effect, the image data of a clear toner plane to be used by the printer 70 or the low-temperature fixer 90 is obtained differently, but the operations performed by the printer itself and the post-processing machine remain the same. Null surface effect is associated with the density value "0".

In addition, in Fig. 15, ON/OFF information indicating ON or OFF of the glosser 80, the image data of a clear toner plane 1 to be used by the printer 70 (Clr-1 in Fig. 1), and the image data of a clear toner plane 2 to be used by the low-temperature fixer 90 are indicated correspondingly to pixel values and a surface effect. For example, for the surface effect Premium Gloss, the surface effect selection table indicates that the glosser 80 is to be turned ON, and the image data of the clear toner plane 1 to be used by the printer 70 is an inverse mask, and no image data of the clear toner plane 2 is to be used by the low-temperature fixer 90 (Clr-2 in Fig. 1). The inverse mask is a mask obtained using Equation 1 explained above, for example. In the example illustrated in Fig. 15, the area designated with the Premium Gloss effect as a surface effect corresponds to the entire area defined by the image data. An example in which the area designated with the Premium Gloss effect, as a surface effect, corresponds to a part of the area defined by the image data will be explained later.

For the density values from "228" to "232", that is, the Gloss Surface effect, the surface effect selection table indicates that the glosser 80 is to be turned OFF, that the image data of the clear toner plane 1 to be used by the printer 70 is the inverse mask 1, and no image data of the clear toner plane 2 is to be used by the low-temperature fixer 90.

The inverse mask 1 may be any mask expressed by any one of Equation 1 to Equation 4. Because the glosser 80 is turned OFF, the total amount of attached toner to be smoothed becomes different, and therefore, the surface unevenness is increased compared with the effect achieved by the Premium Gloss. As a result, the Gloss with a gloss level lower than the Premium Gloss is obtained. Furthermore, for a surface effect "Matt", the surface effect selection table indicates that the glosser 80 is to be turned OFF, that the image data of the clear toner plane 1 to be used by the printer 70 represents halftone dots, and no image data of the clear toner plane 2 is to be used by the low-temperature fixer 90. For a surface effect "Premium Matt", the surface effect selection table indicates that the glosser 80 may be turned ON or OFF, that no image data of the clear toner plane 1 is to be used by the printer 70, and the image data of the clear toner plane 2 to be used by the low-temperature fixer 90 is a solid mask. The solid mask is the mask obtained by Equation 2 explained above, for example.

The clear processing 56 determines the surface effect associated with each of the pixel values represented in the gloss control plane, as well as if the glosser 80 is to be turned ON or OFF, and further determines what kind of image data of clear toner planes are to be used by the printer 70 and by the low-temperature fixer 90, by referring to the surface effect selection table. The clear processing 56 determines if the glosser 80 is to be turned ON or OFF in units of a page. The clear processing 56 then generates the image data of a clear toner plane in the manner described above based on the determination results, and outputs the ON/OFF information for the glosser 80.

The si3 unit 57 integrates the two-bit image data of each of the CMYK colors applied with the halftoning process and the two-bit image data of the clear toner planes generated by the clear processing 56, and outputs the image data thus integrated to the MIC 60. Because the clear processing 56 may not generate at least one of the image data of a clear toner plane to be used by the printer 70 and the image data of the clear toner plane to be used by the low-temperature fixer 90, the si3 unit 57 integrates the two-bit image data of each of the CMYK colors applied with the halftoning process and at least one piece of image data of the clear toner planes generated by the clear processing 56. When neither one of the image data of the clear toner planes is generated by the clear processing 56, the si3 unit 57 outputs the image data in which the two-bit image data of the CMYK colors is integrated. As a result, the DFE 50 outputs four to six pieces of two-bit image data to the MIC 60. The si3 unit 57 also outputs the ON/OFF information for the glosser 80 received from the clear processing 56 to the MIC 60.

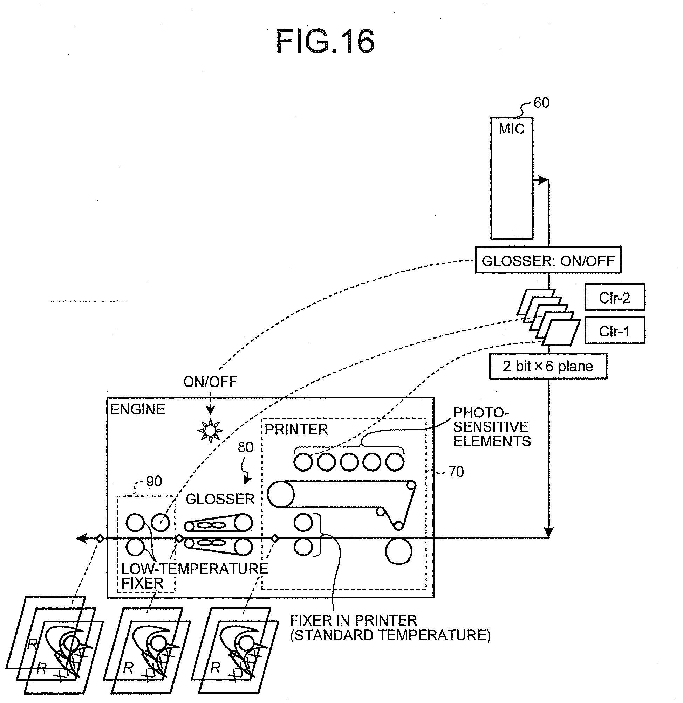

The MIC 60 is connected to the DFE 50 and the printer 70. The MIC 60 outputs apparatus configuration information indicating the configuration of an apparatus provided as a post-processing machine to the DFE 50. The MIC 60 receives image data of color planes and image data of a clear toner plane from the DFE 50, and directs each of these pieces of image data to a corresponding apparatus. The MIC 60 also controls the post-processing machine. More specifically, as illustrated in Fig. 16, the MIC 60 outputs the image data of CMYK color planes to the printer 70, among the image data received from the DFE 50. When there is any image data of a clear toner plane to be used by the printer 70, the MIC 60 also outputs this image data to the printer 70. The MIC 60 turns ON or OFF the glosser 80 using the ON/OFF information received from the DFE 50. When there is any image data of a clear toner plane to be used by the low-temperature fixer 90, the MIC 60 outputs this image data to the low-temperature fixer 90. In the glosser 80, a channel to apply fixing and a channel not to apply fixing may be switched using the ON/OFF information. The low-temperature fixer 90 may switch to be ON or OFF, or channels may be switched, in the same manner as the glosser 80, depending on whether any image data of a clear toner plane is present. Furthermore, as illustrated in Fig. 16, a printing apparatus including the printer 70, the glosser 80, and the low-temperature fixer 90 is provided with a conveying path through which a recording medium is conveyed. More specifically, the printer 70 includes a plurality of electrophotographic photosensitive elements, a transfer belt on which the toner images formed on the respective photosensitive elements are transferred, a transfer unit in which the toner image on the transfer belt is transferred onto a recording medium, and a fixing unit in which the toner image on the recording medium is fixed onto the recording medium. A recording medium is conveyed through the positions of the printer 70, the glosser 80, and the low-temperature fixer in the order described herein, by being conveyed by conveying members not illustrated through the conveying path. After being processed sequentially by these units, and thus subjected to image formation and applied with a surface effect, the recording medium is conveyed through the conveying path by a conveying mechanism not illustrated, and discharged from the printing apparatus.

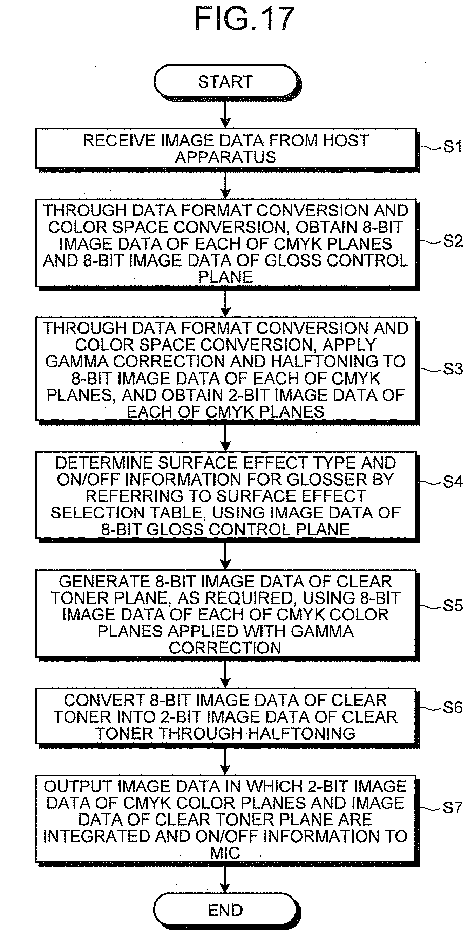

A gloss controlling process performed by the image forming system according to the first embodiment will now be explained with reference to Fig. 17. When the DFE 50 receives image data from the host apparatus 10 (Step S1), the rendering engine 51 parses the image data, converts the image data represented in a vector format into image data in a raster format, and converts the color space represented in the RGB format into the color space in the CMYK format. In this manner, the rendering engine 51 acquires eight-bit image data for each of the CMYK color planes, and eight-bit gloss control plane (Step S2).

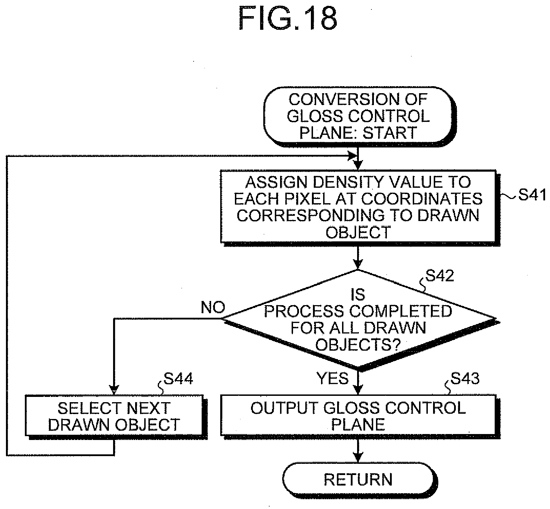

The process of converting the image data of a gloss control plane performed at Step 2 will now be explained in detail. Fig. 18 is a flowchart illustrating the process of converting the image data of a gloss control plane. In this conversion process, the rendering engine 51 converts the image data of a gloss control plane, such as the one illustrated in Fig. 8, that is, the image data of a gloss control plane in which each drawn object is specified with a density value to identify a surface effect, as illustrated in Fig. 13, into image data of a gloss control plane in which each pixel included in the drawn object is specified with a density value.

The rendering engine 51 converts the image data of a gloss control plane by assigning a density value specified in a drawn object on the gloss control plane to the pixels in the coordinate range corresponding to the drawn object, as illustrated in Fig. 13 (Step S41). The rendering engine 51 then determines if this process is completed for every drawn object included in the image data of the gloss control plane (Step S42).

If the process is not completed (No at Step S42), the rendering engine 51 selects the next unprocessed drawn object from the objects in the image data of the gloss control plane (Step S44), and repeats the process at Step S41.

If the process at Step S41 is completed for all of the drawn object included in the image data of the gloss control plane at Step S42 (Yes at Step S42), the rendering engine 51 outputs the image data of the gloss control plane thus converted (Step S43). Through the process described above, image data of a gloss control plane is converted into data in which each pixel is specified with a surface effect.

Referring back to Fig. 17, once the eight-bit image data of the gloss control plane is output, the TRC 53 in the DFE 50 performs a gamma correction to the eight-bit image data of each of the CMYK color planes, using a gamma curve of 1D_LUT generated by a calibration. The halftone engine 55 then performs a halftoning process to convert the image data applied with the gamma correction into a data format to be output to the printer 70, that is, two-bit image data in each of the CMYK colors, and obtains the two-bit image data in each of the CMYK colors applied with the halftoning process (Step S3).

The clear processing 56 in the DFE 50 then determines the surface effect specified to each pixel value represented in the gloss control plane, by referring to the surface effect selection table, using the eight-bit gloss control plane. The clear processing 56 makes such a determination for all of the pixels in the gloss control plane. In the gloss control plane, a density value belonging to the same range is basically assigned to all of the pixel included in each area to be provided with the surface effect. Therefore, the clear processing 56 determines that adjacent pixels determined to have the same surface effect is to be included in the same area to be provided with the surface effect. In this manner, the clear processing 56 determines the area to be provided with a surface effect, and the type of a surface effect to be provided to such an area. Based on this determination, the clear processing 56 determines whether the glosser 80 is to be turned ON or OFF (Step S4).

The clear processing 56 in the DFE 50 then generates eight-bit image data of a clear toner plane to cause the clear toner to be attached, as required, using the eight-bit image data of each of the CMYK colors, as required (Step S5). The halftone engine 56 then converts the eight-bit image data of the clear toner plane, which uses eight-bit image data, into two-bit image data of the clear toner plane through the halftoning process (Step S6).

The si3 unit 57 in the DFE 50 then integrates the two-bit image data of each of the CMYK colors applied with the halftoning process obtained at Step S3 and the two-bit image data of the clear toner plane generated at Step S6, and outputs the image data thus integrated and the ON/OFF information indicating to turn ON or OFF the glosser 80 determined at Step S4 to the MIC 60 (Step S7).

At Step S7, if no image data of a clear toner plane is generated by the clear processing 56 at Step S5, integrated by the si3 unit 57 and output to the MIC 60 is only the two-bit image data of each of the CMYK colors applied with the halftoning process obtained at Step S3.

A specific example will now be explained for each of the surface effect types. Examples explained hereunder are examples using each type of the Premium Gloss and the Gloss to give gloss, and the Matt and the Premium Matt to suppress gloss. Also explained hereunder is an example in which the same surface effect type is specified in one page. At Step S4, the clear processing 56 in the DFE 50 determines that the Premium Gloss is the surface effect designated to the pixels specified with a density value from "238" to "255", by referring to the surface effect selection table illustrated in Fig. 15, using the density value represented in each pixel included in the eight-bit gloss control plane. For this surface effect type, the clear processing 56 in the DFE 50 further determines if the area designated with the Premium Gloss surface effect corresponds to the entire area defined by the image data. If the determination result is Yes, the clear processing 56 in the DFE 50 generates an inverse mask based on Equation 1, for example, using the image data of the area corresponding to this area in each piece of the eight-bit image data in the CMYK colors. The image data represented as the inverse mask will then be used as the image data of a clear toner plane to be used by the printer 70. Because no image data of a clear toner plane is used by the low-temperature fixer 90 for this area, the DFE 50 does not generate any image data of a clear toner plane to be used by the low-temperature fixer 90. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes and the image data of a clear toner plane to be used by the printer 70 received from the DFE 50 to the printer 70, and turns ON the glosser 80 using the ON/OFF information received from the DFE 50. The printer 70 irradiates the photosensitive element with a light beam from the exposing unit based on the image data of the CMYK color planes and the image data of the clear toner plane received from the MIC 60, so that toner images are formed on the respective photosensitive elements using respective toners. The printer 70 then transfers the toner images onto a paper sheet, and fixes the image by heating and applying pressure at the standard temperature. In this manner, the clear toner, as well as the CMYK toners, are attached to the paper sheet, and the image is formed thereby. The glosser 80 then heats and applies the high pressure to the paper sheet at the high temperature. Because the low-temperature fixer 90 receives no image data of a clear toner plane, the paper sheet is discharged without causing the low-temperature fixer 90 to attach any clear toner. Because the total amount of attached toner including each of the CMYK toners and the clear toner is compressed evenly across the entire area defined by the image data, a strong gloss is obtained from the surface of the area.

By contrast, when only a part of the area defined by the image data is designated with the Premium Gloss surface effect, a situation described below might occur. Used for the part designated with the Premium Gloss is the image data of a clear toner plane represented as an inverse mask, which is described earlier. However, in a case in which all of the pixels other than those included in such an area is specified with a total amount of attached CMYK toners equal to or more than a predetermined level, the total amount of attached toner, including each of the CMYK toners and the clear toner, is evened out across the entire area including the part designated with the Premium Gloss, as well as the part specified with a total amount of attached CMYK toners equal to or higher than a predetermined level, once the pressure is applied to the paper sheet in the glosser 80.

For example, in the case in which all of the pixels in the area defined by the image data are specified with a total amount of attached CMYK toners equal to or more than a predetermined level, the result will be the same as that achieved when the Premium Gloss is designated to the entire area defined by the image data.

Therefore, even when a part of the area defined by the image data is designated with the Premium Gloss surface effect, the DFE 50 generates the same image data of a clear toner plane as that generated when the entire area defined by the image data is designated with Premium Gloss. The clear toner is then attached to the paper sheet, and the glosser 80 is then caused to apply pressure to the paper sheet. In order to provide the Premium Matt surface effect to the area other than the area specified with the Premium Gloss effect, as a surface effect, on the paper sheet applied with the pressure in the glosser 80, the DFE 50 generates the image data of a clear toner plane to be used by the low-temperature fixer 90.

Specifically, the DFE 50 generates the inverse mask based on Equation 1, as the image data of a clear toner plane to be used by the printer 70, in the same manner as that described above. The DFE 50 then generates a solid mask using Equation 2 as the image data of a clear toner plane to be used by the low-temperature fixer 90, for the area other than the area specified with the Premium Gloss effect as the surface effect. At Step S7, the si3 unit 57 in the DFE 50 integrates the image data of a clear toner plane to be used by the printer 70, the image data of a clear toner plane to be used by the low-temperature fixer 90, and the two-bit image data of each of the CMYK colors applied with the halftoning process obtained at Step S3, and outputs the image data thus integrated and the ON/OFF information indicating to turn ON the glosser 80 to the MIC 60.

Among the image data received from the DFE 50, the MIC 60 outputs the image data of the CMYK color planes and the image data of a clear toner plane to be used by the printer 70 to the printer 70, and turns ON the glosser 80 using the ON/OFF information received from the DFE 50. The MIC 60 also outputs the image data of a clear toner plane to be used by the low-temperature fixer 90 to the low-temperature fixer 90, among the image data received from the DFE 50. The printer 70 then forms an image attached with the CMYK toners and the clear toner on a paper sheet, using the image data of the CMYK color planes and the image data of the clear toner plane received from the MIC 60. The glosser 80 then heats and applies the high pressure to the paper sheet at the high temperature. The low-temperature fixer 90 then forms a toner image with clear toner, using the image data of the clear toner plane received from the MIC 60, superimposes the toner image onto the paper sheet passed through the glosser 80, and fixes the image onto the paper sheet by heating and applying pressure at low temperature. As a result, in the area designated with Premium Gloss, the total amount of attached toner including each of the CMYK toners and the clear toner is compressed evenly, and a strong gloss is obtained from the surface of the area. By contrast, to the area other than the area designated with Premium Gloss, clear toner is attached using a solid mask after the paper sheet is applied with pressure in the glosser 80 so that the surface unevenness is achieved, and the gloss of the surface of the area is suppressed.

At Step S4, the clear processing 56 in the DFE 50 determines that the surface effect designated to the pixels specified with a density value from "212" to "232" is the Gloss, by referring to the surface effect selection table using the density value represented in each pixel included in the eight-bit gloss control plane. In particular, the DFE 50 determines that the surface effect designated to a pixel specified with a density value from "228" to "232" is Gloss Type 1. For this surface effect type, the clear processing 56 in the DFE 50 generates an inverse mask 1, using the image data corresponding to the area in each piece of the eight-bit image data of the CMYK colors. The image data represented as the inverse mask 1 will then be used as the image data of a clear toner plane to be used by the printer 70. Because the image data of a clear toner plane is not used by the low-temperature fixer 90 for this area, the DFE 50 does not generate any image data of a clear toner plane to be used by the low-temperature fixer 90. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn OFF the glosser 80 to the MIC 60. the MIC 60 outputs the image data of the CMYK color planes and the image data of a clear toner plane to be used by the printer 70 received from the DFE 50 to the printer 70, and turns OFF the glosser 80 using the ON/OFF information received from the DFE 50. The printer 70 then forms an image attached with the CMYK toners and the clear toner on a paper sheet, using the image data of the CMYK color planes and the image data of a clear toner plane to be used by the printer 70 received from the MIC 60. Because the glosser 80 is turned OFF, the high pressure is not applied to the paper sheet at the high temperature. Because the low-temperature fixer 90 receives no image data of a clear toner plane, the paper sheet is discharged without causing the low-temperature fixer 90 to attach any clear toner. As a result, the total amount of attached toner, including each of the CMYK toners and the clear toner becomes relatively even across the area designated with the Gloss as the surface effect, and a moderately strong gloss is obtained from the surface of the area.

At Step S4, the clear processing 56 in the DFE 50 determines that the surface effect designated to the pixels specified with a density value from "23" to "43" is Matt, by referring to the surface effect selection table using the density value represented in each pixel included in the eight-bit gloss control plane. For this surface effect type, the clear processing 56 in the DFE 50 generates image data representing halftone dots as the image data of a clear toner plane to be used by the printer 70. Because any image data of a clear toner plane is not used by the low-temperature fixer 90 for this area, the DFE 50 does not generate any image data of a clear toner plane to be used by the low-temperature fixer 90. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 then outputs the image data of the CMYK color planes and the image data of a clear toner plane to be used by the printer 70 received from the DFE 50 to the printer 70, and turns OFF the glosser 80 using the ON/OFF information received from the DFE 50. The printer 70 then forms an image attached with the CMYK toners and the clear toner on a paper sheet, using the image data of the CMYK color planes and the image data of the clear toner plane received from the MIC 60. Because the glosser 80 is turned OFF, the high pressure is not applied to the paper sheet at the high temperature. Because no image data of the clear toner plane is output to the low-temperature fixer 90, the paper sheet is discharged without causing the low-temperature fixer 90 to attach any clear toner. As a result, halftone dots are added, using clear toner, to the area designated with the Matt as a surface effect, so that the surface unevenness is achieved, and the gloss of the surface of the area is moderately suppressed.

At Step S4, the clear processing 56 in the DFE 50 determines that the surface effect designated to the pixels specified with a density value from "1" to "17" is the Premium Matt, by referring to the surface effect selection table using the density value represented in each pixel included in the eight-bit gloss control plane. In such a case, if any other surface effect is designated in the same page (this case will be explained later), the clear processing 56 in the DFE 50 generates ON/OFF information for the glosser 80 accordingly. Regardless of whether the ON/OFF information is set to ON or OFF, the clear processing 56 generates a solid mask, as the image data of a clear toner plane to be used by the low-temperature fixer 90, without generating any image data of a clear toner plane to be used by the printer 70. At Step S7, the si3 unit 57 in the DFE 50 then integrates the image data of the clear toner plane to be used by the low-temperature fixer 90 and the two-bit image data of each of the CMYK colors applied with the halftoning process obtained at Step S3, and outputs the image data thus integrated and the ON/OFF information indicating to turn ON or OFF of the glosser 80 to the MIC 60. Among the image data received from the DFE 50, the MIC 60 outputs the image data of the CMYK color planes to the printer 70, and outputs the image data of the clear toner plane to be used by the low-temperature fixer 90

to the low-temperature fixer 90, among the image data received from the DFE 50. The printer 70 then forms an image attached with the CMYK toners on the paper sheet, using the image data of the CMYK color planes received from the MIC 60. When the glosser 80 is set to ON, the glosser 80 is caused to apply the high pressure to the paper sheet at the high temperature. When the glosser 80 is set to OFF, the high pressure is not applied to the paper sheet at the high temperature. The low-temperature fixer 90 forms a toner image with clear toner using the image data of a clear toner plane received from the MIC 60, superimposes the toner image on the paper sheet passed through the glosser 80, and fixes the image onto the paper sheet by heating and applying pressure at low temperature. As a result, the surface unevenness is achieved in the area to which Premium Matt is designated as a surface effect by causing the clear toner to be attached using the solid mask, and the gloss of the surface of the area is suppressed.

Explained above is an example in which the same surface effect is designated in one page, but the same process can be adopted in the case in which different types of surface effects are designated in one page. In other words, when a plurality of surface effects are designated in one page, each pixel included in the areas to be provided with each of the surface effects is specified with the density value of the corresponding surface effect type in the image data of a gloss control plane, as illustrated in Fig. 15. In other words, because, in the gloss control plane, the area provided with a surface effect is designated for each of the surface effect types, the DFE 50 can determine the range of pixels specified with the same density value in the image data of the gloss control plane as the area to be provided with the same surface effect. Therefore, all of the surface effects can be achieved easily in one page.

However, because ON and OFF of the glosser 80 cannot be switched in one page, there are some surface effect types that can be achieved on the page, and some other surface effect types that cannot be achieved on the same page, despite a plurality of surface effect types are designated via density values in one page of the image data of a gloss control plane.

In the first embodiment using a configuration including the printer 70, the glosser 80, and the low-temperature fixer 90 as illustrated in Fig. 1, when the surface effects of the Premium Gloss (PG) and the Premium Matt (PM) are designated in one page, these two types of surface effects can be both achieved on one page, because, according to Fig. 15, the glosser 80 is turned ON for the Premium Gloss (PG), and, the glosser 80 is turned ON or OFF for the Premium Matt (PM) accordingly to the other surface effect designated in the same page.

In such a case, at Step S4, the clear processing 56 in the DFE 50 determines that the surface effect designated to the area with pixels specified with a density value from "238" to "255" is the Premium Gloss (PG), by referring to the surface effect selection table illustrated in Fig. 15, using the density value represented in each pixel included in the eight-bit gloss control plane. The clear processing 56 in the DFE 50 then generates an inverse mask based on Equation 1, for example, using the image data corresponding to such an area in each piece of the eight-bit image data of the CMYK colors. The image data represented as the inverse mask will then be used as the image data of a clear toner plane to be used by the printer 70 for the area designated with the Premium Gloss (PG) surface effect. Because the low-temperature fixer 90 does not use any image data of a clear toner plane for the area designated with the Premium Gloss, the DFE 50 does not generate any image data of a clear toner plane to be used by the low-temperature fixer 90 for the area designated with the Premium Gloss.

At Step S4, the clear processing 56 in the DFE 50 determines that the surface effect designated to the area with pixels specified with a density value from "1" to "17" in the same page is the Premium Matt (PM), by referring to the surface effect selection table in the same manner. For this surface effect type, the clear processing 56 in the DFE 50 sets the ON/OFF information of the glosser 80 to ON, accordingly to the setting in the Premium Gloss that is the other surface effect designated in the same page, and generates a solid mask, as the image data of a clear toner plane to be used by the low-temperature fixer 90, for the area designated with the Premium Matt, without generating any image data of a clear toner plane to be used by the printer 70 for the area designated with the Premium Matt.

At Step S7, the si3 unit 57 in the DFE 50 integrates the image data of a clear toner plane to be used by the printer 70 and the two-bit image data of each of the CMYK colors applied with the halftoning process obtained at Step S3 for the area designated with the Premium Gloss, and integrates the image data of a clear toner plane to be used by the low-temperature fixer 90 and the two-bit image data of each of the CMYK colors applied with the halftoning process obtained at Step S3 for the area designated with the Premium Matt. The si3 unit 57 then outputs the image data thus integrated and the ON/OFF information indicating to turn ON the glosser 80 to the MIC 60.

Among the image data received from the DFE 50, the MIC 60 outputs the image data of the CMYK color planes and the image data of the clear toner plane to be used by the printer 70 to the printer 70, for the area designated with the Premium Gloss. The MIC 60 also outputs, for the area designated with the Premium Matt, the image data of the clear toner plane to be used by the low-temperature fixer 90 to the low-temperature fixer 90, among the image data received from the DFE 50, and turns ON the glosser 80 using the ON/OFF information received from the DFE 50.

The printer 70 irradiates the photosensitive elements with light beam from the respective exposing units, using the image data of the CMYK color planes and the image data of the clear toner plane for the area designated with the Premium Gloss received from the MIC 60, and a toner image is formed on the photosensitive elements using the respective toners. The printer 70 then transfers the toner image onto a paper sheet, and fixes the image by heating and applying pressure at the standard temperature. In this manner, the clear toner, as well as the CMYK toners, is attached to the paper sheet, and the image is formed thereby. The glosser 80 then heats and applies the high pressure to the paper sheet at the high temperature.

The low-temperature fixer 90 forms a toner image with clear toner using the image data of the clear toner plane for the area designated with the Premium Matt received from the MIC 60, superimposes the toner image on the paper sheet passed through the glosser 80, and fixes the image onto the paper sheet by heating and applying pressure at the low temperature. As a result, a strong gloss is obtained from the surface of the area designated with the Premium Gloss surface effect. On the area designated with the Premium Matt as a surface effect, the surface unevenness is achieved by causing the clear toner to be attached using the solid mask, so that the gloss of the surface of the area is suppressed.

As another example, in the configuration according to the first embodiment, when surface effects of the Gloss (G), the Matt (M), and the Premium Matt (PM) are specified in one page, these three types of surface effects can all be achieved on one page, because, based on Fig. 15, the glosser 80 is turned OFF for the Gloss (G) and the Matt (M), and the glosser 80 is turned ON or OFF for Premium Matt (PM) accordingly to the setting in the other surface effects in the same page.

Such a case will now be explained more specifically. At Step S4, the clear processing 56 in the DFE 50 determines that the surface effect designated to the area with pixels specified with a density value from "212" to "232" is the Gloss, by referring to the surface effect selection table using the density value represented in each pixel included in the eight-bit gloss control plane. In particular, the clear processing 56 in the DFE 50 determines that the surface effect designated to the pixels specified with a density value from "228" to "232" is the Gloss Type 1. For this surface effect type, the clear processing 56 in the DFE 50 generates the inverse mask 1, using the image data corresponding to such an area in each piece of the eight-bit image data of the CMYK colors. The image data represented as the inverse mask 1 will then be used as image data of a clear toner plane to be used by the printer 70 for the area designated with the Gloss. Because the low-temperature fixer 90 does not use any image data of a clear toner plane for the area designated with the Gloss, the DFE 50 does not generate any image data of a clear toner plane to be used by the low-temperature fixer 90.

At Step S4, the clear processing 56 in the DFE 50 determines that the surface effect designated to the area with pixels specified with a density value from "23" to "43" in the same page is the Matt (M), by referring to the surface effect selection table in the same manner. For this surface effect type, the clear processing 56 in the DFE 50 generates image data representing halftone dots as the image data of a clear toner plane to be used by the printer 70 for the area designated with the Matt. Because the low-temperature fixer 90 does not use any image data of a clear toner plane for the area designated with the Matt, the DFE 50 does not generate any image data of a clear toner plane to be used by the low-temperature fixer 90.

At Step S4, the clear processing 56 in the DFE 50 determines that the surface effect designated to the area with pixels specified with a density value from "1" to "17" in the same page is Premium Matt (PM), by referring to the surface effect selection table in the same manner. For this surface effect type, the clear processing 56 in the DFE 50 turns OFF the glosser 80 accordingly to the setting for the Gloss and the Matt, which are the other surface effects designated in the same page, and generates a solid mask, as the image data of a clear toner plane to be used by the low-temperature fixer 90 for the area designated with the Premium Matt, without generating any image data of a clear toner plane to be used by the printer 70 for the area designated with the Premium Matt.

At Step S7, the si3 unit 57 in the DFE 50 integrates the image data of a clear toner plane to be used by the printer 70 and the two-bit image data of each of the CMYK colors applied with the halftoning process obtained at Step S3 for the area designated with the Gloss, integrates the image data of a clear toner plane to be used by the printer 70 and the two-bit image data of each of the CMYK colors applied with the halftoning process obtained at Step S3 for the area designated with the Matt, and integrates the image data of the clear toner plane to be used by the low-temperature fixer 90 and the two-bit image data of each of the CMYK colors applied with the halftoning process obtained at Step S3 for the area designated with the Premium Matt. The si3 unit 57 then outputs the image data thus integrated and the ON/OFF information indicating to turn OFF the glosser 80 to the MIC 60.

The MIC 60 outputs the image data of the CMYK color planes being image data received from the DFE 50, the image data of a clear toner plane to be used by the printer 70 for the area designated with the Gloss, and the image data of a clear toner plane to be used by the printer 70 for the area designated with the Matt to the printer 70, and turns OFF the glosser 80 using the ON/OFF information received from the DFE 50. Among the image data received from the DFE 50, the MIC 60 outputs the image data of the clear toner plane to be used by the low-temperature fixer 90 for the area designated with the Premium Matt to the low-temperature fixer 90.

The printer 70 then forms an image attached with the CMYK toners and the clear toner on a paper sheet using the image data of the CMYK color planes received from the MIC 60, the image data of a clear toner plane to be used by the printer 70 for the area designated with the Gloss, and the image data of a clear toner plane to be used by the printer 70 for the area designated with the Matt. Because the glosser 80 is turned OFF, the high pressure is not applied to the paper sheet at the high temperature.

The low-temperature fixer 90 forms a toner image with clear toner on the area designated with the Premium Matt, superimposes the toner image onto the paper sheet using the image data of the clear toner plane for the area designated with the Premium Matt received from the MIC 60, and fixes the image onto the paper sheet by heating and applying pressure at the low temperature.

As a result of the process described above, in the area designated with the Gloss as the surface effect in the one page, the total amount of attached toner including each of the CMYK toners and the clear toner becomes relatively even, and a moderately strong gloss is obtained from the surface of the area. In the area designated with the Matt as a surface effect in one page, halftone dots are added to the area with clear toner so that the surface unevenness is achieved, and the gloss of the surface of the area is moderately suppressed. In the area designated with the Premium Matt as a surface effect in the one page, the surface unevenness is achieved by causing the clear toner to be attached using the solid mask, and the gloss of the surface of the area is suppressed.

When a plurality of different types of surface effects are designated in the same page, the different surface effects can be achieved on one page, as long as it is not necessary for the glosser 80 to be switched ON and OFF correspondingly to the surface effects. However, different surface effects requiring the glosser 80 to be switched ON and OFF in one page cannot be achieved on the one page.

For example, in the first embodiment using a configuration including the printer 70, the glosser 80, and the low-temperature fixer 90, if the Premium Gloss (PG) and the Gloss (G) are designated in one page, these two surface effect types of the Premium Gloss (PG) and the Gloss (G) cannot be achieved on one page, because, according to Fig. 15, the glosser 80 is turned ON for the Premium Gloss (PG), and the glosser 80 is turned OFF for Gloss (G).

When a plurality of different surface effect types are designated in one page but cannot be achieved on one page, in the first embodiment, the DFE 50 substitutes one of the surface effect types that cannot be achieved in one page with a surface effect other than the surface effect thus designated.

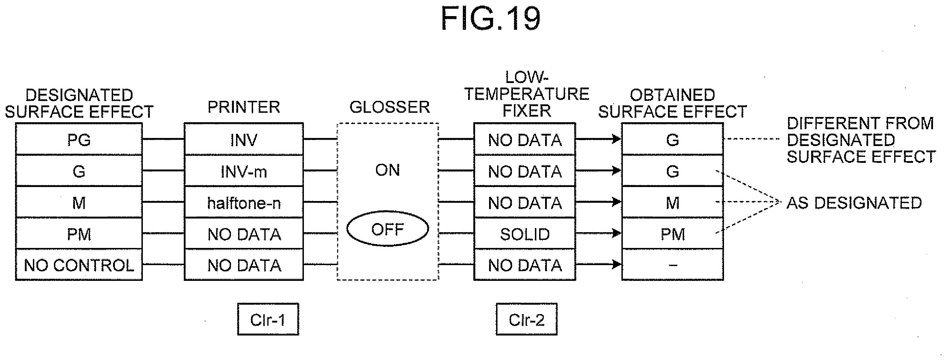

For example, as illustrated in Fig. 19, when four effects of the Premium Gloss (PG), the Gloss (G), the Matt (M), and the Premium Matt (PM) are designated in the same page, the DFE 50 turns OFF the glosser 80. At the same time, the DFE 50 causes each of the surface effects to be achieved in the area determined to be designated with the Gloss surface effect, in the area determined to be designated with the Matt surface effect, and in the area determined to be designated with the Premium Matt surface effect in the gloss control plane, based on the density values. In the area determined to be designated with the Premium Gloss surface effect, the DFE 50 selects the Gloss as the substitute surface effect. For the area to be determined to be designated with the Premium Gloss surface effect, the DFE 50 generates any one of inverse masks A, B, and C as the image data of a clear toner plane to be used by the printer 70 (corresponding to INV in Fig. 19), using the image data corresponding to such an area in each piece of the eight-bit image data of the CMYK colors, in the same manner as for Gloss. The DFE 50 does not generate any image data of a clear toner plane to be used by the low-temperature fixer 90. When the density value is in a range from "248" to "255" in Fig. 15, the DFE 50 determines that the effects as the Premium Gloss Type A, and adopts the inverse mask A. INV-m in Fig. 19 corresponds to Inverse Mask 1 to Inverse Mask 4 in Fig. 15, the halftone-n in Fig. 19 corresponds to Halftone 1 to Halftone 4 in Fig. 15. On the paper sheet passed through and discharged from the printer 70, the glosser 80 having been turned OFF, and the low-temperature fixer 90 in the manner described above, the area designated with the Premium Gloss and the area designated with the Gloss is provided with the Gloss surface effect, and the area designated with the Matt is provided with the surface effect Matt. The area designated with the Premium Matt is provided with the surface effect Premium Matt. No surface effect is provided to the area not designated as an area to be provided with a surface effect.

In the manner described above, the DFE 50 determines if there is any post-process is to be applied by a post-processing machine using a gloss control plane specified with a density value corresponding to the type of surface effect designated by a user, based on the presence of and the type of a post-processing machine such as a glosser 80 or a low-temperature fixer 90 subsequent to the printer 70, and generates image data of a clear toner plane to cause the clear toner to be attached, as required, In this manner, the image forming systems in different configurations can generate image data of a clear toner plane to provide the same surface effect, and various types of surface effect can be provided to an image realized by a CMYK toner image by causing clear toner to be attached using the image data of the clear toner plane. Therefore, a user can achieve desired surface effects using clear toner on a printout on which an image is formed, without making any cumbersome operations.

Furthermore, in the first embodiment, because a density value to identify a surface effect is specified to each pixel included in the image data of a gloss control plane, a plurality of types of surface effect can be provided to a single page of a paper sheet.

Second Embodiment

A second embodiment of the present invention will now be explained. The parts that are the same as those in the first embodiment will be explained using the same reference numerals, or explanations thereof will be omitted hereunder.

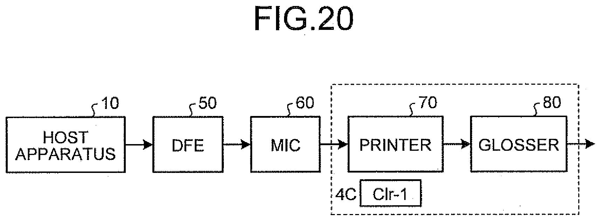

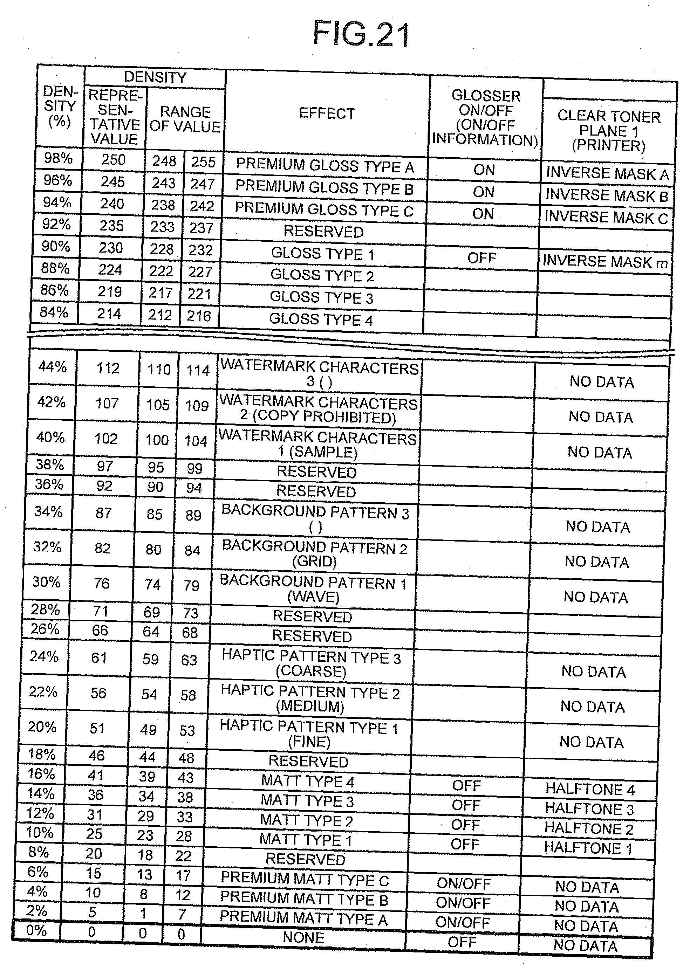

In the second embodiment, the post-processing machine connected to the printer 70 included in the image forming system is different from those in the first embodiment. Fig. 20 is a schematic illustrating an example of a configuration of the image forming system according to the second embodiment. This image forming system according to the second embodiment is configured as a connection of the host apparatus 10, the DFE 50, the MIC 60, the printer 70, and the glosser 80 that serves as a post-processing machine. The functions and the configuration of the host apparatus 10 are the same as those in the first embodiment. Fig. 21 is a schematic illustrating an example of a part of a data structure of a surface effect selection table corresponding to the configuration of the image forming system according to the second embodiment. The surface effect selection table specifies a corresponding relationship between a density value and a surface effect type, and the ON/OFF information indicating to turn ON or OFF the glosser 80 as control information related to a post-processing machine, which depends on the configuration of the image forming system, and the image data of a clear toner plane to be used by the printer 70. Because the configuration in the second embodiment does not include the low-temperature fixer 90 illustrated in Fig. 1, the Premium Matt cannot be achieved as a surface effect. Therefore, a substitute surface effect could be achieved for the Premium Matt, correspondingly to ON or OFF of the glosser 80, without causing the DFE 50 to generate any image data of a clear toner plane. Specifically, when the glosser 80 is set to ON, the Gloss surface effect could be obtained as a result. When the glosser 80 is set to OFF, the Matt surface effect could be obtained as a result.

The clear processing 56 in the DFE 50 determines the surface effect associated to each of the pixel values represented in the gloss control plane, determines if the glosser 80 is to be turned ON or OFF, and determines what kind of image data of a clear toner plane is to be used by the printer 70, by referring to the surface effect selection table. The clear processing 56 then generates the image data of a clear toner plane, as required, and outputs the image data and the ON/OFF information for the glosser 80 based on the determination results. Among the image data received from the DFE 50, the MIC 60 outputs the image data of the CMYK color planes to the printer 70, outputs the image data of a clear toner plane to be used by the printer 70, if any, to the printer 70, and turns ON or OFF the glosser 80 using the ON/OFF information received from the DFE 50.

The gloss controlling process according to the second embodiment will now be explained. Although the flowchart of this process is omitted because the process itself is substantially the same as that illustrated in Fig. 17, the process at Steps S4 to S7 is different from that in the first embodiment. The process at Steps S4 to S7 will now be explained in detail, using a specific example corresponding to each of the surface effect types. Each type of the Premium Gloss and the Gloss to achieve gloss and the Matt and the Premium Matt to suppress gloss will be explained specifically. Explained herein is an example in which the same surface effect type is designated in one page. Steps S1 to S3 are the same as those described above. At Step S4, the clear processing 56 in the DFE 50 determines that the surface effect designated to the pixels specified with a density value from "238" to "255" is the Premium Gloss, by referring to the surface effect selection table illustrated in Fig. 21 using the density value represented in each pixel included in the eight-bit gloss control plane. For this surface effect type, the clear processing 56 in the DFE 50 generates an inverse mask based on Equation 1, for example, as the image data of a clear toner plane to be used by the printer 70, using the image data corresponding to such an area in each piece of the eight-bit image data of the CMYK colors. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes being image data and the image data of a clear toner plane to be used by the printer 70 received from the DFE 50 to the printer 70, and turns ON the glosser 80 using the ON/OFF information received from the DFE 50. The printer 70 then forms an image attached with the CMYK toners and the clear toner on a paper sheet, using the image data of the CMYK color planes and the image data of the clear toner plane received from the MIC 60. The glosser 80 then heats and applies the high pressure to the paper sheet at the high temperature. As a result, a strong gloss is obtained from the surface of the entire area defined by the image data, and the Premium Gloss as a surface effect is obtained. When a density value of at least one of the CMYK toners is set to all of the pixels in the area defined by the image data, despite the area designated with the Premium Gloss surface effect is part of the area defined by the image data, the surface effect of the Premium Gloss cannot be partially provided, because the configuration in the second embodiment does not include the low-temperature fixer 90 or a normal fixer as a post-processing machine, in addition to the glosser 80. Therefore, the Premium Gloss is obtained from the surface of the entire area defined by the image data.

At Step S4, the clear processing 56 in the DFE 50 determines that the surface effect designated to the pixels specified with a density value from "212" to "232" is the Gloss, by referring to the surface effect selection table using the density value represented in each pixel included in the eight-bit gloss control plane. In particular, the clear processing 56 determines that the surface effect designated to the pixels specified with a density value from "228" to "232" is the Gloss Type 1. For this surface effect type, the clear processing 56 in the DFE 50 generates an inverse mask m as the image data of a clear toner plane to be used by the printer 70, using the image data corresponding to such an area in each piece of the eight-bit image data of the CMYK colors. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn OFF the glosser 80 to the MIC 60. The MIC 60 outputs the image data of the CMYK color planes being image data and the image data of a clear toner plane to be used by the printer 70 received from the DFE 50 to the printer 70, and turns OFF the glosser 80 using the ON/OFF information received from the DFE 50. The printer 70 then forms an image attached with the CMYK toners and the clear toner on a paper sheet, using the image data of the CMYK color planes and the image data of a clear toner plane to be used by the printer 70 received from the MIC 60. Because the glosser 80 is turned OFF, the high pressure is not applied to the paper sheet at the high temperature. As a result, a moderately strong gloss is obtained from the surface of the area, and the Gloss as a surface effect is obtained.

At Step S4, the clear processing 56 in the DFE 50 determines that the surface effect designated to the pixels specified with a density value from "23" to "43" is the Matt, by referring to the surface effect selection table using the density value represented in each pixel included in the eight-bit gloss control plane. For this surface effect type, the clear processing 56 in the DFE 50 generates image data representing halftone dots as the image data of a clear toner plane to be used by the printer 70. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes being image data and the image data of a clear toner plane to be used by the printer 70 received from the DFE 50 to the printer 70, and turns OFF the glosser 80 using the ON/OFF information received from the DFE 50. The printer 70 then forms an image attached with the CMYK toners and the clear toner on a paper sheet, using the image data of the CMYK color planes and the image data of the clear toner plane received from the MIC 60. Because the glosser 80 is turned OFF, the high pressure is not applied to the paper sheet at the high temperature. As a result, the gloss of the surface of the area is moderately suppressed, and the Matt as a surface effect is obtained.

At Step S4, the clear processing 56 in the DFE 50 determines that the surface effect designated to the pixels specified with a density value from "1" to "17" is the Premium. Matt, by referring to the surface effect selection table using the density value represented in each pixel included in the eight-bit gloss control plane. In such a case, if any other surface effect is designated in the same page, the clear processing 56 in the DFE 50 generates ON/OFF information for the glosser 80 according to the surface effect. The clear processing 56 does not generate any image data of a clear toner plane to be used by the printer 70, regardless of whether the glosser 80 is set to ON or OFF. At Step S7, the si3 unit 57 in the DFE 50 integrates the two-bit image data of each of the CMYK colors applied with the halftoning process obtained at Step S3, and outputs the image data thus integrated and the ON/OFF information indicating to turn ON or OFF the glosser 80 to the MIC 60. The MIC 60 outputs the image data of the CMYK color planes received from the DFE 50 to the printer 70, and turns ON or OFF the glosser 80 using the ON/OFF information received from the DFE 50. The printer 70 then forms an image attached with the CMYK toners on the paper sheet, using the image data of the CMYK color planes received from the MIC 60. When the glosser 80 is set to ON, the glosser 80 is caused to apply high pressure to the paper sheet at the high temperature. As a result, a moderately strong gloss is obtained from the surface of the area, and the Gloss as a surface effect could be obtained in substitution of the Premium Matt. By contrast, when the glosser 80 is set to OFF, the glosser 80 does not apply high pressure to the paper sheet at the high temperature, and, as a result, the gloss of the surface of the area is moderately suppressed, and the Matt could be obtained as a surface effect in substitution of the Premium Matt.

In the second embodiment, when different types of surface effects are designated in one page, such surface effects can be achieved in the same manner as in the first embodiment. In other words, when a plurality of surface effects are designated in one page, a density value corresponding to each of the surface effects illustrated in Fig. 21 is set to pixels in the area to be provided with the corresponding surface effect type in the image data of a gloss control plane. Therefore, the DFE 50 can simply determine the range of pixels specified with the same density as the area to be provided with the corresponding surface effect in the image data of the gloss control plane, and each of such surface effects can be easily realized on one page.

In the second embodiment as well, when a plurality of surface effect types are designated via density values in one page of the image data of a gloss control plane, because ON and OFF of the glosser 80 cannot be switched in one page, there are some surface effect types that can be achieved on the page, and some other surface effect types that cannot be achieved on the same page.

In the second embodiment using a configuration including the printer 70 and the glosser 80, when the surface effects the Premium Gloss (PG) and the Premium Matt (PM) are designated in one page, these two types of surface effects can both be achieved on one page, because, according to Fig. 21, the glosser 80 is turned ON for the Premium Gloss (PG), and the glosser 80 is turned ON or OFF for Premium Matt (PM) accordingly to the other surface effect designated on the same page.

In the configuration according to the second embodiment, when the surface effects of the Gloss (G), the Matt (M), and the Premium Matt (PM) are designated in one page, these three types of surface effects can all be achieved on one page, because, according to Fig. 21, the glosser 80 is turned OFF for Gloss (G) and Matt (M), and the glosser 80 is turned ON or OFF for Premium Matt (PM) accordingly to the other surface effect designated on the same page.

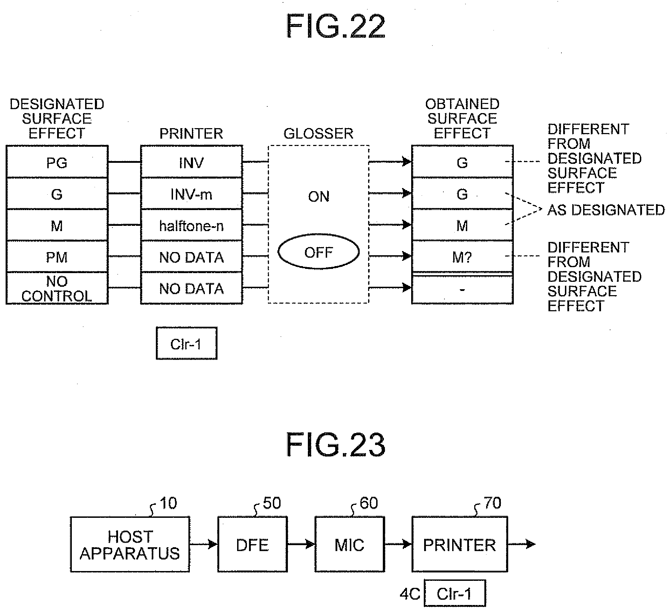

Explained now is an example in which some surface effect type is substituted by another surface effect other than the designated one, when different surface effect types are designated in one page. In the second embodiment, for example, as illustrated in Fig. 22, the DFE 50 turns OFF the glosser 80, and achieves the Gloss surface effect and the Matt surface effect, for the area determined to be designated with the Gloss surface effect and for the area determined to be designated with the Matt surface effect, respectively, via the density values in the same page of a gloss control plane. For the area determined to be designated with the Premium Gloss surface effect, the DFE 50 selects the Gloss as a substitute surface effect. For the area determined to be designated with the Premium Matt surface effect, the DFE 50 does not generate any image data of a clear toner plane, as mentioned earlier, and, as a result, the Matt could be obtained as a surface effect. For the area determined to be designated with the Premium Gloss surface effect, the DFE 50 then generates the inverse mask 1 as the image data of a clear toner plane to be used by the printer 70 using the image data corresponding to such an area in each piece of the eight-bit image data of the CMYK colors in the same manner as for the Gloss. On the paper sheet passed through and discharged from the printer 70 and the glosser 80 having been turned OFF in the manner described above, the area designated with the Premium Gloss and the area designated with the Gloss is provided with the Gloss surface effect, and the area designated with the Matt is provided with the Matt surface effect. The area designated with the Premium Matt could be provided with the Matt surface effect. None of these surface effects are provided to the area not designated to be provided with any surface effect.

The configuration described above also enables a user to achieve desired surface effects using clear toner on a printout on which an image is formed, without making any cumbersome operations.

Third Embodiment

A third embodiment of the present invention will now be explained. The parts that are the same as those in the first embodiment or the second embodiment will be explained using the same reference numerals, or explanations thereof will be omitted hereunder.

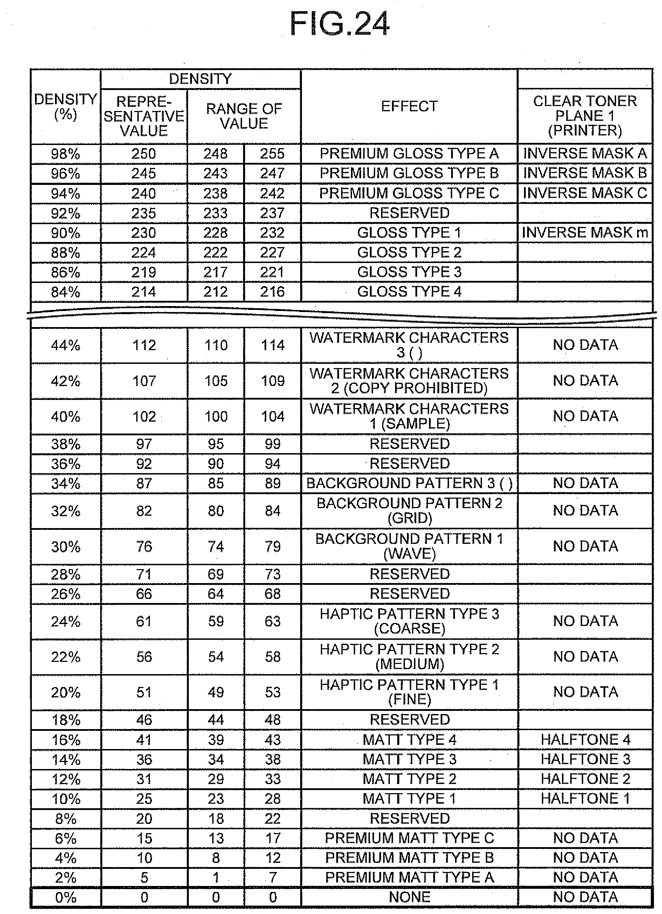

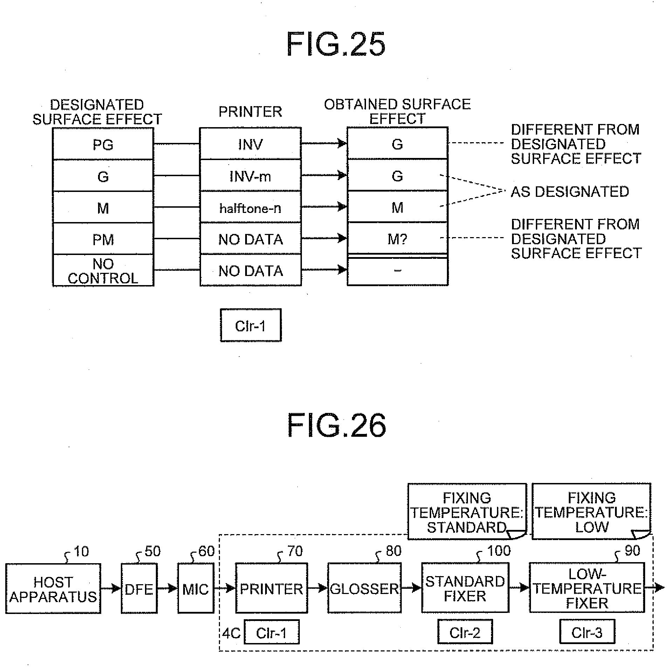

In the third embodiment, the post-processing machine connected to the printer 70 included in the image forming system is different from that in the first embodiment and the second embodiment. Fig. 23 is a schematic illustrating an example of a configuration of an image forming system according to the third embodiment. This image forming system according to the third embodiment is configured as a connection of the host apparatus 10, the DFE 50, the MIC 60, and the printer 70. The functions and the configuration of the host apparatus 10 are the same as those in the first embodiment. Fig. 24 is a schematic illustrating an example of a part of a data structure of a surface effect selection table corresponding to the configuration of the image forming system according to the third embodiment. The surface effect selection table specifies a corresponding relationship between a density value and a surface effect type, and the image data of a clear toner plane to be used by the printer 70. In the configuration according to the third embodiment, the Premium Gloss effect cannot be achieved as a surface effect. Therefore, although the clear toner is attached to the area designated with the Premium Gloss effect as a surface effect using the inverse mask 1 specified in the surface effect selection table, the Gloss is achieved as the resultant surface effect. Furthermore, the Premium Matt cannot be achieved as a surface effect. Therefore, the DFE 50 does not generate any image data of a clear toner plane for the Premium Matt, and the Matt could be achieved as the resultant substitute surface effect. Fig. 25 is a schematic for comparing a surface effect type designated, the image data of a clear toner plane to be used by the printer 70, and the surface effect actually achieved in the third embodiment.

The clear processing 56 in the DFE 50 determines the surface effect associated to each pixel value represented in the gloss control plane by referring to the surface effect selection table, and also determines what kind of image data of a clear toner plane is to be used by the printer 70. The clear processing 56 then generates the image data of the clear toner plane as required, and outputs the image data based on the determination results. Among the image data received from the DFE 50, the MIC 60 outputs the image data of the CMYK color planes to the printer 70, and outputs the image data of a clear toner plane to be used by the printer 70, if any, to the printer 70.

The gloss controlling process according to the third embodiment will now be explained. Although the flowchart of this process is omitted because the process itself is substantially the same as that illustrated in Fig. 17, the process at Steps S4 and S5 is different from that in the first embodiment. The process at Steps S4 and S5 will now be explained in detail, using a specific example corresponding to each of the surface effect types. Explained specifically is each type of the Premium Gloss and the Gloss to achieve gloss and each type of the Matt and the Premium Matt to suppress gloss. In the third embodiment, the process is the same between when the same surface effect type is designated in one page and when different types of the Premium Gloss are designated in one page. Steps S1 to S3 are the same as those described above. At Step S4, the clear processing 56 in the DFE 50 determines that the surface effect designated to the pixels specified with a density value from "238" to "255" is the Premium Gloss, by referring to the surface effect selection table illustrated in Fig. 24, as an example, using the density value represented in each pixel included in the eight-bit gloss control plane. For this surface effect type, the clear processing 56 in the DFE 50 generates an inverse mask based on Equation 1, for example, as the image data of a clear toner plane to be used by the printer 70, using the image data corresponding to such an area in each piece of the eight-bit image data of the CMYK colors. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes being image data and the image data of a clear toner plane to be used by the printer 70 received from the DFE 50 to the printer 70. The printer 70 then forms an image attached with the CMYK toners and the clear toner on a paper sheet, using the image data of the CMYK color planes and the image data of the clear toner plane received from the MIC 60. As a result, a moderately strong gloss is obtained from the surface of the area, and the Gloss as a surface effect is obtained in substitution of the Premium Gloss.

At Step S4, the clear processing 56 in the DFE 50 determines that the surface effect designated to the pixels specified with a density value from "212" to "232" is the Gloss, by referring to the surface effect selection table using the density value represented in each pixel included in the eight-bit gloss control plane. In particular, the clear processing 56 determines that the surface effect designated to the pixels specified with a density value from "228" to "232" is the Gloss Type 1. For this surface effect type, the clear processing 56 in the DFE 50 generates the inverse mask m as the image data of a clear toner plane to be used by the printer 70, using the image data corresponding to such an area in each piece of the eight-bit image data of the CMYK colors. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated to the MIC 60. The MIC 60 outputs the image data of the CMYK color planes being image data and the image data of a clear toner plane to be used by the printer 70 received from the DFE 50 to the printer 70. The printer 70 then forms an image attached with the CMYK toners and the clear toner on a paper sheet, using the image data of the CMYK color planes and the image data of a clear toner plane to be used by the printer 70 received from the MIC 60. As a result, a moderately strong gloss is obtained from the surface of the area, and the Gloss as a surface effect is obtained.

At Step S4, the clear processing 56 in the DFE 50 determines that the surface effect designated to the pixels specified with a density value from "23" to "43" is the Matt, by referring to the surface effect selection table using the density value represented in each pixel included in the eight-bit gloss control plane. For this surface effect type, the clear processing 56 in the DFE 50 generates image data representing halftone dots as the image data of a clear toner plane to be used by the printer 70. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated to the MIC 60. The MIC 60 outputs the image data of the CMYK color planes being image data and the image data of a clear toner plane to be used by the printer 70 received from the DFE 50 to the printer 70. The printer 70 then forms an image attached with the CMYK toners and the clear toner on a paper sheet, using the image data of the CMYK color planes and the image data of the clear toner plane received from the MIC 60. As a result, the gloss of the surface of the area is moderately suppressed, and the Matt as a surface effect is obtained.

At Step S4, the clear processing 56 in the DFE 50 determines that the surface effect designated to the pixels specified with a density value from "1" to "17" is the Premium Matt, by referring to the surface effect selection table using the density value represented in each pixel included in the eight-bit gloss control plane. In such a case, if any other surface effect is designated in the same page (this case will be explained later), the clear processing 56 in the DFE 50 generates ON/OFF information for the glosser 80 accordingly, without generating any image data of a clear toner plane to be used by the printer 70 regardless of whether the glosser 80 is set to ON or OFF. At Step S5, the si3 unit 57 in the DFE 50 then integrates the two-bit image data of each of the CMYK colors applied with the halftoning process obtained at Step S3, and outputs the image data thus integrated to the MIC 60. The MIC 60 outputs the image data of the CMYK color planes received from the DFE 50 to the printer 70. The printer 70 then forms an image attached with the CMYK toners on the paper sheet, using the image data of the CMYK color planes received from the MIC 60. As a result, the gloss of the surface of the area is moderately suppressed, and the Matt could be obtained as a surface effect, in substitution of the Premium Matt.

Such a configuration also allows a user to achieve desired surface effects, using clear toner on a printout on which an image is formed, without making any cumbersome operations.

Fourth Embodiment

A fourth embodiment of the present invention will now be explained. The parts that are the same as those in the first to the third embodiments will be explained using the same reference numerals, or explanations thereof will be omitted hereunder.

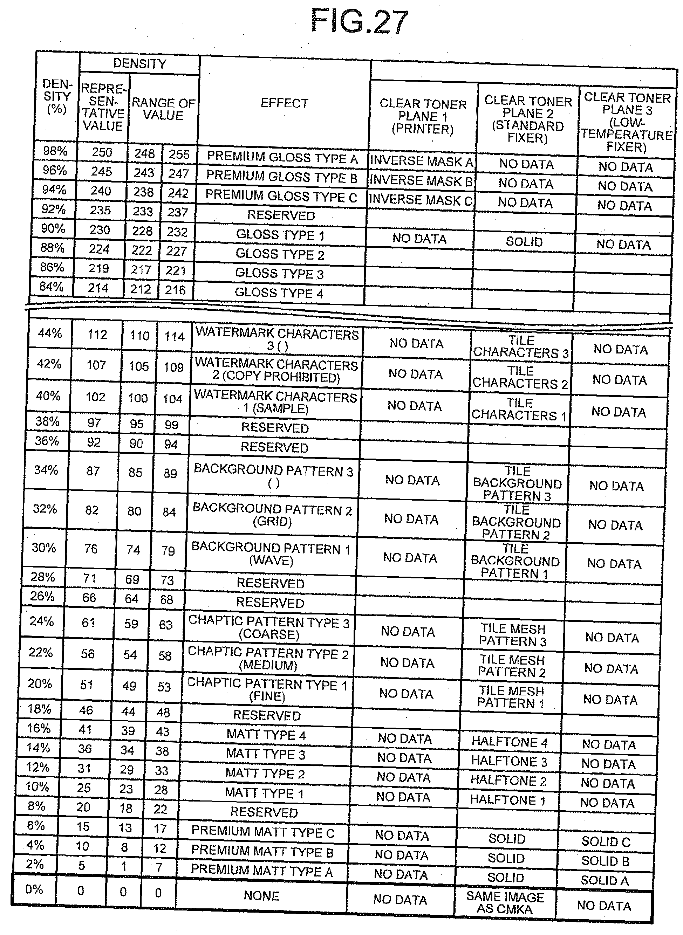

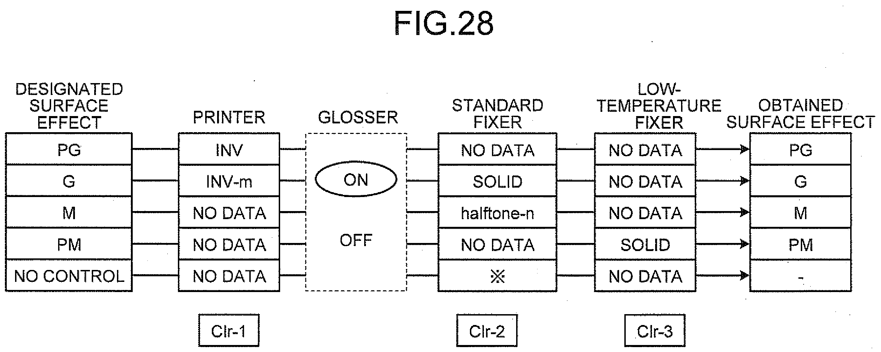

In the fourth embodiment, the post-processing machine connected to the printer 70 included in the image forming system is different from that in the first to the third embodiments. A plurality of post-processing machines, as well as the glosser 80, are connected to the printer 70. Fig. 26 is a schematic illustrating an example of a configuration of the image forming system according to the fourth embodiment. The image forming system according to the fourth embodiment is configured as a connection of the host apparatus 10, the DFE 50, the MIC 60, the printer 70, and the glosser 80, a standard fixer 100, and the low-temperature fixer 90 that are serving as the post-processing machines. The functions and the configuration of the host apparatus 10 are the same as those in the first embodiment. Fig. 27 is a schematic illustrating an example of a part of a data structure of a surface effect selection table corresponding to the configuration of the image forming system according to the fourth embodiment. The surface effect selection table specifies a corresponding relationship between a density value and a surface effect type, the ON/OFF information indicating to turn ON or OFF the glosser 80 as control information related to a post-processing machine, which is dependent on the configuration of the image forming system, image data of a clear toner plane to be used by the printer 70, image data of a clear toner plane to be used by the standard fixer 100, and image data of the clear toner plane to be used by the low-temperature fixer 90. Fig. 28 is a schematic for comparing a surface effect type designated, the image data of a clear toner plane to be used by the printer 70, and the surface effect actually achieved in the fourth embodiment.

The clear processing 56 in the DFE 50 determines the surface effect associated to a pixel value represented in the gloss control plane by referring to the surface effect selection table, determines if the glosser 80 is to be turned ON or OFF, and determines what kind of image data of a clear toner plane is to be used by each of the printer 70, the standard fixer 100, and the low-temperature fixer 90. The clear processing 56 then generates the image data of a clear toner plane as required, and outputs the image data and the ON/OFF information for the glosser 80 to the MIC 60, based on the determination results.

The MIC 60 outputs the image data of the CMYK color planes and the image data of a clear toner plane to be used by the printer 70, if any, received from the DFE 50 to the printer 70. The MIC 60 also turns ON or OFF the glosser 80 using the ON/OFF information received from the DFE 50, and outputs the image data of a clear toner plane to be used by the printer 70, if any, to the printer 70. The MIC 60 also outputs the image data of a clear toner plane to be used by the standard fixer 100, if any, to the standard fixer 100, and outputs the image data of a clear toner plane to be used by the low-temperature fixer 90, if any, to the low-temperature fixer 90.

The standard fixer 100 forms a toner image with clear toner using the image data of a clear toner plane received from the MIC 60, superimposes the toner image on the paper sheet passed through the glosser 80, and fixes the image onto the paper sheet by heating and applying pressure at the standard temperature. The low-temperature fixer 90 forms a toner image with clear toner using the image data of a clear toner plane received from the MIC 60, superimposes the image on the paper sheet passed through the standard fixer 100, and fixes the image by heating and applying pressure at temperature lower than the standard temperature.

A gloss controlling process according to the fourth embodiment will now be explained. Although the flowchart of this process is omitted because the process itself is substantially the same as that illustrated in Fig. 17, the process at Steps S4 to S7 is different from that in the first embodiment. The process at Steps S4 to S7 will now be explained in detail, using a specific example corresponding to each of the surface effect types. Each type of the Premium Gloss and the Gloss to achieve gloss and each type of the Matt and the Premium Matt to suppress gloss will be explained specifically. Explained herein is an example in which the same type of surface effect is designated in one page. Steps S1 to S3 are the same as those described above. At Step S4, the clear processing 56 in the DFE 50 determines that the surface effect designated to the pixels specified with a density value from "238" to "255" is the Premium Gloss, by referring to the surface effect selection table illustrated in Fig. 27 using the density value represented in each pixel included in the eight-bit gloss control plane. In such a case, the clear processing 56 in the DFE 50 further determines if the area designated with the Premium Gloss surface effect corresponds to the entire area defined by the image data. If the determination result is Yes, the clear processing 56 in the DFE 50 generates an inverse mask based on Equation 1, for example, as the image data of a clear toner plane to be used by the printer 70, using the image data corresponding to such an area in each piece of the eight-bit image data of the CMYK colors. At Step S7, the si3 unit 57 in the DFE 50 integrates the image data of a clear toner plane to be used by the printer 70 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes being image data and the image data of a clear toner plane to be used by the printer 70 received from the DFE 50 to the printer 70, and turns ON the glosser 80 using the ON/OFF information received from the DFE 50. The printer 70 then forms an image attached with the CMYK toners and the clear toner on a paper sheet, using the image data of the CMYK color planes and the image data of the clear toner plane received from the MIC 60. The glosser 80 then heats and applies the high pressure to the paper sheet at the high temperature. Because no image data of a clear toner plane is output to the standard fixer 100, the paper sheet is discharged without causing the standard fixer 100 to attach any clear toner. Because no image data of a clear toner plane is output to the low-temperature fixer 90 as well, the paper sheet is discharged without causing the low-temperature fixer 90 to attach any clear toner. As a result, a strong gloss is obtained from the surface of the entire area defined by the image data, and the Premium Gloss as a surface effect is obtained.

By contrast, if the DFE 50 determines that the area designated with the Premium Gloss surface effect corresponds to a part of the area defined by the image data, the DFE 50 generates the inverse mask based on Equation 1 as the image data of a clear toner plane to be used by the printer 70 for the area designated with the Premium Gloss effect as a surface effect, and generates a solid mask based on Equation 2 as the image data of a clear toner plane to be used by the low-temperature fixer 90, for the area other than the area designated with the Premium Gloss effect as a surface effect. At Step S7, the si3 unit 57 in the DFE 50 then integrates the image data of a clear toner plane to be used by the printer 70, the image data of the clear toner plane to be used by the low-temperature fixer 90, and the two-bit image data of each of the CMYK colors applied with the halftoning process obtained at Step S3, and outputs the image data thus integrated and the ON/OFF information indicating to turn ON the glosser 80 to the MIC 60. Among the image data received from the DFE 50, the MIC 60 outputs the image data of the CMYK color planes and the image data of a clear toner plane to be used by the printer 70 to the printer 70, and turns ON the glosser 80 using the ON/OFF information received from the DFE 50. Among the image data received from the DFE 50, the MIC 60 outputs the image data of the clear toner plane to be used by the low-temperature fixer 90 to the low-temperature fixer 90. The printer 70 then forms an image attached with the CMYK toners and the clear toner on a paper sheet, using the image data of the CMYK color planes and the image data of the clear toner plane received from the MIC 60. Subsequently, the glosser 80 heats and applies the high pressure to the paper sheet at the high temperature. Because no image data of a clear toner plane is output to the standard fixer 100, the paper sheet is discharged without causing the standard fixer 100 to attach any clear toner. The low-temperature fixer 90 then forms a toner image with clear toner using the image data of a clear toner plane received from the MIC 60, superimposes the image on the paper sheet passed through the glosser 80 and the standard fixer 100, and fixes the image onto the paper sheet by heating and applying pressure at the low temperature. As a result, the total amount of attached toner including each of the CMYK toners and the clear toner is compressed evenly across the area designated with the Premium Gloss, and a strong gloss is obtained from the surface of the area. By contrast, in the area other than the area designated with the Premium Gloss, the surface unevenness is achieved by causing the clear toner to be attached using the solid mask, after the pressure is applied by the glosser 80, so that the gloss of the surface of the area is suppressed.

At Step S4, the clear processing 56 in the DFE 50 determines that the surface effect designated to the pixels specified with a density value from "212" to "232" is the Gloss, by referring to the surface effect selection table using the density value represented in each pixel included in the eight-bit gloss control plane. In particular, the clear processing 56 determines that the surface effect designated to the pixels specified with a density value from "228" to "232" is the Gloss Type 1. For this surface effect type, the clear processing 56 in the DFE 50 generates a solid mask, using the image data corresponding to such an area in each piece of the eight-bit image data of the CMYK colors, as the image data of a clear toner plane to be used by the standard fixer 100. At Step S7, the si3 unit 57 in the DFE 50 integrates the image data of a clear toner plane to be used by the standard fixer 100 and the two-bit image data of each of the CMYK colors applied with the halftoning process obtained at Step S3, and outputs the image data thus integrated and the ON/OFF information indicating to turn OFF the glosser 80 to the MIC 60. Among the image data received from the DFE 50, the MIC 60 outputs the image data of the CMYK color planes to the printer 70, turns ON the glosser 80 using the ON/OFF information received from the DFE 50, and outputs the image data of a clear toner plane to be used by the standard fixer 100 to the standard fixer 100. The printer 70 then forms an image attached with the CMYK toners on the paper sheet, using the image data of the CMYK color planes received from the MIC 60. Subsequently, the glosser 80 heats and applies the high pressure to the paper sheet at the high temperature. The standard fixer 100 then forms a toner image with clear toner using the image data of a clear toner plane received from the MIC 60, superimposes the toner image on the paper sheet passed through the glosser 80, and fixes the image onto the paper sheet by heating and applying pressure at the standard temperature. Because no image data of the clear toner plane is output to the low-temperature fixer 90, the paper sheet is discharged without causing the low-temperature fixer 90 to attach any clear toner. As a result, a moderately strong gloss is obtained from the surface of the area, and the Gloss as a surface effect is obtained.

At Step S4, the clear processing 56 in the DFE 50 determines that the surface effect designated to the pixels specified with a density value from "23" to "43" is the Matt, by referring to the surface effect selection table using the density value represented in each pixel included in the eight-bit gloss control plane. For this surface effect type, the clear processing 56 in the DFE 50 generates image data representing halftone dots as the image data of a clear toner plane to be used by the standard fixer 100. At Step S7, the si3 unit 57 in the DFE 50 integrates the image data of a clear toner plane to be used by the standard fixer 100 and the two-bit image data of each of the CMYK colors applied with the halftoning process obtained at Step S3, and outputs the image data thus integrated and the ON/OFF information indicating to turn ON the glosser 80 to the MIC 60. Among the image data received from the DFE 50, the MIC 60 outputs the image data of the CMYK color planes to the printer 70, turns ON the glosser 80 using the ON/OFF information received from the DFE 50, and outputs the image data of a clear toner plane to be used by the standard fixer 100 to the standard fixer 100. The printer 70 then forms an image attached with the CMYK toners on the paper sheet, using the image data of the CMYK color planes received from the MIC 60. Subsequently, the glosser 80 heats and applies the high pressure to the paper sheet at the high temperature. The standard fixer 100 then forms a toner image with clear toner using the image data of a clear toner plane received from the MIC 60, superimposes the toner image on the paper sheet passed through the glosser 80, and fixes the image onto the paper sheet by heating and applying pressure at the standard temperature. Because no image data of the clear toner plane is output to the low-temperature fixer 90, the paper sheet is discharged without causing the low-temperature fixer 90 to attach any clear toner. As a result, the gloss of the surface of the area is moderately suppressed, and the Matt as a surface effect is obtained.

At Step S4, the clear processing 56 in the DFE 50 also determines that the surface effect designated to the pixels specified with a density value from "1" to "17" is the Premium Matt, by referring to the surface effect selection table using the density value represented in each pixel included in the eight-bit gloss control plane. For this surface effect type, the clear processing 56 in the DFE 50 generates a solid mask as the image data of a clear toner plane to be used by the low-temperature fixer 90. At Step S7, the si3 unit 57 in the DFE 50 integrates the image data of the clear toner plane to be used by the low-temperature fixer 90 and the two-bit image data of each of the CMYK colors applied with the halftoning process obtained at Step S3, and outputs the image data thus integrated and the ON/OFF information indicating to turn ON the glosser 80 to the MIC 60. The MIC 60 outputs the image data of the CMYK color planes received from the DFE 50 to the printer 70, turns ON the glosser 80 using the ON/OFF information received from the DFE 50, and outputs the image data of the clear toner plane to be used by the low-temperature fixer 90 to the low-temperature fixer 90. The printer 70 then forms an image attached with the CMYK toners on the paper sheet, using the image data of the CMYK color planes received from the MIC 60. Subsequently, the glosser 80 heats and applies the high pressure to the paper sheet at the high temperature. Because no image data of a clear toner plane is output to the standard fixer 100, the paper sheet is discharged without causing the standard fixer 100 to attach any clear toner. The low-temperature fixer 90 forms a toner image with clear toner using the image data of a clear toner plane received from the MIC 60, superimposes the toner image on the paper sheet passed through the glosser 80, and fixes the image onto the paper sheet by heating and applying pressure at the low temperature. As a result, the gloss of the surface of the area is suppressed, and the Premium Matt as a surface effect is obtained.

When different types of surface effects are designated in one page in the configuration of the image forming system according to the fourth embodiment, all of such surface effects can be realized exactly in the manner designated, as illustrated in Fig. 28.

This configuration also allows a user to achieve desired surface effects, using clear toner on a printout on which an image is formed, without making any cumbersome operations.

Fifth Embodiment

In the first to the fourth embodiments, the plane data generating unit 122 and the print data generating unit 123 are included in the host apparatus 10, and the clear processing 56 is included in the DFE 50. Furthermore, the host apparatus 10 is configured to perform the plane data generating process to generate the color plane data, the clear plane data, and the gloss control plane data, and the process to generate print data, and the DFE 50 is configured to perform the process of generating the clear toner plane data. However, the configuration of the image forming system is not limited thereto.

In other words, it is also possible to configure the image forming system in a manner so that a plurality of processes by one apparatus are performed by one or more apparatuses connected to the one apparatus over the network.

As an example of such a configuration, in an image forming system according to a fifth embodiment of the present invention, some of these functions of the host apparatus and the DFE are implemented on a server apparatus in a network.

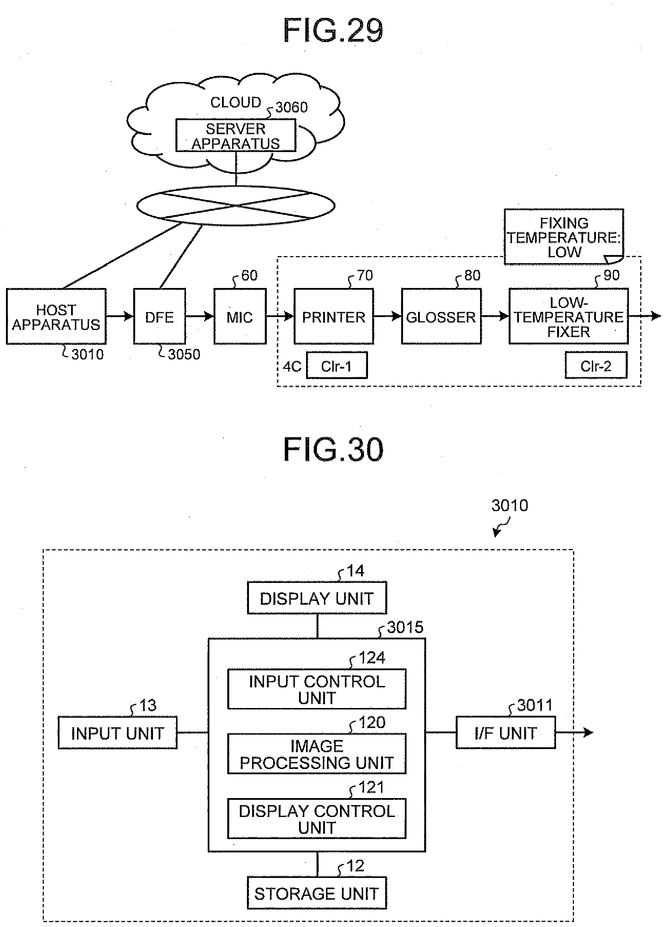

Fig. 29 is a schematic illustrating such a configuration of the image forming system according to a fifth embodiment of the present invention. As illustrated in Fig. 29, the image forming system according to the fifth embodiment includes a host apparatus 3010, a DFE 3050, the MIC 60, the printer 70, the glosser 80, the low-temperature fixer 90, and a server apparatus 3060 provided in a cloud. Post-processing apparatus such as the glosser 80 and the low-temperature fixer 90 are not limited thereto.

In the configuration according to the fifth embodiment, the host apparatus 3010 and the DFE 60 are connected to the server apparatus 3060 over a network such as the Internet. In the fifth embodiment, the plane data generating unit and the print data generating unit included in the host apparatus 10 in the first embodiment and the clear processing included in the DFE 50 in the first embodiment are provided to the server apparatus 3060.

The host apparatus 3010, the DFE 3050, the MIC 60, the printer 70, the glosser 80, and the low-temperature fixer 90 are connected in the same manner as in the first embodiment.

In other words, specifically, in the fifth embodiment, the host apparatus 3010 and the DFE 3050 are connected to the server apparatus 3060 provided in singularity over a network such as the Internet (cloud), and the server apparatus 3060 is provided with a plane data generating unit 3062, a print data generating unit 3063, and a clear processing 3066. The server apparatus 3060 is then configured to perform the plane data generating process to generate the color plane data, the clear plane data, and the gloss control plane data, the process of generating the print data, and the process of generating the clear toner plane data.

To begin with, the host apparatus 3010 according to the fifth embodiment will be explained. Fig. 30 is a block diagram illustrating a functional configuration of the host apparatus 3010 according to the fifth embodiment. The host apparatus 3010 according to the fifth embodiment includes an I/F unit 3011, the storage unit 12, the input unit 13, the display unit 14, and a control unit 3015, as illustrated in Fig. 30. The I/F unit 3011 is an interface device to allow the server apparatus 3060 to communicate with the DFE 50. The storage unit 12, the input unit 13, and the display unit 14 have the same functions and configurations as those in the host apparatus 10 according to the first embodiment.

The control unit 3015 is a computer controlling the entire host apparatus 3010, and including a CPU, a ROM, and a RAM. As illustrated in Fig. 30, the control unit 3015 mainly includes the input control unit 124, the image processing unit 120, and the display control unit 121. Among these units, the input control unit 124 and the display control unit 121 are realized by causing the CPU of the control unit 3015 to read a computer program of an operating system stored in the ROM or the like, to load the computer program onto the RAM, and to execute the computer program. The image processing unit 120 is realized by causing the CPU of the control unit 3015 to read the computer program of the image processing application stored in the ROM, to load the computer program onto the RAM, and to execute the computer program. At least some of these units may be implemented as a separate circuit (hardware). The functions and the configurations of the input control unit 124, the display control unit 121, and the image processing unit 120 are the same as those in the first embodiment.

In the host apparatus 3010 according to the fifth embodiment, in response to a user operation performed on the input unit 13 while checking image designating information to designate an image to be provided with a surface effect, that is, image data of a color plane (target image) and the target image displayed on the display unit 14, among various images (e.g., photographs, characters, shapes, and images in which these are integrated) stored in the storage unit 12, the input control unit 124 receives designation information including a designation of an area to be provided with a surface effect and the type of the surface effect, and a designation of a transparent image, such as a watermark or a texture, and the area to be applied with the transparent image, in the same manner as in the first embodiment. The server apparatus 3060 generates image data of a gloss control plane based on the area to be provided with a surface effect and the type of the surface effect, among pieces of information included in the designating information. The server apparatus 3060 generates the image data of a clear plane based on the designation of a transparent image such as a watermark or a texture and the area to be applied with the transparent image, among pieces of information included in the designating information. Generation of image data of each of these planes will be explained later.

Hereinafter, among the pieces of information included in the designating information, designations of an area to be provided with a surface effect and the type of the surface effect are sometimes simply referred to as a "designation of a surface effect". Furthermore, among the pieces of information included in the designating information, designations of a transparent image such as a watermark or a texture, and the area to be provided with the transparent image are sometimes simply referred to as a "designation of a transparent image".

The I/F unit 3011 transmits a print data generating request, as well as the image designating information and the designating information, to the server apparatus 3060. The I/F unit 3011 then receives the print data generated by the server apparatus 3060 from the server apparatus 3060 in response to the generating request. The image data of a gloss control plane, the image data of a color plane, and the image data of a clear plane are the same as those according to the first embodiment. The print data is an integration of the image data of a color plane, the image data of a gloss control plane, the image data of a clear plane, and a job command, and is the same as that according to the first embodiment illustrated in Fig. 10.

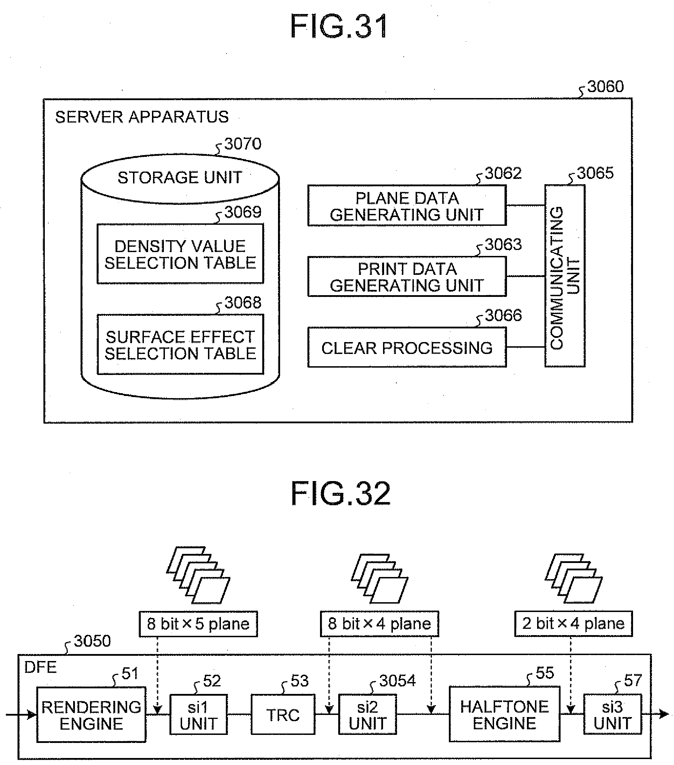

The server apparatus 3060 will now be explained. Fig. 31 is a block diagram illustrating a functional configuration of the server apparatus 3060 according to the fifth embodiment. As illustrated in Fig. 31, the server apparatus 3060 includes a storage unit 3070, the plane data generating unit 3062, the print data generating unit 3063, the clear processing 3066, and a communicating unit 3065.

The storage unit 3070 is a storage medium such as an HDD or a memory storing therein a density value selection table 3069 and a surface effect selection table 3068. The density value selection table 3069 is the same as the density value selection table 3069 according to the first embodiment explained with reference to Fig. 9. The surface effect selection table 3068 is the same as the surface effect selection table according to the first embodiment explained with reference to Fig. 11.

The communicating unit 3065 transmits and receives various types of data and requests to and from the host apparatus 3010 and the DFE 3050. More specifically, the communicating unit 3065 receives the image designating information, the designating information, and the print data generating request from the host apparatus 3010, and transmits generated print data to the host apparatus 301. The communicating unit 3065 receives the eight-bit image data of a gloss control plane, the eight-bit image data of a color plane, and a request to generate a clear toner plane from the DFE 3050, and transmits generated image data of the clear toner plane and the ON/OFF information to the DFE 3050.

The plane data generating unit 3062 has the same function as the plane data generating unit included in the host apparatus 10 according to the first embodiment, and generates the image data of a color plane, the image data of a gloss control plane, and the image data of a clear plane.

Specifically, the plane data generating unit 3062 generates the image data of a color plane based on the image designating information. In other words, when the image designating information includes a color designated by a user for a drawn object in the target image, the plane data generating unit 3062 generates the image data of a color plane correspondingly to the color designated.

When the designating information includes a designation of a transparent image, such as a watermark or a texture, other than a designation of a surface effect, and the area to be applied with the transparent image, the plane data generating unit 3062 generates image data of the clear plane enabled to identify the transparent image and the area to be applied with the transparent image in a paper sheet, based on the user designation included in the designating information.

The plane data generating unit 3062 generates image data of a gloss control plane enabled to identify the area of a paper sheet to be provided with the surface effect and the type of the surface effect by referring to the density value selection table 3069, based on designations of the area to be provided with the surface effect and the type of the surface effect included in the designating information. In the image data of a gloss control plane generated by the plane data generating unit 3062, the area to be provided with a surface effect, which is represented as a gloss control value, is designated for each drawn object included in the image data of the target image (see Figs. 4 and 13).

The print data generating unit 123 according to the fifth embodiment generates print data in the same manner as the print data generating unit included in the host apparatus 10 according to the first embodiment illustrated in Fig. 10.

The clear processing 3066 has the same function as the clear processing included in the DFE 50 according to the first embodiment. Specifically, the clear processing 3066 determines the surface effect corresponding to the density value represented by each pixel (pixel value) included in the gloss control plane, by referring to the surface effect selection table 3068, using the image data of a gloss control plane received from the DFE 3050 via the communicating unit 3065. Based on the determination, the clear processing 3066 further determines whether the glosser 80 is to be turned ON or OFF, and generates two-bit image data of a clear toner plane to cause clear toner to be attached, as required, by generating an inverse mask or a solid mask as required, using the received eight-bit image data for each of the CMYK colors. Based on the determination result of the surface effect, the clear processing 3066 generates the image data of a clear toner plane to be used by the printer 70 and the image data of the clear toner plane to be used by the low-temperature fixer 90, as required, and outputs these pieces of image data to the printer 70 and the low-temperature fixer 90, respectively. The clear processing 3066 also generates the ON/OFF information indicating to turn ON or OFF the glosser 80.

The DFE 3050 will now be explained. Fig. 32 is a block diagram illustrating a functional configuration of the DFE 3050 according to the fifth embodiment. The DFE 3050 according to the fifth embodiment mainly includes the rendering engine 51, the si1 unit 52, the TRC 53, an si2 unit 3054, a halftone engine 55, and the si3 unit 57. The functions and the configurations of the rendering engine 551, the si1 unit 52, the TRC 53, the halftone engine 55, and the si3 unit 57 are the same as those included in the DFE 50 in the first embodiment.

The si2 unit 3054 according to the fifth embodiment transmits the eight-bit image data of a gloss control plane and the eight-bit image data of CMYK color planes applied with the gamma correction by the TRC 53, and a clear toner plane generating request to the server apparatus 3060, and receives the image data of the clear toner plane and ON/OFF information from the server apparatus 3060.

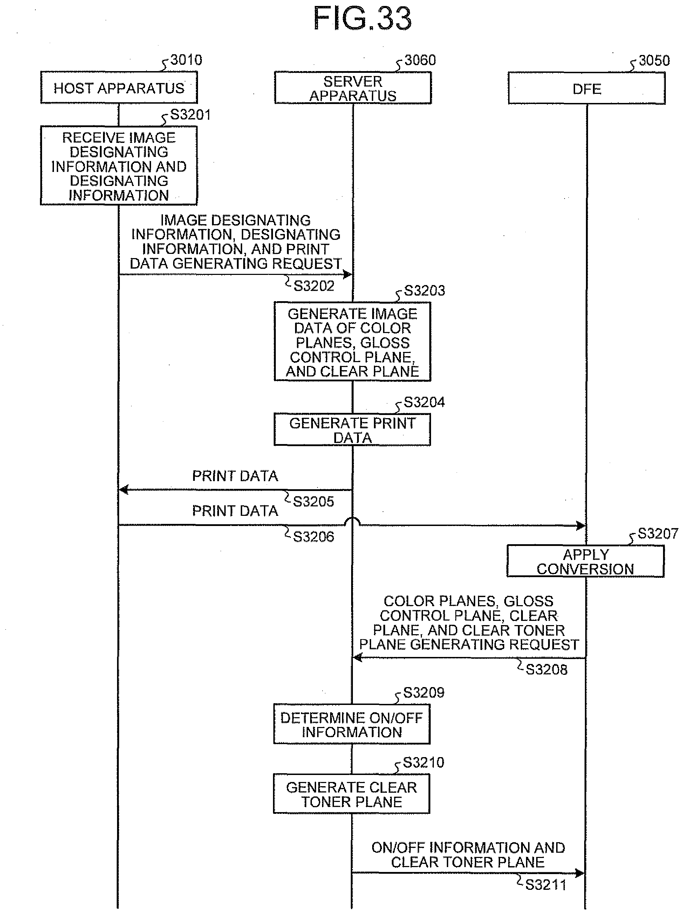

Explained now is a process of generating a clear toner plane required in a printing process performed in the image forming system according to the fifth embodiment having the configuration described above. To begin with, the process of generating a clear toner plane will be entirely explained. Fig. 33 is a sequence chart illustrating the entire clear toner plane generating process according to the fifth embodiment.

To begin with, the host apparatus 3010 receives the image designating information and the designating information from a user (Step S3201), and transmits a print data generating request, as well as the image designating information and the designating information, to the server apparatus 3060 (Step S3202).

The server apparatus 3060 receives the print data generating request as well as the image designating information and the designating information, and generates the image data of a color plane, the image data of a gloss control plane, the image data of a clear plane (Step S3203). The server apparatus 3060 then generates print data from these pieces of image data (Step S3204), and transmits the print data thus generated to the host apparatus 301 (Step S3205).

When the print data is received, the host apparatus 3010 transmits the print data to the DFE 3050 (Step S3206).

When the print data is received from the host apparatus 3010, the DFE 3050 analyzes the print data, obtains the image data of a color plane, the image data of a gloss control plane, and the image data of a clear plane, and applies a conversion and a correction to the image data (Step S3207). The DFE 3050 then transmits a clear toner plane generating request, as well as the image data of a color plane, the image data of a gloss control plane, the image data of a clear plane, to the server apparatus 3060 (Step S3208).

When the image data of a color plane, the image data of a gloss control plane, the image data of a clear plane, and the clear toner plane generating request are received, the server apparatus 3060 determines the ON/OFF information (Step S3209), and generates the image data of a clear toner plane (Step S3210). The server apparatus 3060 then transmits the image data of a clear toner plane thus generated to the DFE 3050 (Step S3211).

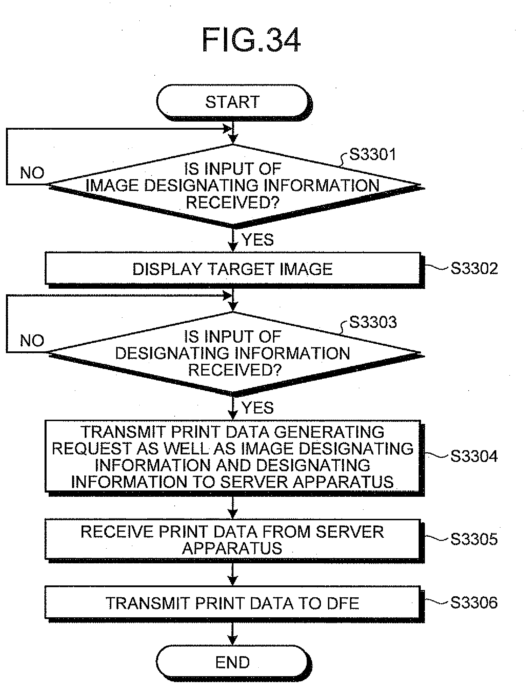

Each of the processes achieved by cooperation between the host apparatus 3010, the server apparatus, and the DFE 3050 in the entire process will now be explained in detail. To begin with, the process of generating the gloss control plane and the print data performed by the host apparatus 3010 and the server apparatus 3060 will be explained. Fig. 34 is a flowchart illustrating the process performed by the host apparatus 3010 according to the fifth embodiment.

To begin with, if the input control unit 123 receives image designating information (Yes at Step S3301), the display control unit 121 controls the display unit 14 to display the image designated in the image designating information thus received (Step S3302). If the input control unit 123 then receives an input of designating information for a surface effect or a transparent image (Yes at Step S3303), the I/F unit 3011 transmits a print data generating request, as well as the image designating information and designating information thus received, to the server apparatus 3060 (Step S3304).

When the print data is generated by the server apparatus 3060, the I/F unit 3011 receives the data (Step S3305). The I/F unit 3011 then transmits the print data to the DFE 3050 (Step S3306).

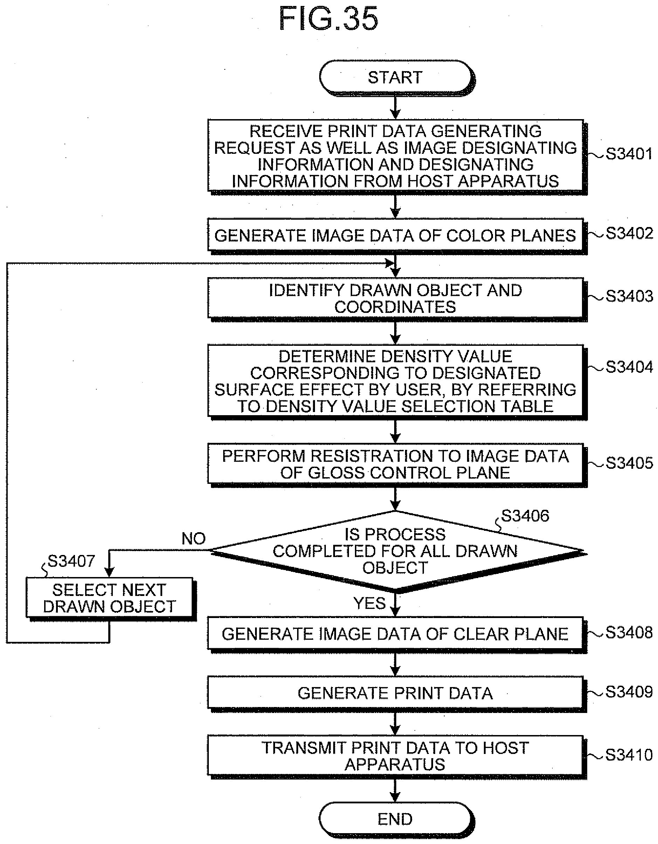

Fig. 35 is a flowchart illustrating a process of generating the image data of a gloss control plane and generating the print data performed by the server apparatus 3060 according to the fifth embodiment. When the communicating unit 3065 receives the print data generating request, as well as the image designating information and the designating information, from the host apparatus 3010 (Step S3401), the plane data generating unit 3062 generates the image data of color planes based on the image designating information (Step S3402).

The plane data generating unit 3062 then identifies a drawn object for which a surface effect is designated in the target image via the designating information, using a drawing command provided by the operating system or the like and the coordinate values or the like specified in the drawing command. The plane data generating unit 3062 also identifies the coordinates of the drawn object (Step S3403).

The plane data generating unit 3062 then determines the density value which is a gloss control value corresponding to the surface effect designated by the user in the designating information, by referring to the density value selection table 3069 stored in the storage unit 3070 (Step S3404).

The plane data generating unit 3062 then registers the drawn object and the density value, which is determined correspondingly to the drawn object, to the image data of a gloss control plane (which is initially null data) in an associated manner (Step S3405).

The plane data generating unit 3062 then determines if the process at Step S3402 to Step S3404 is completed for all of the drawn objects included in the target image (Step S3406). If the process is not completed yet (No at Step S3406), the plane data generating unit 3062 selects the next drawn object from the objects having not been processed yet in the target image (Step S3407), and repeats the process at Step S3403 to Step S3405.

At Step 3406, if the plane data generating unit 3062 determines that the process at Step S3403 to Step S3405 is completed for all of the drawn objects included in the target image (Yes at Step S3406), the plane data generating unit 3062 ends generation of the image data of a gloss control plane, and the image data of a gloss control plane illustrated in Figs. 8 and 13 is obtained.

The plane data generating unit 3062 then generates the image data of a clear plane, based on the designation of a transparent image in the designating information (Step S3408).

The print data generating unit 3063 generates document data in which the image data of a color plane, the image data of a gloss control plane, and the image data of a clear plane are integrated, and appends a job command to the document data thus integrated to generate the print data in the PDF format illustrated in Fig. 10 (Step S3409). The communicating unit 3065 then transmits the print data thus generated to the host apparatus 3010 (Step S3410).

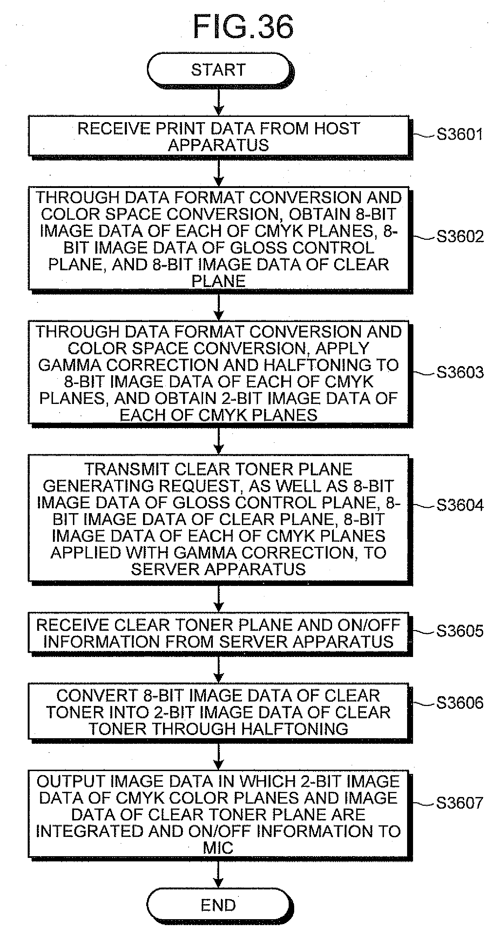

The process of generating the image data of a clear toner plane performed by the DFE 3050 and the server apparatus 3060 will now be explained. Fig. 36 is a flowchart illustrating the process performed by the DFE 3050.

When the DFE 50 receives the print data from the host apparatus 10 (Step S3601), the rendering engine 51 parses the image data thus received, and converts the image data of a gloss control plane in a vector format into image data in a raster format, and converts the color space represented in the RGB format into the color space represented in the CMYK format. The rendering engine 51 then acquires eight-bit image data of each of the CMYK color planes, eight-bit image data of a gloss control plane, and eight-bit image data of a clear plane (Step S3602).

The process of converting the image data of a gloss control plane performed at Step 3602 is the same as that according to the first embodiment explained with reference to Fig. 18. Through such a conversion process, the image data of a gloss control plane is converted into data in which a surface effect is set to each pixel.

Once the eight-bit image data of the gloss control plane is output, the TRC 53 in the DFE 3050 performs a gamma correction to the eight-bit image data of each of the CMYK color planes, using a gamma curve of 1D_LUT generated through a calibration. The halftone engine 55 then performs a halftoning process to convert the image data applied with the gamma correction into a data format to be output to the printer 70, that is, two-bit image data in each of the CMYK colors, and obtains the two-bit image data in each of the CMYK colors applied with the halftoning process (Step S3603).

The si2 unit 3054 transmits a clear toner plane generating request, as well as the eight-bit image data of a gloss control plane, the eight-bit image data of the CMYK color planes applied with the gamma correction, and the eight-bit image data of a clear plane, to the server apparatus 3060 (Step S3604).

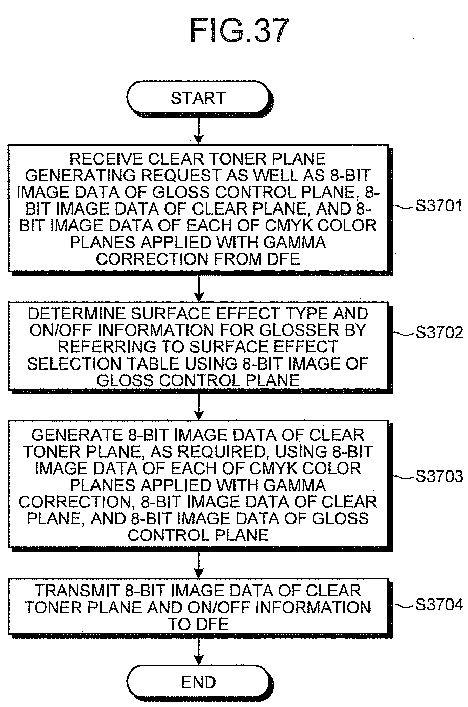

A process of generating a clear toner plane performed by server apparatus 3060 will now be explained. Fig. 37 is a flowchart illustrating the process of generating a clear toner plane performed by the server apparatus 3060.

In the server apparatus 3060, the communicating unit 3065 receives a clear toner plane generating request, as well as the eight-bit image data of a gloss control plane, the eight-bit image data of the CMYK color planes applied with the gamma correction, and the eight-bit image data of a clear plane, from the DFE 3050 (Step S3701).

The clear processing 3066 then determines the surface effect associated with each of the pixel values to the gloss control plane by referring to the surface effect selection table 3068 in the storage unit 3070 using the eight-bit image data of the gloss control plane. The clear processing 3066 makes such a determination for all of the pixels included in the image data of the gloss control plane. In the image data of a gloss control plane, a density value belonging to the same range is basically assigned to all of the pixel included in each area to be provided with a surface effect. Therefore, the clear processing 3066 determines that adjacent pixels determined to have the same surface effect is to be included in the same area to be provided with the surface effect. In this manner, the clear processing 3066 determines the area to be provided with a surface effect, and the type of a surface effect to be provided to such an area. Based on this determination, the clear processing 3066 determines whether the glosser 80 is to be turned ON or OFF (Step S3702).

The clear processing 3066 then generates eight-bit image data of a clear toner plane to cause the clear toner to be attached as required, using the eight-bit image data of each of the CMYK colors, the eight-bit image data of the gloss control plane, and the eight-bit image data of the clear plane as required (Step S3703). In this manner, the eight-bit image data of the clear toner plane and the ON/OFF information are generated on the server apparatus 3060.

The communicating unit 3065 then transmits the eight-bit image data of the clear toner plane and the ON/OFF information generated by the clear processing 3066 to the DFE 3050 (Step S3704).

Referring back to Fig. 36, in the DFE 3050, after transmitting the clear toner plane generating request to the server apparatus 3060, the si2 unit 3054 receives the eight-bit image data of the clear toner plane and the ON/OFF information from the server apparatus 3060 (Step S3605).

The halftone engine 56 then converts the eight-bit image data of the clear toner plane, which uses the eight-bit image data, into two-bit image data of the clear toner plane through the halftoning process (Step S3606).

The si3 unit 57 in the DFE 50 then integrates the two-bit image data of each of the CMYK colors applied with the halftoning process obtained at Step S3603 and the two-bit image data of the clear toner plane generated at Step S3606, and outputs the image data thus integrated and the ON/OFF information indicating to turn ON or OFF the glosser 80 received at Step S3605 to the MIC 60 (Step S3607).

If any image data of a clear toner plane is not generated on the server apparatus 3060, the si3 unit 57 integrates only the two-bit image data of each of the CMYK colors applied with the halftoning process obtained at Step S3603, and outputs the image data thus integrated to the MIC 60 at Step S3607.

The subsequent process which is performed by the MIC 60, the printer 70, the glosser 80, and the low-temperature fixer 90 is performed in the same manner as that according to the first embodiment.

In the manner described above, in the fifth embodiment, because the image data of color planes, the image data of a gloss control plane, the image data of a clear plane, print data, the image data of a clear toner plane are generated on the server apparatus 3060 in the cloud, even in a configuration in which the host apparatus 3010 or the DFE 3050 is provided in plurality, a change or the like in the density value selection table or the surface effect selection table can be implemented all at once, advantageously. This provides a convenience for an administrator, in addition to the advantages achieved in the first embodiment.

In the fifth embodiment, the plane data generating unit 3062, the print data generating unit 3063, and the clear processing 3066 are included in the server apparatus 3060 provided in the cloud in singularity, and the server apparatus 3060 is configured to perform the plane data generating process to generate color plane data, the clear plane data, and the gloss control plane data, the print data generating process, and the clear toner plane data generating process. However, the present invention is not limited thereto.

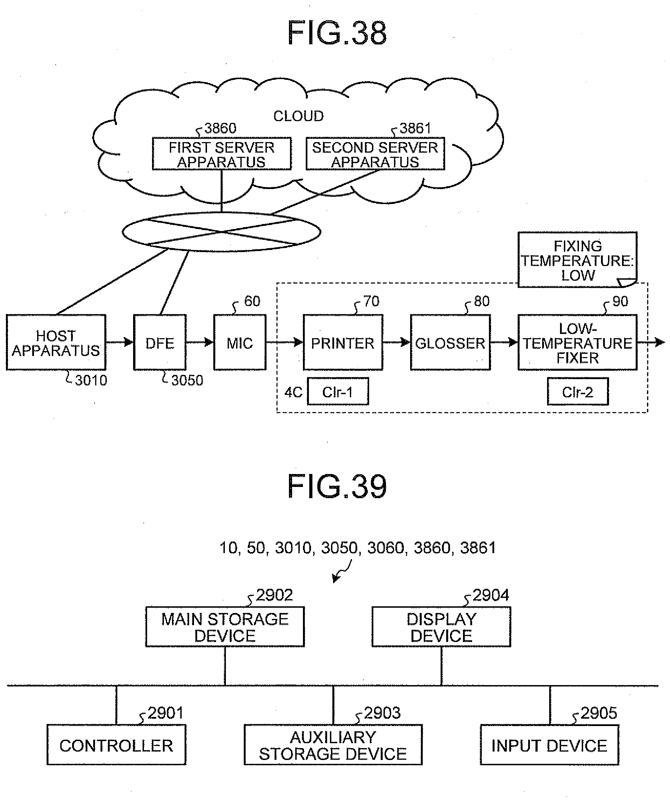

For example, a plurality of server apparatuses may be provided in the cloud, and these processes may be performed in a manner distributed among the server apparatuses. Fig. 38 is a schematic of a configuration of a network in which two servers (a first server apparatus 3860 and a second server apparatus 3861) are provided in the cloud. In the configuration illustrated in Fig. 38, the plane data generating process to generate color plane data, the clear plane data, and the gloss control plane data, the print data generating process, and the clear toner plane data generating process are performed in a manner distributed between the first server apparatus 3860 and the second server apparatus 3861.

For example, the plane data generating unit 3062 and the print data generating unit 3063 may be provided to the first server apparatus 3860, and the first server apparatus 3869 may be configured to perform the plane data generating process and the print data generating process. The clear processing 3066 maybe provided to the second server apparatus 3861, and the second server apparatus 3861 may be configured to perform the clear toner plane data generating process. The distribution of the processes is not limited thereto, and may be implemented in any way.

In other words, as long as the host apparatus 10 is provided with minimum units required, such as the input unit 13, the input control unit 124, the image processing unit 120, the display control unit 121, the display unit 14, and the like, all or some of the plane data generating unit 3062, the print data generating unit 3063, and the clear processing 3066 may be provided centrally to a single server, or distributed among a plurality of server apparatus in any way.

In other words, any of a plurality of processes performed by one single apparatus, e.g., in the example described above, may be performed by one or more apparatuses connected to the one apparatus over a network.

When the processes are performed by "one or more other apparatuses connected to the one apparatus over a network" in the manner mentioned above, such a configuration need to include data input/output processes performed between the one apparatus and the other apparatus(es) and between the other apparatuses, e.g., a process of causing the one apparatus to output data (information) resulting from a process performed by the one apparatus to the other apparatus(es), and a process of causing the other apparatus(es) to receive the data.

In other words, when the other apparatus is provided in singularity, data input/output processes are performed between the one apparatus and the other apparatus. When the other apparatus is provided in plurality, the configuration includes data input/output processes performed between the other apparatuses, e.g., between a first other apparatus and a second other apparatus, as well as the processes performed between the one apparatus and the other apparatuses.

Furthermore, in the fifth embodiment, the server apparatus 3060 or a plurality of server apparatuses such as the first server apparatus 3860 and the second server apparatus 3861 are provided in the cloud. However, the present invention is not limited thereto. For example, the server apparatus 3060 or the server apparatuses such as the first server apparatus 3860 and the second server apparatus 3861 may be provided in any network, e.g., an intranet.

A hardware configurations of the host apparatus 10, 3010, the DFE 50, 3050, the server apparatus 3060, the first server apparatus 3860, or the second server apparatus 3861 according to the embodiments will now be explained. Fig. 39 is a schematic of a hardware configuration of the host apparatus 10, 3010, the DFE 50, 3050, or the server apparatus 3060. The host apparatus 10, 3010, the DFE 50, 3050, the server apparatus 3060, the first server apparatus 3860, or the second server apparatus 3861 mainly includes a controller 2901 such as a CPU controlling the entire apparatus, a main storage device 2902 such as a ROM or a RAM storing therein various types of data and various computer programs, an auxiliary storage device 2903 such as an HDD storing therein various types of data and various computer programs, an input device 2905 such as a keyboard and a mouse, and a display device 2904 such as a display device, as a hardware configuration, and has a hardware configuration using a regular computer.

The image processing program executed by the host apparatus 10, 3010 according to the embodiments (including the image processing application, and the same is applicable hereunder) is provided as a computer program product recorded in a computer-readable recording medium such as a compact disk read-only memory (CD-ROM), a flexible disk (FD), a compact disk recordable (CD-R), or a digital versatile disk (DVD), as a file in an installable or executable format.

Furthermore, the image processing program executed by the host apparatus 10, 3010 according to the embodiments may be stored in a computer connected to a network such as the Internet, and made available for download over the network. Furthermore, the image processing program executed by the host apparatus 10 according to the embodiments may be provided or distributed over a network such as the Internet.

Furthermore, the image processing program executed by the host apparatus 10, 3010 according to the embodiments may be provided in a manner incorporated in a ROM or the like in advance.

The image processing program executed by the host apparatus 10, 3010 according to the embodiments has a modular structure including each of the units described above (the data processing unit, the plane data generating unit, the print data generating unit, the input control unit, display control unit), and, as an actual hardware, by causing the CPU (processor) to read the image processing program from the recording medium and to execute the image processing program, each of the units is loaded onto the main storage device, and the data processing unit, the plane data generating unit, the print data generating unit, the input control unit, and the display control unit are generated on the main storage device.

Furthermore, the print controlling process executed by the DFE 50, 3050 according to the embodiments may be implemented as a printing controlling program that is software, alternatively to the hardware implementation. In such a case, the printing controlling program executed by the DFE 50, 3050 according to the embodiments is provided in a manner incorporated in a ROM or the like in advance.

The printing controlling program executed by the DFE 50, 3050 according to the embodiments may be provided as a computer program product recorded in a computer-readable recording medium such as a CD-ROM, an FD, a CD-R, or a DVD, as a file in an installable or executable format.

Furthermore, the printing controlling program executed by the DFE 50, 3050 according to the embodiments may be stored in a computer connected to a network such as the Internet, and made available for download over the network. The printing controlling program executed by the DFE 50 according to the embodiments may be provided or distributed over a network such as the Internet.

The printing controlling program executed by the DFE 50, 3050 according to the embodiments has a modular structure including each of the units described above (the rendering engine, the halftone engine, the TRC, the si1 unit, the si2 unit, the si3 unit, the clear processing), and as an actual hardware, by causing the CPU (processor) to read the printing controlling program from the ROM and to execute the printing controlling program, each of the units is loaded onto the main storage device, and the rendering engine, the halftone engine, the TRC, the si1 unit, the si2 unit, the si3 unit, and the clear processing are generated on the main storage device.

Furthermore, each of the data generating processes executed by the server apparatus 3060 according to the embodiments may be implemented as a generating program that is software, alternatively to the hardware implementation. In such a case, the generating program executed by the server apparatus 3060 according to the embodiments is provided in a manner incorporated in a ROM or the like in advance.

Each of the data generating process programs executed by the server apparatus 3060 according to the embodiments may be provided as a computer program product recorded in a computer-readable recording medium such as a CD-ROM, an FD, a CD-R, or a DVD, as a file in an installable or executable format.

Each of the data generating process programs executed by the server apparatus 3060 according to the embodiments computer program may be stored in a computer connected to a network such as the Internet, and made available for download over the network. Furthermore, each of the data generating process programs executed by the server apparatus 3060 according to the embodiments may be provided or distributed over a network such as the Internet.

Each of the data generating process programs executed by the server apparatus 3060 has a modular structure including each of the units described above (the plane data generating unit, the print data generating unit, the clear processing), and as an actual hardware, by causing the CPU (processor) to read the generating program from the ROM and to execute the generating program, each of the units is loaded onto the main storage device, and the plane data generating unit, the print data generating unit, the clear processing are generated on the main storage device.

In the embodiments, the image forming system includes the host apparatus 10, 3010, the DFE 50, 3050, the MIC 60, the printer 70, the glosser 80, and the low-temperature fixer 90, but the present invention is not limited thereto. For example, the DFE 50, 3050, the MIC 60, and the printer 70 may be integrated into one image forming apparatus. Alternatively, the image forming apparatus may further include the glosser 80 and the low-temperature fixer 90.

In the image forming system according to the embodiments, an image is formed using a plurality of color toners of CMYK, however, an image may be formed using a toner of one color.

The printer system according to the embodiments includes the MIC 60, but the configuration is not limited thereto. The processes performed by the MIC 60 and the functions of the MIC 60 may be provided to another unit such as the DFE 50, and the MIC 60 may be omitted.

According to the embodiment, a clear toner can be used to achieve a desirable surface effect on a printout on which an image is formed, without forcing a user to make any cumbersome operations, advantageously.

Furthermore, according to the embodiment, a plurality of types of surface effects can be achieved on one page of a recording medium, advantageously.

**Claims**

1. A print controlling system in which image data is generated, the print controlling system comprising:

  a printer (70);
  a mechanism interface controller (60);
  a digital front end (3050) configured to communicate with the printer (70) via the mechanism interface controller (60);
  a host apparatus (3010) and configured to provide a plane data generating unit (3062), a print data generating unit (3063) and a clear toner processing (3066) to the server apparatus (3060), wherein the host apparatus (3010) includes:

    an interface unit (3011) for allowing the server apparatus (3060) to communicate with the digital front end (3050),
    an input unit (13), and

a control unit (3015);

a server apparatus (3060) provided in a cloud and connected to the host apparatus (3010) and the digital front end (3050) over a network, wherein the server apparatus (3060) includes:

a storage unit (3070) storing a density value selection table (3069) and a surface effect selection table (3068);
a plane data generating unit (3063),
the clear toner processing (3066), and
a communicating unit (3065) for transmitting data between the host apparatus (3010) and the digital front end (3050);

a glosser (80) configured to press a paper sheet;
a low-temperature fixer (90) configured to form a transparent toner image on the paper sheet;
wherein the control unit (3015) is configured to receive, from the input unit (13), designation information including a designation of an area of the paper sheet to be provided with a surface effect and the type of the surface effect, and including a designation of a transparent image formed by applying the clear toner to the paper sheet and of the area to be applied with the transparent image;
wherein the interface unit (3011) is configured to transmit a print data generating request and the designation information to the communicating unit (3065) of the server apparatus (3060);
wherein the server apparatus (3060) is configured to generate, in response to the print data generating request received from the interface unit (3011), print data and image data of a gloss control plane based on the designation of the area of the paper sheet to be provided with the surface effect and image data of a clear toner plane based on the designation of the transparent image, and to send the print data and the image data of the gloss control plane and the image data of the clear toner plane via the communicating unit (3065) to the interface unit (3011) of the host apparatus (3010);
wherein the plane data generating unit (3062) of the host apparatus (3010) is configured to generate image data of the gloss control plane to identify the area of the paper sheet to be provided with the surface effect and the type of the surface effect by referring to the density value selection table (3069), based on designations of the area of the paper sheet to be provided with the surface effect and the type of the surface effect included in the designation information;
wherein the print data generating unit (3063) is configured to generate print data based on the image data of the gloss control plane generated by the plane data generating unit (3062);
wherein the clear toner processing (3066) is configured to determine the surface effect corresponding to the density value represented by each pixel included in the gloss control plane by referring to the surface effect selection table (3068) based on the image data of the gloss control plane received from the digital front end (3050) via the communicating unit (3065), and
is further configured to determine, based on the result of determining the surface effect, whether the glosser (80) is to be turned on or off, and
to generate, based on the result of determining the surface effect, the image data of the clear toner plane to be used by the printer (70) and the image data of the clear toner plane to be used by the low-temperature fixer (90), and
to output the image data of the clear toner plane to be used by the printer (70) to the printer (70) and the image data of the clear toner plane to be used by the low-temperature fixer (90) to the low-temperature fixer (90).

2. A method of generating a clear toner plane in the printer controlling system according to the preceding claim, the method comprising:

receiving (S3201), at a host apparatus (3010) including an interface (3011) for allowing a server apparatus (3060), which server apparatus (3060) is provided in a cloud and connected to the host apparatus (3010) and the digital front end (3050) over a network, to communicate with a digital front end (3050) communicatively coupled to a printer (70), designating information including a designation of an area of a paper sheet to be provided with a surface effect and the type of the surface effect, and including a designation of a transparent image formed by applying the clear toner to the paper sheet and of the area to be applied with the transparent image;
transmitting (S3202), from the host apparatus (3010), a print data generating request and the designating information to a server apparatus (3060);
receiving (S3203), at the server apparatus (3060), the print data generating request and the designating information;

generating (3203), at the server apparatus (3060) and in response to receiving the print data generating request and based on the designating information, image data of a color plane, image data of a gloss control plane and image data of a clear toner plane, and generating print data from the image data of a color plane, image data of a gloss control plane and image data of a clear toner plane;

transmitting (S3205) the print data from the server apparatus (3060) to the host apparatus (3010);

receiving the print data at the host apparatus (3010);

transmitting (S3206) the print data from the host apparatus (3010) to a digital front end (3050);

receiving the print data at the digital front end (3050);

converting (S3207), at the digital front end (3050), the print data from a vector format into a raster format and from a an RGB color space into a CMYK color space to obtain the image data of a color plane, the image data of the gloss control plane and the image data of the clear toner plane;

transmitting (S3208), from the digital front end (3050) to the server apparatus (3060), a clear toner plane generating request, the image data of the colour plane, the image data of the gloss plane and the image data of the clear plane;

after receiving, at the server apparatus (3060), the image data of the colour plane, the image data of the gloss plane and the image data of the clear plane, determining (S3209), at the server apparatus (3060), information indicating whether a glosser (80) is to be turned on or off, and generating (S3210), at the server apparatus (3060), the image data of a clear toner plane;

transmitting (S3211), from the server apparatus (3060) to the digital front end (3050), the information indicating a whether glosser (80) is to be turned on or off and the image data of the clear toner plane.

## Patentansprüche

1. Drucksteuersystem, in dem Bilddaten erzeugt werden, wobei das Drucksteuersystem Folgendes umfasst:

einen Drucker (79);
eine Mechanismus-Schnittstellensteuerung (60);
ein digitales Frontend (3050), das konfiguriert ist, über die Mechanismus-Schnittstellensteuerung (60) mit dem Drucker (70) zu kommunizieren;
eine Host-Vorrichtung (3010), die konfiguriert ist, der Server-Vorrichtung (3060) eine Ebenendatenerzeugungseinheit (3062), ein Druckdatenerzeugungseinheit (3063) und eine Klartoner-Verarbeitung (3066) zur Verfügung zu stellen, wobei die Host-Vorrichtung (3010) Folgendes enthält:

eine Schnittstelleneinheit (3011), um der Server-Vorrichtung (3060) zu erlauben, mit dem digitalen Frontend (3050) zu kommunizieren,
eine Eingabeeinheit (13) und
eine Steuereinheit (3015);

eine Server-Vorrichtung (3060), die in einer Cloud vorgesehen ist und über ein Netz mit der Host-Vorrichtung (3010) und dem digitalen Frontend (3050) verbunden ist, wobei die Server-Vorrichtung (3060) Folgendes enthält:

eine Speichereinheit (3070), die eine Dichtewert-Auswahltabelle (3069) und eine Oberflächeneffekt-Auswahltabelle (3068) speichert;
eine Ebenendatenerzeugungseinheit (3063),
die Klartoner-Verarbeitung (3066), und
eine Kommunikationseinheit (3065) zum Übertragen von Daten zwischen der Host-Vorrichtung (3010) und dem digitalen Frontend (3050);

eine Glanzeinrichtung (80), die konfiguriert ist, einen Papierbogen zu pressen;
einen Niedertemperaturfixierer (90), der konfiguriert ist, ein durchsichtiges Tonerbild auf dem Papierbogen zu erzeugen;
wobei die Steuereinheit (3015) konfiguriert ist, von der Eingabeeinheit (13) Kennzeichnungsinformationen zu empfangen, die eine Kennzeichnung einer Fläche des Papierbogens, die mit einem Oberflächeneffekt versehen werden soll, und die Art des Oberflächeneffekts enthalten, und die eine Kennzeichnung eines durchsichtigen Bildes, das durch Auftragen des Klartoners auf den Papierbogen gebildet wird, und der Fläche, auf die das durchsichtige Bild aufgetragen werden soll, enthalten;
wobei die Schnittstelleneinheit (3011) konfiguriert ist, eine Druckdatenerzeugungsanforderung und die Kennzeichnungsinformationen zu der Kommunikationseinheit (3065) der Server-Vorrichtung (3060) zu übertragen; wobei die Server-Vorrichtung (3060) konfiguriert ist, als Reaktion auf die von der Schnittstelleneinheit (3011) empfangenen Druckdatenerzeugungsanforderung, basierend auf der Kennzeichnung der Fläche des Papierbogens, die mit dem Oberflächeneffekt versehen werden soll, Druckdaten und Bilddaten einer Glanzsteuerebene und basierend auf der Kennzeichnung des durchsichtigen Bildes Bilddaten einer Klartonerebene zu erzeugen, und die Druckdaten und die Bilddaten der Glanzsteuerebene und die Bilddaten der Klartonerebene über die Kommunikationseinheit (3065) zu der Schnittstelleneinheit (3011) der Host-Vorrichtung (3010) zu senden; wobei die Ebenendatenerzeugungseinheit (3062) der Host-Vorrichtung (3010) konfiguriert ist, basierend auf Kennzeichnungen der Fläche des Papierbogens, die mit dem Oberflächeneffekt versehen werden soll, und der Art des Oberflächeneffekts, die in den Kennzeichnungsinformationen enthalten sind, Bilddaten der Glanzsteuerebene zu erzeugen, um die Fläche des Papierbogens, die mit dem Oberflächeneffekt versehen werden soll, und die Art des Oberflächeneffekts zu identifizieren, indem sie sich auf die Dichtewertauswahltabelle (3069) bezieht,

wobei die Druckdatenerzeugungseinheit (3063) konfiguriert ist, basierend auf den Bilddaten der Glanzsteuerebene, die von der Ebenendatenerzeugungseinheit (3062) erzeugt worden sind, Druckdaten zu erzeugen; wobei die Klartoner-Verarbeitung (3066) konfiguriert ist, basierend auf den Bilddaten der Glanzsteuerebene, die von dem digitalen Frontend (3050) über die Kommunikationseinheit (3065) empfangen worden sind, den Oberflächeneffekt gemäß dem Dichtewert, der von jedem Pixel, das in der Glanzsteuerebene enthalten ist, dargestellt wird, zu bestimmen, indem sie sich auf die Oberflächeneffektauswahltabelle (3068) bezieht, und ferner konfiguriert ist, basierend auf dem Ergebnis des Bestimmens des Oberflächeneffekts, zu bestimmen, ob die Glanzeinrichtung (80) ein- oder ausgeschaltet werden soll, und

basierend auf dem Ergebnis des Bestimmens des Oberflächeneffekts, die Bilddaten der Klartonerebene, die von dem Drucker (70) verwendet werden sollen, und die Bilddaten der Klartonerebene, die von dem Niedertemperaturfixierer (90) verwendet werden sollen, zu erzeugen, und

die Bilddaten der Klartonerebene, die von dem Drucker (70) verwendet werden sollen, an den Drucker (70) und die Bilddaten der Klartonerebene, die von dem Niedertemperaturfixierer (90) verwendet werden sollen, an den Niedertemperaturfixierer (90) auszugeben.

2. Verfahren zum Erzeugen einer Klartonerebene in dem Drucksteuersystem nach dem vorhergehenden Anspruch, wobei das Verfahren Folgendes umfasst:

Empfangen (S3201) von Kennzeichnungsinformationen, die eine Kennzeichnung einer Fläche eines Papierbogens, die mit einem Oberflächeneffekt versehen werden soll, und die Art des Oberflächeneffekts enthalten, und die eine Kennzeichnung eines durchsichtigen Bildes, das durch Auftragen eines Klartoners auf den Papierbogen gebildet wird, und der Fläche, auf die das durchsichtige Bild aufgetragen werden soll, enthalten, an einer Host-Vorrichtung (3010), die eine Schnittstelle (3011) enthält, um einer Server-Vorrichtung (3060) zu erlauben, mit einem digitalen Frontend (3050), das kommunikationstechnisch mit einem Drucker (70) gekoppelt ist, zu kommunizieren, wobei die Server-Vorrichtung (3060) in einer Cloud vorgesehen ist und über ein Netz mit der Host-Vorrichtung (3010) und dem digitalen Frontend (3050) verbunden ist;

Übertragen (S3202) einer Druckdatenerzeugungsanforderung und der Kennzeichnungsinformationen von der Host-Vorrichtung (3010) zu einer Server-Vorrichtung (3060);

Empfangen (S3203) der Druckdatenerzeugungsanforderung und der Kennzeichnungsinformationen an der Server-Vorrichtung (3060);

Erzeugen (S3203) von Bilddaten einer Farbebene, Bilddaten einer Glanzsteuerebene und Bilddaten einer Klartonerebene an der Server-Vorrichtung (3060) als Reaktion auf das Empfangen der Druckdatenerzeugungsanforderung und basierend auf den Kennzeichnungsinformationen, und Erzeugen von Druckdaten aus den Bilddaten einer Farbebene, Bilddaten einer Glanzsteuerebne und Bilddaten einer Klartonerebene;

Übertragen (S3205) der Druckdaten von der Server-Vorrichtung (3060) zu der Host-Vorrichtung (3010);

Empfangen der Druckdaten an der Host-Vorrichtung (3010);

Übertragen (S3206) der Druckdaten von der Host-Vorrichtung (3010) zu einem digitalen Frontend (3050);

Empfangen der Druckdaten an dem digitalen Frontend (3050);

Umwandeln (S3207) der Druckdaten von einem Vektorformat in ein Rasterformat und von einem RGB-Farbraum in einen CMYK-Farbraum, um die Bilddaten einer Farbebene, die Bilddaten der Glanzsteuerebene und die Bilddaten der Klartonerebene zu erhalten, an dem digitalen Frontend (3050);

Übertragen (S3208) einer Klartonerebene-Erzeugungsanforderung, der Bilddaten der Farbebene, der Bilddaten der Glanzebene und der Bilddaten der Klartonerebene von dem digitalen Frontend (3050) zu der Server-Vorrichtung (3060);

nach dem Empfangen der Bilddaten der Farbebene, der Bilddaten der Glanzebene und der Bilddaten der Klartonerebene an der Server-Vorrichtung (3060), Bestimmen (S3209) von Informationen, die anzeigen, ob eine Glanzeinrichtung (80) ein- oder ausgeschaltet werden soll, an der Server-Vorrichtung (3060), und Erzeugen (S3210) der Bilddaten einer Klartonerebene an der Server-Vorrichtung (3060);
Übertragen (S3211) der Informationen, die anzeigen, ob eine Glanzeinrichtung (80) ein- oder ausgeschaltet werden soll und der Bilddaten der Klartonerebene von der Server-Vorrichtung (3060) zu dem digitalen Frontend (3050).

**Revendications**

1. Système de commande d'impression dans lequel sont générées des données d'image, le système de commande d'impression comprenant :

   une imprimante (70) ;
   une commande d'interface de mécanisme (60) ;
   un frontal numérique(3050) configuré pour communiquer avec l'imprimante (70) via la commande d'interface de mécanisme (60) ;
   un appareil hôte (3010) configuré de manière à mettre à disposition de l'appareil serveur (3060) une unité de génération de données de plan (3062), une unité de génération de données d'impression (3063) et un traitement de toner clair (3066), où l'appareil hôte (3010) comporte :

   une unité d'interface (3011) pour permettre à l'appareil serveur (3060) de communiquer avec le frontal numérique (3050),
   une unité d'entrée (13), et
   une unité de commande (3015) ;

   un appareil serveur (3060) mis à disposition dans un cloud et connecté à l'appareil hôte (3010) et au frontal numérique (3050) via un réseau, où l'appareil serveur (3060) comporte :

   une unité de stockage (3070) pour stocker une table de sélection de valeur de densité (3069) et une table de sélection d'effet de surface (3068) ;
   une unité de génération de données de plan (3063),
   le traitement de toner clair (3066), et
   une unité de communication (3065) pour la transmission de données entre l'appareil hôte (3010) et le frontal numérique (3050) ;

   une glaceuse (80) configurée pour presser une feuille de papier ;
   un dispositif de fixation à basse température (90) configuré pour former une image de toner transparente sur la feuille de papier ;
   où l'unité de commande (3015) est configurée pour recevoir, en provenance de l'unité d'entrée (13), des informations de désignation comportant une désignation d'une zone de la feuille de papier devant être pourvue d'un effet de surface et le type de l'effet de surface, et comportant une désignation d'une image transparente formée par l'application de toner clair sur la feuille de papier et de la zone sur laquelle doit être appliquée l'image transparente ;
   où l'unité d'interface (3011) est configurée pour transmettre une demande de génération de données d'impression et les informations de désignation à l'unité de communication (3065) de l'appareil serveur (3060) ;
   où l'appareil serveur (3060) est configuré pour générer, en réponse à la demande de génération de données d'impression reçue en provenance de l'unité d'interface (3011), des données d'impression et des données d'image d'un plan de contrôle de glaçage en se fondant sur la désignation de la zone de la feuille de papier devant être pourvue de l'effet de surface et des données d'image d'un plan de toner clair en se fondant sur la désignation de l'image transparente, et pour envoyer les données d'impression et les données d'image du plan de contrôle de glaçage et les données d'image du plan de toner clair via l'unité de communication (3065) à l'unité d'interface (3011) de l'appareil hôte (3010) ;
   où l'unité de génération de données de plan (3062) de l'appareil hôte (3010) est configurée pour générer des données d'image du plan de contrôle de glaçage pour identifier la zone de la feuille de papier devant être pourvue de l'effet de surface et le type de l'effet de surface en se référant à la table de sélection de valeur de densité (3069), en se fondant sur les désignations de la zone de la feuille de papier devant être pourvue de l'effet de surface et du type de l'effet de surface inclus dans les informations de désignation ;

où l'unité de génération de données d'impression (3063) est configurée pour générer des données d'impression en se fondant sur les données d'image du plan de contrôle de glaçage générées par l'unité de génération de données de plan (3062) ;

où le traitement de toner clair (3066) est configuré pour déterminer l'effet de surface correspondant à la valeur de densité représentée par chaque pixel inclut dans le plan de contrôle de glaçage en se référant à la table de sélection d'effet de surface (3068) en se fondant sur les données d'image du plan de contrôle de glaçage reçues en provenance du frontal numérique (3050) via l'unité de communication (3065), et

est en outre configuré pour déterminer si la glaceuse doit être allumée ou éteinte en se fondant sur le résultat de la détermination de l'effet de surface, et

pour générer, en se fondant sur le résultat de la détermination de l'effet de surface, les données d'image du plan de toner clair devant être utilisé par l'imprimante (70) et les données d'image du plan de toner clair devant être utilisé par le dispositif de fixation à basse température (90), et

pour émettre en sortie, à destination de l'imprimante (70), les données d'image du plan de toner clair devant être utilisées par l'imprimante (70), et à destination du dispositif de fixation à basse température (90), les données d'image du plan de toner clair devant être utilisées par le dispositif de fixation à basse température (90).

2. Procédé pour générer un plan de toner clair dans le système de commande d'imprimante selon la revendication précédente, le procédé comprenant les étapes consistant à :

recevoir (S3201), au niveau d'un appareil hôte (3010) comportant une interface (3011) pour permettre à un appareil serveur (3060), disposé dans un cloud et connecté à l'appareil hôte (3010) et au frontal numérique (3050) via un réseau, de communiquer avec le frontal numérique (3050) couplé de manière communicative avec une imprimante (70), des informations de désignation comportant une désignation d'une zone d'une feuille de papier devant être pourvue d'un effet de surface et le type de l'effet de surface, et comportant une désignation d'une image transparente formée par l'application de toner clair sur la feuille de papier et de la zone sur laquelle doit être appliquée l'image transparente ;

transmettre (S3202), à partir de l'appareil hôte (3010), une demande de génération de données d'impression et les informations de désignation à un appareil serveur (3060) ;

recevoir (S3203), au niveau de l'appareil serveur (3060), la demande de génération de données d'impression et les informations de désignation ;

générer (S3203), au niveau de l'appareil serveur (3060) et en réponse à la demande de génération de données d'impression et en se fondant sur les informations de désignation, des données d'image d'un plan de couleur, des données d'image d'un plan de contrôle de glaçage et des données d'image d'un plan de toner clair, et générer des données d'impression à partir des données d'image d'un plan de couleur, des données d'image d'un plan de contrôle de glaçage et des données d'image d'un plan de toner clair ;

transmettre (S3205) les données d'impression de l'appareil serveur (3060) à l'appareil hôte (3010) ;

recevoir les données d'impression au niveau de l'appareil hôte (3010) ;

transmettre (S3206) les données d'impression de l'appareil hôte (3010) à un frontal numérique (3050) ;

recevoir les données d'impression au niveau du frontal numérique (3050) ;

convertir (S3207), au niveau du frontal numérique (3050), les données d'image d'un format vectoriel en un format matriciel et d'un espace de couleur RGB en un espace de couleur CMJN pour obtenir les données d'image d'un plan de couleur, les données d'image du plan de contrôle de glaçage et les données d'image du plan de toner clair ;

transmettre (S3208), du frontal numérique (3050) à l'appareil serveur (3060), une demande de génération de plan de toner clair, les données d'image du plan de couleur, les données d'image du plan de glaçage et les données d'image du plan clair ;

après réception, au niveau de l'appareil serveur (3060), des données d'image du plan de couleur, des données d'image du plan de glaçage et les données d'image du plan clair, déterminer (S3209), au niveau de l'appareil serveur (3060), des informations indiquant si une glaceuse (80) doit être allumée ou éteinte, et générer (S3210), au niveau de l'appareil serveur (3060), les données d'image d'un plan de toner clair ;

transmettre (S3211), de l'appareil serveur (3060) au frontal numérique (3050), les informations indiquant si une glaceuse doit être allumée ou éteinte et les données d'image du plan de toner clair.

# FIG.1

# FIG.2

IMAGE DATA OF COLOR PLANE

# FIG.3

| NAME OF GLOSS CONTROL | GLOSS | DEVIATION |
|---|---|---|
| PREMIUM GLOSS (PG) | Gs≥80 | ΔGs≤10 |
| GLOSS (G) | Gs=Gs (GLOSS) | ΔGs≤10 |
| MATT (M) | Gs=Gs (1C30% HALFTONE) | ΔGs≤10 |
| PREMIUM MATT (PM) | Gs≤10 | ΔGs≤10 |

# FIG.4

IMAGE DATA OF GLOSS CONTROL PLANE

: AREA DESIGNATED WITH PG (DENSITY VALUE OF 98%)

: AREA DESIGNATED WITH G (DENSITY VALUE OF 90%)

: AREA DESIGNATED WITH M (DENSITY VALUE OF 16%)

# FIG.5

IMAGE DATA OF CLEAR PLANE

# FIG.6

# FIG.7

# FIG.8

STAINED GLASS (100%)

ABC

▷ 📁 ARTISTIC
▷ 📁 SKETCH
▽ 📁 CLEAR PATTERN

INVERSE MASK
STAINED GLASS
PARALLEL LINE PATTERN
MESH PATTERN
MOSAIC STYLE
HALFTONE

▷ 📁 BRUSH STROKE
▷ 📁 EXPRESSION TECHNIQUES
▷ 📁 DEFORMATION

− + 100% ▼ ◀ ▶ ▼

OK
INITIALIZE

STAINED GLASS ▼

HAPTIC FEELING 10
SMOOTH ▯ ROUGH

CELL SIZE (C) 10
BORDER THICKNESS (C) 4
LUMINANCE (L) 3

👁 STAINED GLASS

EP 2 654 284 B1

# FIG.9

| SURFACE EFFECT TYPE DESIGNATED BY USER | DENSITY VALUE IN GLOSS CONTROL PLANE (%) |
|---|---|
| PG | 98% |
| G | 90% |
| M | 16% |
| PM | 6% |

# FIG.10

```
<JDF ··· >
  :
  <LayoutPreparationParams Sides="OneSidedFront" />
  <StitchingParams NumberOfStitches="1" StitchType="Corner"/>
  :
</JDF>
```

+

PDF

IMAGE DATA OF TARGET IMAGE

IMAGE DATA OF GLOSS CONTROL PLANE

IMAGE DATA OF CLEAR PLANE

# FIG.11

```
                    ┌─────────────┐
                    │    START    │
                    └─────────────┘
                           │
           ┌───────────────┤
           │               ▼
           │         ╱╲              ┌ S11
         NO│       ╱    ╲
           │     ╱ IS INPUT OF ╲
           └────  IMAGE DESIGNATING INFORMATION
                 ╲   RECEIVED?  ╱
                   ╲          ╱
                     ╲      ╱
                       ╲  ╱
                        │ YES
                        ▼
           ┌───────────────────────────────┐
           │      DISPLAY TARGET IMAGE      │ ─── S12
           └───────────────────────────────┘
                           │
           ┌───────────────┤
           │               ▼
           │         ╱╲              ┌ S13
         NO│       ╱    ╲
           │     ╱ IS INPUT OF ╲
           └────  DESIGNATING INFORMATION
                 ╲   RECEIVED?  ╱
                   ╲          ╱
                     ╲      ╱
                       ╲  ╱
                        │ YES
                        ▼
           ┌───────────────────────────────┐
           │   GENERATE GLOSS CONTROL PLANE │ ─── S14
           └───────────────────────────────┘
                           │
                           ▼
           ┌───────────────────────────────┐
           │       GENERATE PRINT DATA      │ ─── S15
           └───────────────────────────────┘
                           │
                           ▼
                    ┌─────────────┐
                    │     END     │
                    └─────────────┘
```

# FIG.12

```
        ┌─────────────────────┐
        │   GENERATION OF     │
        │   GLOSS CONTROL     │
        │   PLANE: START      │
        └─────────────────────┘
                   │
                   ▼
        ┌─────────────────────────────────┐
        │ IDENTIFY DRAWN OBJECT AND        │ ~S31
        │ COORDINATES                      │
        └─────────────────────────────────┘
                   │
                   ▼
        ┌─────────────────────────────────┐
        │ DETERMINE DENSITY VALUE          │
        │ CORRESPONDING TO DESIGNATED      │ ~S32
        │ SURFACE EFFECT BY USER, BY       │
        │ REFERRING TO DENSITY VALUE       │
        │ SELECTION TABLE                  │
        └─────────────────────────────────┘
                   │
                   ▼
        ┌─────────────────────────────────┐
        │ REGISTER DRAWN OBJECT AND        │
        │ DENSITY VALUE TO IMAGE DATA OF   │ ~S33
        │ GLOSS CONTROL PLANE              │
        └─────────────────────────────────┘
                   │
                   ▼
                                S34
           ◇ IS PROCESS
    NO   COMPLETED FOR ALL DRAWN
  ◄────     OBJECT? ◇
  │          │
 S35         │ YES
┌──────────┐ ▼
│ SELECT   │ ┌──────────┐
│ NEXT     │ │ RETURN   │
│ DRAWN    │ └──────────┘
│ OBJECT   │
└──────────┘
```

43

# FIG.13

| DRAWN OBJECT | COORDINATES | DENSITY VALUE |
|---|---|---|
| A, B, C | (x1,y1)-(x2,y2) | 98% |
| (RECTANGLE) | (x3,y3)-(x4,y4) | 90% |
| ... | ... | ... |

# FIG.14

# FIG.15

| DEN-SITY (%) | DENSITY | | | EFFECT | GLOSSER ON/OFF (ON/OFF INFOR-MATION) | CLEAR TONER PLANE 1 (PRINTER) | CLEAR TONER PLANE 2 (LOW-TEMPERATURE FIXER) |
|---|---|---|---|---|---|---|---|
| | REPRE-SEN-TATIVE VALUE | RANGE OF VALUE | | | | | |
| 98% | 250 | 248 | 255 | PREMIUM GLOSS TYPE A | ON | INVERSE MASK A | NO DATA |
| 96% | 245 | 243 | 247 | PREMIUM GLOSS TYPE B | ON | INVERSE MASK B | NO DATA |
| 94% | 240 | 238 | 242 | PREMIUM GLOSS TYPE C | ON | INVERSE MASK C | NO DATA |
| 92% | 235 | 233 | 237 | RESERVED | | | |
| 90% | 230 | 228 | 232 | GLOSS TYPE 1 | OFF | INVERSE MASK 1 | NO DATA |
| 88% | 224 | 222 | 227 | GLOSS TYPE 2 | OFF | INVERSE MASK 2 | NO DATA |
| 86% | 219 | 217 | 221 | GLOSS TYPE 3 | OFF | INVERSE MASK 3 | NO DATA |
| 84% | 214 | 212 | 216 | GLOSS TYPE 4 | OFF | INVERSE MASK 4 | NO DATA |
| 82% | 209 | 207 | 211 | RESERVED | | | |
| 46% | 117 | 115 | 119 | RESERVED | | | |
| 44% | 112 | 110 | 114 | WATERMARK CHARACTERS 3 (XXX) | OFF | NO DATA | TILE CHARACTERS 3 |
| 42% | 107 | 105 | 109 | WATERMARK CHARACTERS 2 (COPY PROHIBITED) | | NO DATA | TILE CHARACTERS 2 |
| 40% | 102 | 100 | 104 | WATERMARK CHARACTERS 1 (SAMPLE) | | NO DATA | TILE CHARACTERS 1 |
| 38% | 97 | 95 | 99 | RESERVED | | | |
| 36% | 92 | 90 | 94 | RESERVED | | | |
| 34% | 87 | 85 | 89 | BACKGROUND PATTERN 3 (XXX) | | NO DATA | TILE BACKGROUND PATTERN 3 |
| 32% | 82 | 80 | 84 | BACKGROUND PATTERN 2 (GRID) | | NO DATA | TILE BACKGROUND PATTERN 2 |
| 30% | 76 | 74 | 79 | BACKGROUND PATTERN 1 (WAVE) | | NO DATA | TILE BACKGROUND PATTERN 1 |
| 28% | 71 | 69 | 73 | RESERVED | | | |
| 26% | 66 | 64 | 68 | RESERVED | | | |
| 24% | 61 | 59 | 63 | HAPTIC PATTERN TYPE 3 (COARSE) | | NO DATA | TILE MESH PATTERN 3 |
| 22% | 56 | 54 | 58 | HAPTIC PATTERN TYPE 2 (MEDIUM) | | NO DATA | TILE MESH PATTERN 2 |
| 20% | 51 | 49 | 53 | HAPTIC PATTERN TYPE 1 (FINE) | | NO DATA | TILE MESH PATTERN 1 |
| 18% | 46 | 44 | 48 | RESERVED | | | |
| 16% | 41 | 39 | 43 | MATT TYPE 4 | OFF | HALFTONE 4 | NO DATA |
| 14% | 36 | 34 | 38 | MATT TYPE 3 | OFF | HALFTONE 3 | NO DATA |
| 12% | 31 | 29 | 33 | MATT TYPE 2 | OFF | HALFTONE 2 | NO DATA |
| 10% | 25 | 23 | 28 | MATT TYPE 1 | OFF | HALFTONE 1 | NO DATA |
| 8% | 20 | 18 | 22 | RESERVED | | | |
| 6% | 15 | 13 | 17 | PREMIUM MATT TYPE C | ON&OFF | NO DATA | SOLID |
| 4% | 10 | 8 | 12 | PREMIUM MATT TYPE B | ON&OFF | NO DATA | SOLID |
| 2% | 5 | 1 | 7 | PREMIUM MATT TYPE A | ON&OFF | NO DATA | SOLID |
| 0% | 0 | 0 | 0 | NONE | OFF | NO DATA | NO DATA |

# FIG.16

# FIG.17

```
         ┌─────────────┐
         │    START    │
         └─────────────┘
                │
                ▼
```

| | |
|---|---|
| RECEIVE IMAGE DATA FROM HOST APPARATUS | S1 |

| | |
|---|---|
| THROUGH DATA FORMAT CONVERSION AND COLOR SPACE CONVERSION, OBTAIN 8-BIT IMAGE DATA OF EACH OF CMYK PLANES AND 8-BIT IMAGE DATA OF GLOSS CONTROL PLANE | S2 |

| | |
|---|---|
| THROUGH DATA FORMAT CONVERSION AND COLOR SPACE CONVERSION, APPLY GAMMA CORRECTION AND HALFTONING TO 8-BIT IMAGE DATA OF EACH OF CMYK PLANES, AND OBTAIN 2-BIT IMAGE DATA OF EACH OF CMYK PLANES | S3 |

| | |
|---|---|
| DETERMINE SURFACE EFFECT TYPE AND ON/OFF INFORMATION FOR GLOSSER BY REFERRING TO SURFACE EFFECT SELECTION TABLE, USING IMAGE DATA OF 8-BIT GLOSS CONTROL PLANE | S4 |

| | |
|---|---|
| GENERATE 8-BIT IMAGE DATA OF CLEAR TONER PLANE, AS REQUIRED, USING 8-BIT IMAGE DATA OF EACH OF CMYK COLOR PLANES APPLIED WITH GAMMA CORRECTION | S5 |

| | |
|---|---|
| CONVERT 8-BIT IMAGE DATA OF CLEAR TONER INTO 2-BIT IMAGE DATA OF CLEAR TONER THROUGH HALFTONING | S6 |

| | |
|---|---|
| OUTPUT IMAGE DATA IN WHICH 2-BIT IMAGE DATA OF CMYK COLOR PLANES AND IMAGE DATA OF CLEAR TONER PLANE ARE INTEGRATED AND ON/OFF INFORMATION TO MIC | S7 |

```
         ┌─────────────┐
         │     END     │
         └─────────────┘
```

# FIG.18

```
         ┌──────────────────┐
         │   CONVERSION OF  │
         │  GLOSS CONTROL   │
         │  PLANE: START    │
         └────────┬─────────┘
                  │
         ┌────────▼─────────────┐
         │ ASSIGN DENSITY VALUE TO │ ～S41
         │ EACH PIXEL AT COORDINATES │
         │ CORRESPONDING TO DRAWN │
         │       OBJECT           │
         └────────┬─────────────┘
                  │
                  ▼         S42
              ◇ IS
    NO    PROCESS COMPLETED
  ◄───── FOR ALL DRAWN
              OBJECTS? ◇
                  │ YES         S43
   S44            ▼
┌──────────────┐  ┌──────────────────┐
│ SELECT NEXT  │  │ OUTPUT GLOSS CONTROL │
│ DRAWN OBJECT │  │      PLANE         │
└──────────────┘  └────────┬─────────┘
                           │
                  ┌────────▼─────────┐
                  │     RETURN       │
                  └──────────────────┘
```

# FIG.19

EP 2 654 284 B1

# FIG.20

```
        ⌐10              ⌐50          ⌐60        ⌐70              ⌐80
  ┌──────────┐      ┌──────┐     ┌──────┐    ┌──────────┐    ┌──────────┐
  │   HOST   │ ───▶ │ DFE  │ ──▶ │ MIC  │ ─▶ │ PRINTER  │ ─▶ │ GLOSSER  │ ─▶
  │APPARATUS │      │      │     │      │    │          │    │          │
  └──────────┘      └──────┘     └──────┘    └──────────┘    └──────────┘
                                          4C ┌──────┐
                                             │ Clr-1│
                                             └──────┘
```

# FIG.21

| DEN-SITY (%) | DENSITY | | | EFFECT | GLOSSER ON/OFF (ON/OFF INFORMATION) | CLEAR TONER PLANE 1 (PRINTER) |
|---|---|---|---|---|---|---|
| | REPRE-SEN-TATIVE VALUE | RANGE OF VALUE | | | | |
| 98% | 250 | 248 | 255 | PREMIUM GLOSS TYPE A | ON | INVERSE MASK A |
| 96% | 245 | 243 | 247 | PREMIUM GLOSS TYPE B | ON | INVERSE MASK B |
| 94% | 240 | 238 | 242 | PREMIUM GLOSS TYPE C | ON | INVERSE MASK C |
| 92% | 235 | 233 | 237 | RESERVED | | |
| 90% | 230 | 228 | 232 | GLOSS TYPE 1 | OFF | INVERSE MASK m |
| 88% | 224 | 222 | 227 | GLOSS TYPE 2 | | |
| 86% | 219 | 217 | 221 | GLOSS TYPE 3 | | |
| 84% | 214 | 212 | 216 | GLOSS TYPE 4 | | |
| 44% | 112 | 110 | 114 | WATERMARK CHARACTERS 3 ( ) | | NO DATA |
| 42% | 107 | 105 | 109 | WATERMARK CHARACTERS 2 (COPY PROHIBITED) | | NO DATA |
| 40% | 102 | 100 | 104 | WATERMARK CHARACTERS 1 (SAMPLE) | | NO DATA |
| 38% | 97 | 95 | 99 | RESERVED | | |
| 36% | 92 | 90 | 94 | RESERVED | | |
| 34% | 87 | 85 | 89 | BACKGROUND PATTERN 3 ( ) | | NO DATA |
| 32% | 82 | 80 | 84 | BACKGROUND PATTERN 2 (GRID) | | NO DATA |
| 30% | 76 | 74 | 79 | BACKGROUND PATTERN 1 (WAVE) | | NO DATA |
| 28% | 71 | 69 | 73 | RESERVED | | |
| 26% | 66 | 64 | 68 | RESERVED | | |
| 24% | 61 | 59 | 63 | HAPTIC PATTERN TYPE 3 (COARSE) | | NO DATA |
| 22% | 56 | 54 | 58 | HAPTIC PATTERN TYPE 2 (MEDIUM) | | NO DATA |
| 20% | 51 | 49 | 53 | HAPTIC PATTERN TYPE 1 (FINE) | | NO DATA |
| 18% | 46 | 44 | 48 | RESERVED | | |
| 16% | 41 | 39 | 43 | MATT TYPE 4 | OFF | HALFTONE 4 |
| 14% | 36 | 34 | 38 | MATT TYPE 3 | OFF | HALFTONE 3 |
| 12% | 31 | 29 | 33 | MATT TYPE 2 | OFF | HALFTONE 2 |
| 10% | 25 | 23 | 28 | MATT TYPE 1 | OFF | HALFTONE 1 |
| 8% | 20 | 18 | 22 | RESERVED | | |
| 6% | 15 | 13 | 17 | PREMIUM MATT TYPE C | ON/OFF | NO DATA |
| 4% | 10 | 8 | 12 | PREMIUM MATT TYPE B | ON/OFF | NO DATA |
| 2% | 5 | 1 | 7 | PREMIUM MATT TYPE A | ON/OFF | NO DATA |
| 0% | 0 | 0 | 0 | NONE | OFF | NO DATA |

# FIG.22

| DESIGNATED SURFACE EFFECT | PRINTER | GLOSSER | OBTAINED SURFACE EFFECT | |
|---|---|---|---|---|
| PG | INV | | G | DIFFERENT FROM DESIGNATED SURFACE EFFECT |
| G | INV-m | ON | G | AS DESIGNATED |
| M | halftone-n | | M | AS DESIGNATED |
| PM | NO DATA | OFF | M? | DIFFERENT FROM DESIGNATED SURFACE EFFECT |
| NO CONTROL | NO DATA | | - | |

Clr-1

# FIG.23

HOST APPARATUS — 10 → DFE — 50 → MIC — 60 → PRINTER — 70 →

4C Clr-1

# FIG.24

| DENSITY (%) | DENSITY | | | EFFECT | CLEAR TONER PLANE 1 (PRINTER) |
|---|---|---|---|---|---|
| | REPRE-SENTATIVE VALUE | RANGE OF VALUE | | | |
| 98% | 250 | 248 | 255 | PREMIUM GLOSS TYPE A | INVERSE MASK A |
| 96% | 245 | 243 | 247 | PREMIUM GLOSS TYPE B | INVERSE MASK B |
| 94% | 240 | 238 | 242 | PREMIUM GLOSS TYPE C | INVERSE MASK C |
| 92% | 235 | 233 | 237 | RESERVED | |
| 90% | 230 | 228 | 232 | GLOSS TYPE 1 | INVERSE MASK m |
| 88% | 224 | 222 | 227 | GLOSS TYPE 2 | |
| 86% | 219 | 217 | 221 | GLOSS TYPE 3 | |
| 84% | 214 | 212 | 216 | GLOSS TYPE 4 | |
| 44% | 112 | 110 | 114 | WATERMARK CHARACTERS 3 ( ) | NO DATA |
| 42% | 107 | 105 | 109 | WATERMARK CHARACTERS 2 (COPY PROHIBITED) | NO DATA |
| 40% | 102 | 100 | 104 | WATERMARK CHARACTERS 1 (SAMPLE) | NO DATA |
| 38% | 97 | 95 | 99 | RESERVED | |
| 36% | 92 | 90 | 94 | RESERVED | |
| 34% | 87 | 85 | 89 | BACKGROUND PATTERN 3 ( ) | NO DATA |
| 32% | 82 | 80 | 84 | BACKGROUND PATTERN 2 (GRID) | NO DATA |
| 30% | 76 | 74 | 79 | BACKGROUND PATTERN 1 (WAVE) | NO DATA |
| 28% | 71 | 69 | 73 | RESERVED | |
| 26% | 66 | 64 | 68 | RESERVED | |
| 24% | 61 | 59 | 63 | HAPTIC PATTERN TYPE 3 (COARSE) | NO DATA |
| 22% | 56 | 54 | 58 | HAPTIC PATTERN TYPE 2 (MEDIUM) | NO DATA |
| 20% | 51 | 49 | 53 | HAPTIC PATTERN TYPE 1 (FINE) | NO DATA |
| 18% | 46 | 44 | 48 | RESERVED | |
| 16% | 41 | 39 | 43 | MATT TYPE 4 | HALFTONE 4 |
| 14% | 36 | 34 | 38 | MATT TYPE 3 | HALFTONE 3 |
| 12% | 31 | 29 | 33 | MATT TYPE 2 | HALFTONE 2 |
| 10% | 25 | 23 | 28 | MATT TYPE 1 | HALFTONE 1 |
| 8% | 20 | 18 | 22 | RESERVED | |
| 6% | 15 | 13 | 17 | PREMIUM MATT TYPE C | NO DATA |
| 4% | 10 | 8 | 12 | PREMIUM MATT TYPE B | NO DATA |
| 2% | 5 | 1 | 7 | PREMIUM MATT TYPE A | NO DATA |
| 0% | 0 | 0 | 0 | NONE | NO DATA |

# FIG.25

| DESIGNATED SURFACE EFFECT | PRINTER | OBTAINED SURFACE EFFECT | |
|---|---|---|---|
| PG | INV | G | DIFFERENT FROM DESIGNATED SURFACE EFFECT |
| G | INV-m | G | AS DESIGNATED |
| M | halftone-n | M | AS DESIGNATED |
| PM | NO DATA | M? | DIFFERENT FROM DESIGNATED SURFACE EFFECT |
| NO CONTROL | NO DATA | – | |

Clr-1

# FIG.26

# FIG.27

| DENSITY (%) | DENSITY REPRESENTATIVE VALUE | DENSITY RANGE OF VALUE | | EFFECT | CLEAR TONER PLANE 1 (PRINTER) | CLEAR TONER PLANE 2 (STANDARD FIXER) | CLEAR TONER PLANE 3 (LOW-TEMPERATURE FIXER) |
|---|---|---|---|---|---|---|---|
| 98% | 250 | 248 | 255 | PREMIUM GLOSS TYPE A | INVERSE MASK A | NO DATA | NO DATA |
| 96% | 245 | 243 | 247 | PREMIUM GLOSS TYPE B | INVERSE MASK B | NO DATA | NO DATA |
| 94% | 240 | 238 | 242 | PREMIUM GLOSS TYPE C | INVERSE MASK C | NO DATA | NO DATA |
| 92% | 235 | 233 | 237 | RESERVED | | | |
| 90% | 230 | 228 | 232 | GLOSS TYPE 1 | NO DATA | SOLID | NO DATA |
| 88% | 224 | 222 | 227 | GLOSS TYPE 2 | | | |
| 86% | 219 | 217 | 221 | GLOSS TYPE 3 | | | |
| 84% | 214 | 212 | 216 | GLOSS TYPE 4 | | | |
| 44% | 112 | 110 | 114 | WATERMARK CHARACTERS 3 ( ) | NO DATA | TILE CHARACTERS 3 | NO DATA |
| 42% | 107 | 105 | 109 | WATERMARK CHARACTERS 2 (COPY PROHIBITED) | NO DATA | TILE CHARACTERS 2 | NO DATA |
| 40% | 102 | 100 | 104 | WATERMARK CHARACTERS 1 (SAMPLE) | NO DATA | TILE CHARACTERS 1 | NO DATA |
| 38% | 97 | 95 | 99 | RESERVED | | | |
| 36% | 92 | 90 | 94 | RESERVED | | | |
| 34% | 87 | 85 | 89 | BACKGROUND PATTERN 3 ( ) | NO DATA | TILE BACKGROUND PATTERN 3 | NO DATA |
| 32% | 82 | 80 | 84 | BACKGROUND PATTERN 2 (GRID) | NO DATA | TILE BACKGROUND PATTERN 2 | NO DATA |
| 30% | 76 | 74 | 79 | BACKGROUND PATTERN 1 (WAVE) | NO DATA | TILE BACKGROUND PATTERN 1 | NO DATA |
| 28% | 71 | 69 | 73 | RESERVED | | | |
| 26% | 66 | 64 | 68 | RESERVED | | | |
| 24% | 61 | 59 | 63 | CHAPTIC PATTERN TYPE 3 (COARSE) | NO DATA | TILE MESH PATTERN 3 | NO DATA |
| 22% | 56 | 54 | 58 | CHAPTIC PATTERN TYPE 2 (MEDIUM) | NO DATA | TILE MESH PATTERN 2 | NO DATA |
| 20% | 51 | 49 | 53 | CHAPTIC PATTERN TYPE 1 (FINE) | NO DATA | TILE MESH PATTERN 1 | NO DATA |
| 18% | 46 | 44 | 48 | RESERVED | | | |
| 16% | 41 | 39 | 43 | MATT TYPE 4 | NO DATA | HALFTONE 4 | NO DATA |
| 14% | 36 | 34 | 38 | MATT TYPE 3 | NO DATA | HALFTONE 3 | NO DATA |
| 12% | 31 | 29 | 33 | MATT TYPE 2 | NO DATA | HALFTONE 2 | NO DATA |
| 10% | 25 | 23 | 28 | MATT TYPE 1 | NO DATA | HALFTONE 1 | NO DATA |
| 8% | 20 | 18 | 22 | RESERVED | | | |
| 6% | 15 | 13 | 17 | PREMIUM MATT TYPE C | NO DATA | SOLID | SOLID C |
| 4% | 10 | 8 | 12 | PREMIUM MATT TYPE B | NO DATA | SOLID | SOLID B |
| 2% | 5 | 1 | 7 | PREMIUM MATT TYPE A | NO DATA | SOLID | SOLID A |
| 0% | 0 | 0 | 0 | NONE | NO DATA | SAME IMAGE AS CMKA | NO DATA |

# FIG.28

EP 2 654 284 B1

| DESIGNATED SURFACE EFFECT | PRINTER | GLOSSER | STANDARD FIXER | LOW-TEMPERATURE FIXER | OBTAINED SURFACE EFFECT |
|---|---|---|---|---|---|
| PG | INV | | NO DATA | NO DATA | PG |
| G | INV-m | ON | SOLID | NO DATA | G |
| M | NO DATA | | halftone-n | NO DATA | M |
| PM | NO DATA | OFF | NO DATA | SOLID | PM |
| NO CONTROL | NO DATA | | ※ | NO DATA | - |

| | Clr-1 | | Clr-2 | Clr-3 | |
|---|---|---|---|---|---|

# FIG.29

CLOUD 3060
SERVER APPARATUS

FIXING TEMPERATURE: LOW

HOST APPARATUS 3010 → DFE 3050 → MIC 60 → PRINTER 70 → GLOSSER 80 → LOW-TEMPERATURE FIXER 90 →

4C | Clr-1

Clr-2

# FIG.30

3010

DISPLAY UNIT 14

3015

INPUT CONTROL UNIT 124

INPUT UNIT 13 →

IMAGE PROCESSING UNIT 120

→ I/F UNIT 3011 →

DISPLAY CONTROL UNIT 121

STORAGE UNIT 12

# FIG.31

SERVER APPARATUS ⌐3060

STORAGE UNIT ⌐3070

DENSITY VALUE SELECTION TABLE ⌐3069

SURFACE EFFECT SELECTION TABLE ⌐3068

PLANE DATA GENERATING UNIT ⌐3062

PRINT DATA GENERATING UNIT ⌐3063

CLEAR PROCESSING ⌐3066

COMMUNICATING UNIT ⌐3065

# FIG.32

8 bit × 5 plane

8 bit × 4 plane

2 bit × 4 plane

DFE ⌐3050

RENDERING ENGINE ⌐51

si1 UNIT ⌐52

TRC ⌐53

si2 UNIT ⌐3054

HALFTONE ENGINE ⌐55

si3 UNIT ⌐57

# FIG.33

┌─────────────────────┐       ┌─────────────────────┐       ┌─────────────────────┐
│ 3010                │       │ 3060                │       │ 3050                │
│   HOST APPARATUS    │       │ SERVER APPARATUS    │       │        DFE          │
└─────────────────────┘       └─────────────────────┘       └─────────────────────┘

┌─────────────────────┐ S3201
│ RECEIVE IMAGE       │
│ DESIGNATING         │
│ INFORMATION AND     │
│ DESIGNATING         │
│ INFORMATION         │
└─────────────────────┘

IMAGE DESIGNATING
INFORMATION, DESIGNATING
INFORMATION, AND PRINT
DATA GENERATING REQUEST
──────────────────────────▶
          S3202          S3203

┌─────────────────────┐
│ GENERATE IMAGE      │
│ DATA OF COLOR       │
│ PLANES, GLOSS       │
│ CONTROL PLANE,      │
│ AND CLEAR PLANE     │
└─────────────────────┘
                         S3204
┌─────────────────────┐
│ GENERATE PRINT      │
│ DATA                │
└─────────────────────┘

        PRINT DATA
◀──────────────────────────
          S3205
        PRINT DATA
──────────────────────────────────────────────────────▶
          S3206
                                                         S3207
                                          ┌─────────────────────┐
                                          │ APPLY               │
                                          │ CONVERSION          │
                                          └─────────────────────┘

                   COLOR PLANES, GLOSS
                   CONTROL PLANE, CLEAR
                   PLANE, AND CLEAR TONER
                   PLANE GENERATING REQUEST
◀──────────────────────────────────────────────────────
                                          S3208
                         S3209
┌─────────────────────┐
│ DETERMINE ON/OFF    │
│ INFORMATION         │
└─────────────────────┘
                         S3210
┌─────────────────────┐
│ GENERATE CLEAR      │
│ TONER PLANE         │
└─────────────────────┘

                   ON/OFF INFORMATION AND
                   CLEAR TONER PLANE
──────────────────────────────────────────────────────▶
                                          S3211

# FIG.34

START

S3301 — IS INPUT OF IMAGE DESIGNATING INFORMATION RECEIVED?

NO

↓ YES

DISPLAY TARGET IMAGE ⟶ S3302

S3303 — IS INPUT OF DESIGNATING INFORMATION RECEIVED?

NO

↓ YES

TRANSMIT PRINT DATA GENERATING REQUEST AS WELL AS IMAGE DESIGNATING INFORMATION AND DESIGNATING INFORMATION TO SERVER APPARATUS ⟶ S3304

RECEIVE PRINT DATA FROM SERVER APPARATUS ⟶ S3305

TRANSMIT PRINT DATA TO DFE ⟶ S3306

END

# FIG.35

```
                    START

RECEIVE PRINT DATA GENERATING
REQUEST AS WELL AS IMAGE DESIGNATING        S3401
INFORMATION AND DESIGNATING
INFORMATION FROM HOST APPARATUS

GENERATE IMAGE DATA OF COLOR PLANES         S3402

IDENTIFY DRAWN OBJECT AND                    S3403
COORDINATES

DETERMINE DENSITY VALUE
CORRESPONDING TO DESIGNATED                  S3404
SURFACE EFFECT BY USER, BY REFERRING
TO DENSITY VALUE SELECTION TABLE

PERFORM RESISTRATION TO IMAGE DATA           S3405
OF GLOSS CONTROL PLANE

                                            S3406
                    IS PROCESS
         NO     COMPLETED FOR ALL DRAWN
                    OBJECT
  S3407
SELECT NEXT              YES
DRAWN OBJECT

GENERATE IMAGE DATA OF CLEAR PLANE          S3408

GENERATE PRINT DATA                          S3409

TRANSMIT PRINT DATA TO HOST                  S3410
APPARATUS

                     END
```

# FIG.36

```
         ┌──────────────┐
         │    START     │
         └──────────────┘
                │
                ▼
```

| RECEIVE PRINT DATA FROM HOST APPARATUS | ～S3601 |

| THROUGH DATA FORMAT CONVERSION AND COLOR SPACE CONVERSION, OBTAIN 8-BIT IMAGE DATA OF EACH OF CMYK PLANES, 8-BIT IMAGE DATA OF GLOSS CONTROL PLANE, AND 8-BIT IMAGE DATA OF CLEAR PLANE | ～S3602 |

| THROUGH DATA FORMAT CONVERSION AND COLOR SPACE CONVERSION, APPLY GAMMA CORRECTION AND HALFTONING TO 8-BIT IMAGE DATA OF EACH OF CMYK PLANES, AND OBTAIN 2-BIT IMAGE DATA OF EACH OF CMYK PLANES | ～S3603 |

| TRANSMIT CLEAR TONER PLANE GENERATING REQUEST, AS WELL AS 8-BIT IMAGE DATA OF GLOSS CONTROL PLANE, 8-BIT IMAGE DATA OF CLEAR PLANE, 8-BIT IMAGE DATA OF EACH OF CMYK PLANES APPLIED WITH GAMMA CORRECTION, TO SERVER APPARATUS | ～S3604 |

| RECEIVE CLEAR TONER PLANE AND ON/OFF INFORMATION FROM SERVER APPARATUS | ～S3605 |

| CONVERT 8-BIT IMAGE DATA OF CLEAR TONER INTO 2-BIT IMAGE DATA OF CLEAR TONER THROUGH HALFTONING | ～S3606 |

| OUTPUT IMAGE DATA IN WHICH 2-BIT IMAGE DATA OF CMYK COLOR PLANES AND IMAGE DATA OF CLEAR TONER PLANE ARE INTEGRATED AND ON/OFF INFORMATION TO MIC | ～S3607 |

```
         ┌──────────────┐
         │     END      │
         └──────────────┘
```

# FIG.37

START

RECEIVE CLEAR TONER PLANE
GENERATING REQUEST AS WELL AS 8-BIT
IMAGE DATA OF GLOSS CONTROL PLANE, 8-
BIT IMAGE DATA OF CLEAR PLANE, AND 8-
BIT IMAGE DATA OF EACH OF CMYK COLOR
PLANES APPLIED WITH GAMMA
CORRECTION FROM DFE ⎯S3701

DETERMINE SURFACE EFFECT TYPE AND
ON/OFF INFORMATION FOR GLOSSER BY
REFERRING TO SURFACE EFFECT
SELECTION TABLE USING 8-BIT IMAGE OF
GLOSS CONTROL PLANE ⎯S3702

GENERATE 8-BIT IMAGE DATA OF CLEAR
TONER PLANE, AS REQUIRED, USING 8-BIT
IMAGE DATA OF EACH OF CMYK COLOR
PLANES APPLIED WITH GAMMA
CORRECTION, 8-BIT IMAGE DATA OF CLEAR
PLANE, AND 8-BIT IMAGE DATA OF GLOSS
CONTROL PLANE ⎯S3703

TRANSMIT 8-BIT IMAGE DATA OF CLEAR
TONER PLANE AND ON/OFF INFORMATION
TO DFE ⎯S3704

END

# FIG.38

# FIG.39

10, 50, 3010, 3050, 3060, 3860, 3861

**EP 2 654 284 B1**

REFERENCES CITED IN THE DESCRIPTION

**Patent documents cited in the description**

- JP 2012095169 A
- JP 3473588 B
- JP 2007003404 A

- EP 2431814 A2
- EP 2431813 A2
- US 20090034998 A1